# EUROPEAN PATENT APPLICATION

(11) **EP 4 730 532 A1**
(43) Date of publication of application: **22.04.2026**
(21) Application number: 23941271.1
(22) Date of filing: 19.10.2023
(51) Int. Cl.: H01M 50/333

(54) **BATTERY CELL, BATTERY, AND ELECTRICAL DEVICE**

(30) Priority: 16.06.2023 CN 202310720812
(71) Applicant: Contemporary Amperex Technology Co., Limited, Ningde, Fujian 352100 (CN)
(72) Inventor: WU, Kai, Ningde, Fujian 352100 (CN); XING, Chengyou, Ningde, Fujian 352100 (CN); CHEN, Xinxiang, Ningde, Fujian 352100 (CN); ZHENG, Yulian, Ningde, Fujian 352100 (CN); LI, Quankun, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2023/125443
(87) International publication number: WO 2024/255047

(57) **Abstract**

This application provides a battery cell, a battery, and an electric apparatus, and pertains to the field of battery technology. The battery cell includes a housing, an electrode assembly, and a one-way valve. The housing has a wall portion, the electrode assembly is accommodated within the housing, the one-way valve is disposed on the wall portion, and the one-way valve is configured to discharge gas from inside the housing. Through provision of the one-way valve on the wall portion of the housing, the one-way valve can open unidirectionally to discharge gas inside the housing to the exterior of the housing, allowing gas generated inside the housing during normal operation of the battery cell to be discharged to the exterior of the housing through the one-way valve. This mitigates a phenomenon that internal pressure of the battery cell reaches a threshold prematurely due to a rise of internal gas pressure of the battery cell, thereby effectively enhancing operational stability of the battery cell and improving service life and reliability of the battery cell.

## Description

### CROSS-REFERENCE TO RELATED APPLICATIONS

This application claims priority to Chinese Patent Application No. 2023107208122, filed on June 16, 2023 and entitled "BATTERY CELL, BATTERY, AND ELECTRIC APPARATUS", which is incorporated herein by reference in its entirety.

### TECHNICAL FIELD

This application relates to the field of battery technology, and specifically, to a battery cell, a battery, and an electric apparatus.

### BACKGROUND

In recent years, new energy vehicles have experienced rapid development. In the field of electric vehicles, power batteries, as the power source of electric vehicles, play an irreplaceable and significant role. With the widespread promotion of new energy vehicles, the demand for power battery products is growing. Batteries, as core components of new energy vehicles, requiring high operational reliability and long service life.

In battery technology, to ensure safety of a battery cell, a pressure relief mechanism for releasing internal pressure of the battery cell is typically provided on the housing of the battery cell. This allows the pressure relief mechanism to actuate and release the internal pressure of the battery cell when the internal pressure or temperature of the battery cell reaches a threshold. However, existing pressure relief mechanisms of battery cells may prematurely actuate to release pressure during use, resulting in poor operational stability of the battery cells, which is not conducive to improving service life and reliability of the battery cells.

### SUMMARY

Embodiments of this application provide a battery cell, a battery, and an electric apparatus, so as to effectively improve service life and reliability of the battery cell.

According to a first aspect, an embodiment of this application provides a battery cell including a housing, an electrode assembly, and a one-way valve; where the housing has a wall portion; the electrode assembly is accommodated within the housing; and the one-way valve is disposed on the wall portion, the one-way valve being configured to discharge gas from inside the housing.

In the above technical solution, through provision of the one-way valve on the wall portion of the housing, the one-way valve can open unidirectionally to discharge gas inside the housing to the exterior of the housing, allowing gas generated inside the housing during normal operation of the battery cell to be discharged to the exterior of the housing through the one-way valve. This mitigates a phenomenon that internal pressure of the battery cell reaches a threshold prematurely due to a rise of internal gas pressure of the battery cell, thereby effectively enhancing operational stability of the battery cell and improving service life and reliability of the battery cell.

In some embodiments, the one-way valve includes a valve body and a valve core; where the valve body is disposed on the wall portion, a mounting cavity is formed in an interior of the valve body, the valve body is provided with an gas inlet and a gas outlet, the gas inlet is configured to connect the mounting cavity and the interior of the housing, the gas outlet is configured to connect the mounting cavity and an exterior of the housing; and the valve core is disposed within the mounting cavity, and the valve core is configured to block the gas inlet and configured to open the gas inlet under the action of gas inside the housing.

In the above technical solution, the one-way valve is provided with a valve body and a valve core, the valve body is disposed on the wall portion, and the valve body is provided with an gas inlet connecting the mounting cavity and the interior of the housing and a gas outlet connecting the mounting cavity and the exterior of the housing. Through provision of the valve core within the mounting cavity, the valve core can block the gas inlet, and when the internal pressure of the housing rises, gas inside the housing can act on the valve core and drive the valve core to open the gas inlet, so as to implement the unidirectional exhaust function of the one-way valve, allowing the one-way valve to discharge gas from inside the housing to the exterior of the housing.

In some embodiments, the valve body includes a valve main body and a valve cover; where the valve main body is disposed on the wall portion, the valve main body is provided with the gas inlet; and along a thickness direction of the wall portion, the valve cover is disposed at an end of the valve main body facing away from the electrode assembly, and the valve cover and the valve main body together enclose the mounting cavity.

In the above technical solution, the valve body of the one-way valve is provided with a valve main body and a valve cover, and the valve cover is connected to the end of the valve main body facing away from the electrode assembly in the thickness direction of the wall portion, so that the valve cover and the valve main body together define the mounting cavity for accommodating the valve core. The one-way valve in such structure divides the valve body into two parts, facilitating the assembly of the valve core into the mounting cavity, and reducing the assembly difficulty of the one-way valve.

In some embodiments, the valve cover is connected to the valve main body, and the gas outlet is a first through hole provided on the valve cover.

In the above technical solution, the first through hole is provided on the valve cover of the valve body to form the gas outlet of the valve body, so that the mounting cavity of the valve body can communicate with the exterior of the housing through the first through hole provided on the valve cover. The valve body in such structure can reduce the interference of the gas outlet on the connection of the valve cover and the valve main body, reducing the assembly difficulty of the valve cover and the valve main body.

In some embodiments, the valve cover is connected to the valve main body, and the gas outlet is a first exhaust gap formed between the valve cover and the valve main body.

In the above technical solution, the first exhaust gap is provided between the valve cover and the valve main body to form the gas outlet of the valve body, so that the mounting cavity of the valve body can communicate with the exterior of the housing through the first exhaust gap formed between the valve cover and the valve main body. This structure is simple and easy to process.

In some embodiments, the valve cover is connected to the valve main body, the valve main body is provided with a recessed groove at the end facing away from the electrode assembly, and at least part of the valve cover is accommodated within the recessed groove.

In the above technical solution, the recessed groove is provided at the end of the valve main body facing away from the electrode assembly, and at least part of the valve cover is accommodated within the recessed groove. The one-way valve in such structure can reduce space occupied by the valve body in the thickness direction of the wall portion, and can also enhance the structural stability of the valve cover assembled on the valve main body and provide a protection effect for the valve cover, reducing wear or damage to the valve cover.

In some embodiments, along the thickness direction of the wall portion, the valve cover does not extend beyond the end of the valve main body facing away from the electrode assembly.

In the above technical solution, the valve cover is arranged as not extending beyond the end of the valve main body facing away from the electrode assembly in the thickness direction of the wall portion, so that the valve cover is entirely located within the recessed groove. This can further reduce the space occupied by the valve body in the thickness direction of the wall portion and further enhance the protection for the valve cover, reducing wear or damage to the valve cover.

In some embodiments, along the thickness direction of the wall portion, the wall portion has a first surface facing away from the electrode assembly, and the valve main body does not extend beyond the first surface.

In the above technical solution, the valve main body of the valve body is arranged as not extending beyond the first surface of the wall portion facing away from the electrode assembly in the thickness direction of the wall portion, so that the valve body does not protrude beyond the first surface in the thickness direction of the wall portion. This can reduce the space occupied by the battery cell in the thickness direction of the wall portion, and can also reduce wear or impact of the valve body in the external environment, enhancing the protection effect for the valve body and improving the service life of the one-way valve.

In some embodiments, the valve cover is connected to the wall portion, and the gas outlet is a second exhaust gap formed between the valve cover and the wall portion.

In the above technical solution, the valve cover is connected to the wall portion, and the gas outlet of the valve body is arranged as the second exhaust gap between the valve cover and the wall portion. The battery cell in such structure can increase the space of the mounting cavity formed between the valve cover and the valve main body, improving the exhaust efficiency and exhaust smoothness of the one-way valve. Additionally, the gas outlet of the one-way valve can be directly formed between the valve cover and the wall portion, reducing the obstruction of the gas outlet by other components of the battery cell.

In some embodiments, the valve main body is integrally formed with the wall portion.

In the above technical solution, the valve main body of the valve body and the wall portion are arranged as an integrally formed structure, enhancing the structural stability and structural strength of the valve main body disposed on the wall portion.

In some embodiments, the valve core includes an elastic member and a blocking member; where the elastic member is disposed within the mounting cavity; and the blocking member is movably disposed within the mounting cavity, where the blocking member is configured to block the gas inlet under the action of the elastic member and configured to open the gas inlet under the action of gas inside the housing.

In the above technical solution, the valve core of the one-way valve is provided with an elastic member and a blocking member, and both the elastic member and the blocking member are disposed within the mounting cavity, so that the elastic member can apply an elastic force to the blocking member, allowing the blocking member to block the gas inlet to prevent external gas from entering the interior of the housing. Additionally, when the internal pressure of the housing rises, gas inside the housing can act on the blocking member and overcome the elastic force of the elastic member, enabling the blocking member to open the gas inlet. This allows gas inside the housing to be discharged through the one-way valve, enabling the one-way valve to discharge gas from inside the housing to the exterior of the housing while preventing external gas from entering the interior of the housing.

In some embodiments, the elastic member is a spring.

In the above technical solution, a spring is used as the elastic member disposed within the mounting cavity, facilitating assembly of the elastic member, reducing the difficulty of assembling the elastic member in the mounting cavity, and ensuring a relatively stable direction of the elastic force applied by the elastic member to the blocking member.

In some embodiments, a material of the elastic member includes steel, iron, or aluminum.

In the above technical solution, an elastic member made of steel, iron, or aluminum provides good toughness, mitigating elastic failure of the elastic member, and improving the service life of the elastic member.

In some embodiments, along the thickness direction of the wall portion, the valve cover and the blocking member are spaced apart, two ends of the elastic member respectively abut against the valve cover and the blocking member, and the gas inlet is disposed on a cavity bottom surface of the mounting cavity.

In the above technical solution, the valve cover and the blocking member are arranged as spaced apart along the thickness direction of the wall portion, so that the two ends of the elastic member can respectively abut against the valve cover and the blocking member, enabling the blocking member to block the gas inlet disposed on the cavity bottom surface of the mounting cavity along the thickness direction of the wall portion under the action of the elastic member. To be specific, the gas inlet is disposed at the end of the valve main body facing the electrode assembly in the thickness direction of the wall portion, and the blocking member can move along the thickness direction of the wall portion under the action of the elastic member to block the gas inlet. The one-way valve in such structure allows the elastic member to apply an elastic force to the blocking member to cause the blocking member to block the gas inlet, and also reduces the assembly difficulty of the elastic member.

In some embodiments, a first guide post is protrudingly provided on a side of the valve cover facing the blocking member, and part of the elastic member sleeves an outer side of the first guide post.

In the above technical solution, the first guide post is protrudingly provided on the side of the valve cover facing the blocking member, and part of the elastic member sleeves the outer side of the first guide post. The one-way valve in such structure can provide a positioning effect for the elastic member through the first guide post, facilitating the assembly of the elastic member and reducing the assembly difficulty of the elastic member. Additionally, the first guide post can provide a guidance effect when the elastic member is compressed along the thickness direction of the wall portion, reducing radial deformation of the elastic member during compression. This allows the elastic member to be stably compressed along the thickness direction of the wall portion, which is beneficial to improving the reliability of the elastic member, thereby reducing the risk of the blocking member mistakenly opening the gas inlet.

In some embodiments, the valve cover is connected to the valve main body, the gas outlet is a first through hole provided on the valve cover; where along the thickness direction of the wall portion, the gas outlet extends through the first guide post; or along a radial direction of the first guide post, the gas outlet is spaced apart from the first guide post.

In the above technical solution, the gas outlet is arranged as a first through hole provided on the valve cover, and the first through hole extends through the first guide post along the thickness direction of the wall portion, so that the gas outlet is located inside the elastic member, which is beneficial to reducing the interference of the gas outlet on the connection of the valve cover and the valve main body. Similarly, the gas outlet is arranged as a first through hole provided on the valve cover, and the gas outlet is located on the outer side of the first guide post, which facilitates gas discharge, reducing the phenomenon of the gas outlet being blocked by the blocking member.

In some embodiments, a diameter of the first guide post is denoted as D₁, and an inner diameter of the elastic member is denoted as D₂, satisfying 0 mm < D₂ - D₁ ≤ 5 mm.

In the above technical solution, a difference between the inner diameter of the elastic member and the diameter of the first guide post is set to be greater than 0 mm and less than or equal to 5 mm. This mitigates the difficulty of assembling the elastic member onto the first guide post caused by a difference between the inner diameter of the elastic member and the diameter of the first guide post being less than or equal to 0, reducing scratches during the process of sleeving the first guide post with the elastic member. This also mitigates the issue of excessive gap between the elastic member and the first guide post caused by an overly large difference between the inner diameter of the elastic member and the diameter of the first guide post, reducing radial movement or deformation of the elastic member. This improves the uniformity of the elastic force applied by the elastic member to the blocking member, reducing the risk of the blocking member mistakenly opening the gas inlet.

In some embodiments, a first limiting groove is provided on a side of the valve cover facing the blocking member, and an end of the elastic member far from the blocking member is inserted into the first limiting groove.

In the above technical solution, the first limiting groove for inserting the elastic member is also provided on the side of the valve cover facing the blocking member, so that the end of the elastic member abutting against the valve cover can be limited, reducing relative radial sliding between the elastic member and the valve cover. This improves the uniformity of the elastic force applied by the elastic member to the blocking member, enhancing the reliability of the elastic member.

In some embodiments, the end of the elastic member far from the blocking member is fixedly connected to the valve cover.

In the above technical solution, the end of the elastic member far from the blocking member is fixedly connected to the valve cover, so that the end of the elastic member abutting against the valve cover and the valve cover form a mutually fixed connection structure. This enhances the stability of the elastic member abutting against the valve cover, and further reduces relative sliding between the elastic member and the valve cover, further improving the uniformity of the elastic force applied by the elastic member to the blocking member.

In some embodiments, a second guide post is protrudingly provided on a side of the blocking member facing the valve cover, and part of the elastic member sleeves an outer side of the second guide post.

In the above technical solution, the second guide post is protrudingly provided on the side of the blocking member facing the valve cover, and part of the elastic member sleeves the outer side of the second guide post. The one-way valve in such structure can provide a positioning effect for the elastic member through the second guide post, facilitating the assembly of the elastic member and reducing the assembly difficulty of the elastic member. Additionally, the second guide post can provide a guidance effect when the elastic member is compressed along the thickness direction of the wall portion, reducing radial deformation of the elastic member during compression. This allows the elastic member to be stably compressed along the thickness direction of the wall portion, which is beneficial to improving the reliability of the elastic member, thereby reducing the risk of the blocking member mistakenly opening the gas inlet.

In some embodiments, a diameter of the second guide post is denoted as D₃, and the inner diameter of the elastic member is denoted as D₂, satisfying 0 mm < D₃ - D₁ ≤ 5 mm.

In the above technical solution, a difference between the inner diameter of the elastic member and the diameter of the second guide post is set to be greater than 0 mm and less than or equal to 5 mm. This mitigates the difficulty of assembling the elastic member onto the second guide post caused by a difference between the inner diameter of the elastic member and the diameter of the second guide post being less than or equal to 0, reducing scratches during the process of sleeving the second guide post with the elastic member. This also mitigates the issue of excessive gap between the elastic member and the second guide post caused by an overly large difference between the inner diameter of the elastic member and the diameter of the second guide post, reducing radial movement or deformation of the elastic member. This improves the uniformity of the elastic force applied by the elastic member to the blocking member, reducing the risk of the blocking member mistakenly opening the gas inlet.

In some embodiments, a second limiting groove is provided on the side of the blocking member facing the valve cover, and an end of the elastic member far from the valve cover is inserted into the second limiting groove.

In the above technical solution, the second limiting groove for inserting the elastic member is provided on the side of the blocking member facing the valve cover, so that the end of the elastic member abutting against the blocking member can be limited, reducing relative radial sliding between the elastic member and the blocking member. This improves the uniformity of the elastic force applied by the elastic member to the blocking member, enhancing the reliability of the elastic member.

In some embodiments, the end of the elastic member far from the valve cover is fixedly connected to the blocking member.

In the above technical solution, the end of the elastic member far from the valve cover is fixedly connected to the blocking member, so that the end of the elastic member abutting against the blocking member and the blocking member form a mutually fixed connection structure. This can enhance the stability of the elastic member abutting against the blocking member, and further reduce relative sliding between the elastic member and the blocking member, further improving the uniformity of the elastic force applied by the elastic member to the blocking member.

In some embodiments, the blocking member is spaced apart from a cavity side surface of the mounting cavity.

In the above technical solution, the blocking member is spaced apart from the cavity side surface of the mounting cavity, which can reduce scratches between the blocking member and the cavity side surface of the mounting cavity when the blocking member moves along the thickness direction of the wall portion to open or block the gas inlet, thereby reducing the phenomenon of the blocking member becoming stuck or moving unsmoothly, and enhancing the reliability of the one-way valve.

In some embodiments, multiple limiting protrusions are protrudingly provided on an outer peripheral surface of the blocking member, the multiple limiting protrusions are spaced apart along a circumferential direction of the blocking member, and the limiting protrusions are in guiding fit with a cavity side surface of the mounting cavity.

In the above technical solution, multiple spaced-apart limiting protrusions are protrudingly provided on the outer peripheral surface of the blocking member, and the limiting protrusions are in guiding fit with the cavity side surface of the mounting cavity, so that when the blocking member moves along the thickness direction of the wall portion, guidance and limitation effects can be implemented through the cooperation between the limiting protrusions and the cavity side surface of the mounting cavity, enhancing the movement stability of the blocking member along the thickness direction of the wall portion.

In some embodiments, the blocking member includes a pressing portion and a sealing portion, where along the thickness direction of the wall portion, the two ends of the elastic member respectively abut against the valve cover and the pressing portion; the sealing portion is connected to a side of the pressing portion facing away from the valve cover; and the sealing portion is configured to block the gas inlet.

In the above technical solution, the blocking member includes two parts: a pressing portion and a sealing portion, where the pressing portion is disposed on the side of the sealing portion facing the valve cover, the sealing portion is configured to block the gas inlet, and the two ends of the elastic member respectively abut against the valve cover and the pressing portion, allowing the elastic member to apply an elastic force to the sealing portion through the pressing portion. This can improve the uniformity of the elastic force applied by the elastic member to the sealing portion, effectively enhancing the blocking effect of the sealing portion on the gas inlet.

In some embodiments, the pressing portion has a first abutting surface facing the sealing portion, the sealing portion has a second abutting surface facing the pressing portion, one of the first abutting surface and the second abutting surface is provided with a clamping groove, and the other is provided with a clamping portion, the clamping portion being in clamping fit with the clamping groove.

In the above technical solution, the pressing portion and the sealing portion have a first abutting surface and a second abutting surface facing each other, a clamping groove is provided on one of the first abutting surface and the second abutting surface, and a clamping portion in clamping fit with the clamping groove is correspondingly provided on the other, enhancing the structural stability of the sealing portion mounted on the pressing portion, and reducing radial sliding of the sealing portion relative to the pressing portion. This improves the blocking effect of the sealing portion on the gas inlet, reducing the phenomenon of the gas inlet being mistakenly opened.

In some embodiments, the sealing portion is adhered to the pressing portion.

In the above technical solution, the sealing portion and the pressing portion are connected through adhesion. This can enhance the structural stability of the sealing portion connected to the pressing portion, reducing the risk of the sealing portion detaching from the pressing portion, thereby improving the reliability of the sealing portion in sealing the gas inlet. This also facilitates the assembly connection between the sealing portion and the pressing portion, reducing the assembly difficulty between the sealing portion and the pressing portion.

In some embodiments, a material of the sealing portion includes ethylene propylene diene monomer, fluororubber, or polytetrafluoroethylene.

In the above technical solution, a sealing portion made of ethylene propylene diene monomer, fluororubber, or polytetrafluoroethylene provides the sealing portion with good corrosion resistance, effectively mitigating corrosion of the sealing portion by the electrolyte, thereby improving the service life of the sealing portion. This also reduces the phenomenon that the sealing portion has poor blocking effect on the gas inlet caused by corrosion of the sealing portion.

In some embodiments, along the thickness direction of the wall portion, a dimension of a gap between the valve cover and the blocking member is denoted as L, satisfying 0 mm < L ≤ 2 mm.

In the above technical solution, the dimension of the gap between the valve cover and the blocking member in the thickness direction of the wall portion is set to be greater than 0 mm and less than or equal to 2 mm. This can reduce the obstruction of the valve cover on the blocking member, providing a space between the valve cover and the blocking member for the blocking member to move along the thickness direction of the wall portion, enabling the blocking member to open the gas inlet for gas discharge when the blocking member is pushed by gas inside the housing. This can also mitigate the issue of excessive space occupied by the one-way valve in the thickness direction of the wall portion due to an overly large gap between the valve cover and the blocking member, thereby improving the space utilization of the battery cell.

In some embodiments, the valve main body is welded to the wall portion.

In the above technical solution, the valve main body is welded to the wall portion, which can effectively enhance the structural stability and structural strength of the valve main body connected to the wall portion, reducing the risk of the valve main body detaching from the wall portion during use.

In some embodiments, the wall portion is provided with a mounting hole, at least part of the valve main body is accommodated within the mounting hole, a wall surface of the mounting hole includes a first connection surface, and the valve main body includes a second connection surface, where both the first connection surface and the second connection surface are arranged around a central axis of the mounting hole, and the first connection surface is welded to the second connection surface.

In the above technical solution, the wall portion is provided with a mounting hole for accommodating the valve main body of the valve body, and the valve main body has a second connection surface, and the second connection surface is welded to the first connection surface of the wall surface of the mounting hole to assemble the one-way valve onto the wall portion. This structure, with the first connection surface and the second connection surface both being annularly arranged and welded together, can enhance the connection reliability between the valve main body and the wall portion, and can also improve the sealing effect between the valve main body and the wall surface of the mounting hole.

In some embodiments, the first connection surface and the second connection surface match each other, and both the first connection surface and the second connection surface are arranged at an acute angle to the central axis of the mounting hole.

In the above technical solution, the first connection surface and the second connection surface are arranged as mutually matching structures, and both the first connection surface and the second connection surface are arranged at an acute angle to the central axis of the mounting hole, so that the first connection surface and the second connection surface have the same shape and abut against each other, and both the first connection surface and the second connection surface are inclined structures. This facilitates the mutual abutment of the first connection surface and the second connection surface when the valve main body is assembled into the mounting hole, enhances the tightness of the fit between the first connection surface and the second connection surface, and reduces the presence of a gap between the first connection surface and the second connection surface, thereby effectively improving the welding quality of the first connection surface and the second connection surface.

In some embodiments, the mounting hole includes a first hole segment and a second hole segment, where the first hole segment and the second hole segment are arranged along the thickness direction of the wall portion, the first hole segment is located on a side of the second hole segment facing away from the electrode assembly, and a diameter of the first hole segment is greater than a diameter of the second hole segment; where a wall surface of the first hole segment is the first connection surface, the valve main body has a connection portion located within the first hole segment, and an outer peripheral surface of the connection portion is the second connection surface.

In the above technical solution, the mounting hole is provided with a first hole segment and a second hole segment arranged along the thickness direction of the wall portion, the first hole segment is located on the outer side of the second hole segment facing away from the electrode assembly, and the diameter of the first hole segment is greater than the diameter of the second hole segment, forming the mounting hole with a stepped hole structure. The wall surface of the first hole segment is arranged as the first connection surface, and the valve main body has a connection portion accommodated within the first hole segment, with the outer peripheral surface of the connection portion being the second connection surface, facilitating the assembly of the valve main body of the valve body of the one-way valve into the mounting hole from the outer side of the wall portion. This allows the first connection surface to abut against the second connection surface after the connection portion of the valve main body is accommodated within the first hole segment, so that the mounting hole with a stepped hole structure and the connection portion can cooperate to provide limitation and positioning effects for the valve main body, reducing the difficulty of assembling the valve main body into the mounting hole.

In some embodiments, along the thickness direction of the wall portion, an end face of the end of the valve main body facing away from the electrode assembly is connected to the second connection surface, and a first stress relief groove is provided on the end face of the end of the valve main body facing away from the electrode assembly.

In the above technical solution, the first stress relief groove is provided on the end face of the valve main body facing away from the electrode assembly along the thickness direction of the wall portion, so that the welding stress generated by mutual welding of the first connection surface and the second connection surface can be released through the first stress relief groove. This reduces the impact of the welding stress on the weld seam between the first connection surface and the second connection surface, minimizes the risk of weld seam cracking, and reduces the risk of sealing failure at the weld seam.

In some embodiments, the first stress relief groove is disposed around the central axis of the mounting hole.

In the above technical solution, the first stress relief groove is arranged as an annular structure disposed around the central axis of the mounting hole, which is beneficial to enhancing the absorption effect of the first stress relief groove on the welding stress generated by mutual welding of the annularly arranged first connection surface and second connection surface, further reducing the impact of the welding stress on other components of the one-way valve, such as the valve core.

In some embodiments, the battery cell further includes an insulating member, the insulating member being disposed on a side of the wall portion facing the electrode assembly; where along the thickness direction of the wall portion, the wall portion has a second surface facing the electrode assembly, the one-way valve protrudes beyond the second surface, and the insulating member includes a main body portion and an accommodating portion, where the main body portion is disposed on the side of the wall portion facing the electrode assembly, the accommodating portion is connected to the main body portion, and a portion of the one-way valve extending into the interior of the housing is accommodated within the accommodating portion.

In the above technical solution, the battery cell is further provided with an insulating member, the insulating member includes a main body portion and an accommodating portion connected to each other, and the main body portion is disposed on the side of the wall portion facing the electrode assembly, allowing the main body portion to insulatedly isolate the wall portion from the electrode assembly. Additionally, the accommodating portion accommodates the portion of the one-way valve protruding beyond the second surface of the wall portion, providing clearance and protection for the one-way valve while insulatedly isolating the electrode assembly from the one-way valve, thereby reducing the risk of a short circuit between the one-way valve and the electrode assembly.

In some embodiments, the one-way valve includes a valve body, where along the thickness direction of the wall portion, the valve body protrudes beyond the second surface, and a portion of the valve body protruding beyond the second surface is provided with an gas inlet, the gas inlet being configured to discharge gas from inside the housing; where the accommodating portion is provided with a second through hole, the second through hole being connected to the gas inlet.

In the above technical solution, the second through hole is provided on the accommodating portion, so that the second through hole can connect the interior of the housing and the interior of the accommodating portion. This allows the gas inlet of the valve body of the one-way valve to communicate with the interior of the housing through the second through hole, allowing gas inside the housing to enter the accommodating portion through the second through hole and then be discharged through the one-way valve to the exterior of the housing. This eliminates the need for gas to pass through a gap between the main body portion and the wall portion to enter the accommodating portion before being discharged through the one-way valve, improving the smoothness of gas discharge from the interior of the housing through the one-way valve.

In some embodiments, along the thickness direction of the wall portion, the gas inlet is disposed at an end of the valve body facing the electrode assembly; and the accommodating portion includes a first wall and a second wall, the first wall surrounds the valve body, and along the thickness direction of the wall portion, one end of the first wall is connected to the main body portion, and the second wall is connected to an end of the first wall far from the main body portion; where the second through hole is provided on the first wall and/or the second wall.

In the above technical solution, the accommodating portion is provided with a first wall and a second wall connected to each other, the first wall surrounds the valve body, and the second wall is located at an end of the valve body facing the electrode assembly in the thickness direction of the wall portion, so that the first wall and the second wall together enclose the accommodating portion for accommodating the portion of the valve body extending into the interior of the housing. The provision of the second through hole of the accommodating portion on the first wall increases paths for gas to enter the gas inlet of the valve body from the second through hole, mitigating the overflow of electrolyte with the gas. The provision of the second through hole of the accommodating portion on the second wall facilitates the arrangement of the gas inlet and the second through hole in correspondence, enhancing the smoothness of gas discharge from inside the housing through the one-way valve.

In some embodiments, the accommodating portion is integrally formed with the main body portion.

In the above technical solution, the main body portion and the accommodating portion of the insulating member are arranged as an integrally formed structure, enhancing the structural strength and structural stability of the accommodating portion connected to the main body portion.

In some embodiments, the accommodating portion and the main body portion are formed as separate parts.

In the above technical solution, the main body portion and the accommodating portion of the insulating member are arranged as separate structures, reducing the processing difficulty of the insulating member, thereby lowering the manufacturing costs of the insulating member.

In some embodiments, the accommodating portion further includes a flange portion; where the flange portion is connected to an end of the first wall far from the second wall, at least part of the flange portion is stacked with the main body portion, and the flange portion abuts against a side of the main body portion facing the wall portion.

In the above technical solution, the accommodating portion is further provided with a flange portion. The flange portion is connected to the end of the first wall far from the second wall, at least part of the flange portion is stacked with the main body portion in the thickness direction of the wall portion, and the flange portion abuts against the side of the main body portion facing the wall portion, implementing connection of the accommodating portion to the main body portion. This structure is simple and easy to assemble.

In some embodiments, along the thickness direction of the wall portion, an accommodating groove is disposed on a surface of the main body portion facing the wall portion, and the flange portion is accommodated within the accommodating groove.

In the above technical solution, the accommodating groove for accommodating the flange portion is provided on the surface of the main body portion facing the wall portion, reducing the space occupied by the flange portion and the main body portion in the thickness direction of the wall portion, and reducing the interference of the flange portion on the mutual abutment between the main body portion and the wall portion.

In some embodiments, along the thickness direction of the wall portion, a surface of the flange portion facing the wall portion is flush with the surface of the main body portion facing the wall portion.

In the above technical solution, the surface of the flange portion facing the wall portion is arranged as flush with the surface of the main body portion facing the wall portion, so that the wall portion and the groove bottom surface of the accommodating groove can cooperate to provide clamping and limiting effects for the flange portion, reducing the movement of the accommodating portion along the thickness direction of the wall portion.

In some embodiments, the battery cell further includes a shielding member; where the shielding member is mounted on the wall portion, and along the thickness direction of the wall portion, the shielding member is located on a side of the one-way valve facing away from the electrode assembly, and the shielding member covers the one-way valve; where the one-way valve has a gas outlet, the gas outlet is configured to discharge gas from inside the housing, an exhaust passage is formed between the shielding member and the wall portion or an exhaust passage is provided on the shielding member, and the exhaust passage connects the gas outlet and the exterior of the housing.

In the above technical solution, the battery cell is further provided with a shielding member located on the side of the one-way valve facing away from the electrode assembly, the shielding member is mounted on the wall portion, and the shielding member covers the one-way valve, so that the shielding member can provide protection and shielding effects for the one-way valve. This can reduce wear or damage to the one-way valve in the external environment and lower the risk of impurities, particles, or the like in the external environment entering the one-way valve, thereby improving the service life of the one-way valve. Also, covering the one-way valve with the shielding member enhances the aesthetic appeal of the outer surface of the battery cell. Additionally, this facilitates connection of detection components or other parts on the side of the shielding member facing away from the one-way valve, reducing interference from the region of the wall portion where the one-way valve is disposed on the connection of the detection components or other parts.

In some embodiments, along the thickness direction of the wall portion, the wall portion has a first surface facing away from the electrode assembly, where the first surface is provided with a mounting groove, a groove bottom surface of the mounting groove is provided with a mounting hole, at least part of the one-way valve is disposed within the mounting hole, and at least part of the shielding member is accommodated within the mounting groove.

In the above technical solution, the mounting groove is provided on the first surface of the wall portion facing away from the electrode assembly, and at least part of the shielding member is accommodated within the mounting groove. This can reduce the space occupied by the shielding member and the wall portion in the thickness direction of the wall portion, optimizing the volume of the battery cell. Additionally, the mounting groove can provide positioning and limiting effects for the shielding member, reducing the assembly difficulty of connecting the shielding member to the wall portion.

In some embodiments, the exhaust passage includes a third exhaust gap, where the third exhaust gap is formed between the shielding member and a groove side surface of the mounting groove, and the third exhaust gap is configured to connect the gas outlet and the exterior of the housing.

In the above technical solution, the third exhaust gap in communication with the exterior of the housing is formed between the shielding member and the groove side surface of the mounting groove, allowing gas discharged from the one-way valve to be expelled to the exterior of the housing through the third exhaust gap. The battery cell in such structure does not require provision of hole channels in the shielding member, reducing the processing difficulty and enhancing the aesthetic appeal of the appearance of the battery cell.

In some embodiments, an outer peripheral surface of the shielding member includes a first corner surface and at least two first side surfaces, the first corner surface connecting two adjacent first side surfaces; and a groove side surface of the mounting groove includes a second corner surface and at least two second side surfaces, the second corner surface connecting two adjacent second side surfaces, where each of the second side surfaces is connected to one of the first side surfaces, and the third exhaust gap is formed between the second corner surface and the first corner surface.

In the above technical solution, two adjacent first side surfaces on the outer peripheral surface of the shielding member are connected by the first corner surface, and two connected second side surfaces on the groove side surface of the mounting groove are connected by the second corner surface. Each first side surface is connected to one second side surface, and the third gap is formed between the first corner surface and the second corner surface, that is, the third exhaust gap is formed at the corner between the shielding member and the mounting groove. This facilitates formation of the third exhaust gap between the outer peripheral surface of the shielding member and the groove side surface of the mounting groove. The structure is simple and easy to implement. In addition to formation of the third exhaust gap between the outer peripheral surface of the shielding member and the groove side surface of the mounting groove, this also increases the connection area between the outer peripheral surface of the shielding member and the groove side surface of the mounting groove, enhancing the robustness of the connection of the shielding member to the wall portion.

In some embodiments, both the first corner surface and the second corner surface are arcuate surfaces, and a radius of the first corner surface is greater than a radius of the second corner surface.

In the above technical solution, both the first corner surface and the second corner surface are arranged as arcuate surfaces, and the radius of the first corner surface is greater than the radius of the second corner surface, allowing for formation of the third exhaust gap between the first corner surface and the second corner surface. This structure is simple and easy to manufacture and process.

In some embodiments, the first side surface is welded to the second side surface.

In the above technical solution, the first side surface and the second side surface are arranged as mutually welded structures, enhancing the connection robustness between the shielding member and the groove side surface of the mounting groove, and improving the structural stability of the shielding member assembled onto the wall portion.

In some embodiments, a cross-section of the shielding member perpendicular to the thickness direction of the wall portion is rectangular, the outer peripheral surface of the shielding member includes four first side surfaces and four first corner surfaces, and the third exhaust gap is formed on at least one first corner surface.

In the above technical solution, the shielding member is arranged as a rectangular plate-like structure, so that the four edges of the shielding member form the four first side surfaces, and the four first corner surfaces are formed at the four right angles of the shielding member. This structure is simple and easy to manufacture.

In some embodiments, the exhaust passage further includes a fourth exhaust gap, where the fourth exhaust gap is formed between the shielding member and the groove bottom surface of the mounting groove, and the fourth exhaust gap connects the third exhaust gap and the gas outlet.

In the above technical solution, the exhaust passage further includes the fourth exhaust gap formed between the shielding member and the groove bottom surface of the mounting groove, and the fourth exhaust gap connects the third exhaust gap and the gas outlet. This mitigates the phenomenon of obstructed gas discharge between the gas outlet and the third exhaust gap caused by the shielding member abutting against the groove bottom surface of the mounting groove, thereby improving the smoothness of gas discharge from the gas outlet of the one-way valve to the third exhaust gap.

In some embodiments, along the thickness direction of the wall portion, the shielding member has a third surface facing the one-way valve, where the third surface laps over the groove bottom surface of the mounting groove, and the third surface is provided with a first recess, the fourth exhaust gap being formed between a groove bottom surface of the first recess and the groove bottom surface of the mounting groove.

In the above technical solution, the third surface of the shielding member laps over the groove bottom surface of the mounting groove, so that the shielding member abuts against the groove bottom surface of the mounting groove, enhancing the structural stability and reliability of the shielding member mounted in the mounting groove. Additionally, the first recess is provided on the third surface, so that the fourth exhaust gap is formed between the groove bottom surface of the first recess and the groove bottom surface of the mounting groove, allowing gas discharged from the gas outlet of the one-way valve to enter the third exhaust gap through the first recess and then be discharged to the exterior of the housing. This allows the third exhaust gap to communicate with the gas outlet through the first recess while allowing the shielding member to abut against the groove bottom surface of the mounting groove.

In some embodiments, multiple third exhaust gaps are formed between the shielding member and the groove side surface of the mounting groove, the multiple third exhaust gaps are spaced apart along the circumferential direction of the shielding member, the third surface is provided with multiple first recesses, and each of the third exhaust gaps is connected to one of the first recesses.

In the above technical solution, multiple third exhaust gaps are formed between the shielding member and the groove side surface of the mounting groove, and each third exhaust gap communicates with one first recess, further improving the exhaust efficiency.

In some embodiments, the third surface is further provided with a second recess, where the multiple first recesses are disposed around the second recess and are all in communication with the second recess, and the second recess is in communication with the gas outlet.

In the above technical solution, the second recess is provided on the third surface of the shielding member facing the one-way valve, the second recess is in communication with the gas outlet of the one-way valve, and the multiple first recesses are disposed around the second recess and are all in communication with the second recess. In this way, gas discharged from the gas outlet of the one-way valve can enter the second recess, pass through the multiple first recesses, and then be discharged to the exterior of the housing through the corresponding third exhaust gaps. This improves the exhaust efficiency and mitigates the accumulation of gas between the shielding member and the one-way valve.

In some embodiments, along the thickness direction of the wall portion, the gas outlet is disposed at an end of the one-way valve facing away from the electrode assembly, the gas outlet is disposed facing the second recess, and a projection of the gas outlet is located within the second recess.

In the above technical solution, the gas outlet of the one-way valve and the second recess are arranged as structures facing each other, with the projection of the gas outlet in the thickness direction of the wall portion being located within the second recess, making the second recess a structure covering the gas outlet in the thickness direction of the wall portion. This allows gas discharged from the gas outlet of the one-way valve to directly enter the second recess, improving the exhaust smoothness and exhaust efficiency.

In some embodiments, along the thickness direction of the wall portion, the shielding member does not extend beyond the first surface.

In the above technical solution, the shielding member does not extend beyond the first surface of the wall portion facing away from the electrode assembly in the thickness direction of the wall portion, so that the mounting groove can provide a protection effect for the shielding member, further reducing the wear of the shielding member.

In some embodiments, the shielding member has a fourth surface facing away from the one-way valve, where the fourth surface is flush with the first surface.

In the above technical solution, the fourth surface of the shielding member facing away from the one-way valve is arranged as flush with the first surface of the wall portion facing away from the electrode assembly, further enhancing the aesthetic appeal of the outer surface of the battery cell, and facilitating setting of information codes or connection of detection components or other parts on the fourth surface of the shielding member.

In some embodiments, the shielding member is fixedly connected to the wall portion.

In the above technical solution, the shielding member and the wall portion are arranged as mutually fixedly connected structures, reducing the risk of the shielding member detaching from the wall portion during use, enhancing the connection robustness between the shielding member and the wall portion, and facilitating setting of information codes or connection of detection components or other parts on the shielding member.

In some embodiments, the battery cell further includes a protective patch; where the protective patch is disposed on a side of the wall portion facing away from the electrode assembly, the protective patch is provided with an information collection hole extending through the protective patch, and a projection of the information collection hole in the thickness direction of the wall portion is located within the shielding member.

In the above technical solution, the battery cell is further provided with a protective patch. The protective patch is disposed on the side of the wall portion facing away from the electrode assembly, providing protection for the wall portion. Additionally, the information collection hole is provided on the protective patch, with the projection of the information collection hole in the thickness direction of the wall portion being located within the shielding member, making the information collection hole a structure corresponding to the shielding member. This facilitates setting of information codes or connection of detection components for sampling on the shielding member, reducing damage or pulling on the one-way valve by the detection components. This also enhances the aesthetic appeal of the outer surface of the battery cell. Additionally, the shielding member is arranged corresponding to the information collection hole of the protective patch, allowing the region of the battery cell for discharging gas through the one-way valve to be in correspondence with the region of the protective patch where the information collection hole is provided. This can reduce the space occupied by the information collection hole and the shielding member on the outer surface of the housing, and improve the integration of the battery cell.

In some embodiments, an exhaust port communicating with the exterior of the housing is formed at an end of the exhaust passage, and the protective patch covers the exhaust port.

In the above technical solution, the protective patch covers the exhaust port at one end of the exhaust passage formed between the shielding member and the wall portion. This can shield the exhaust passage, enhancing the aesthetic appeal of the outer surface of the battery cell. This can also reduce the risk of impurities, particles, or the like in the external environment entering the exhaust passage through the exhaust port and blocking the exhaust passage, improving the reliability of the battery cell.

In some embodiments, an adhesion layer is provided on a side of the protective patch facing the wall portion, the adhesion layer adhering the protective patch and the wall portion, where the adhesion layer is provided with a first clearance hole at a position corresponding to the information collection hole, and along the thickness direction of the wall portion, projections of both the information collection hole and the exhaust port are located within the first clearance hole.

In the above technical solution, the adhesion layer is provided on the side of the protective patch facing the wall portion, so that the protective patch can be adhered to the wall portion through the adhesion layer, reducing the assembly difficulty of the protective patch and enhancing the connection stability of the protective patch on the wall portion. Additionally, the first clearance hole is provided at the position of the adhesion layer corresponding to the information collection hole, and the projections of both the information collection hole of the protective patch and the exhaust port formed at one end of the exhaust passage in the thickness direction of the wall portion are located within the first clearance hole, reducing the obstruction on the exhaust port of the exhaust passage by the adhesion layer. This allows gas discharged through the exhaust passage to enter the information collection hole through the gap between the protective patch and the wall portion and then be discharged, minimizing the impact on the exhaust of the one-way valve while implementing adhesion of the protective patch to the wall portion.

In some embodiments, an exhaust port communicating with the exterior of the housing is formed at an end of the exhaust passage; and the battery cell further includes a protective patch, where the protective patch is disposed on the side of the wall portion facing away from the electrode assembly, and the protective patch covers the exhaust port.

In the above technical solution, the protective patch is provided on the side of the wall portion facing away from the electrode assembly, and the protective patch covers the exhaust port at an end of the exhaust passage formed between the shielding member and the wall portion. This can shield the exhaust passage, enhancing the aesthetic appeal of the outer surface of the battery cell. This can also reduce the risk of impurities, particles, or the like in the external environment entering the exhaust passage through the exhaust port and blocking the exhaust passage, improving the reliability of the battery cell.

In some embodiments, the wall portion is provided with a mounting hole, at least part of the one-way valve is mounted within the mounting hole, and the mounting hole is an electrolyte injection hole of the battery cell.

In the above technical solution, the mounting hole for assembling the one-way valve is arranged as the electrolyte injection hole, allowing the electrolyte to be injected into the housing through the mounting hole between assembly of the one-way valve into the mounting hole, thereby eliminating the need to provide a separate electrolyte injection hole on the housing. This improves the production efficiency of the battery cell and reduces the manufacturing costs of the battery cell.

In some embodiments, the housing includes a shell and an end cap; where an accommodating cavity having an opening is formed inside the shell, and the accommodating cavity is configured to accommodate the electrode assembly; and the end cap closes the opening; where the end cap is the wall portion; or the shell includes the wall portion.

In the above technical solution, the wall portion of the housing is arranged as the end cap that closes the opening of the shell. The battery cell in such structure facilitates the mounting of the one-way valve on the end cap, reducing the assembly difficulty of the battery cell and improving the production efficiency of the battery cell. Similarly, the wall portion of the housing is arranged as one wall of the shell. The battery cell in such structure reduces the impact of the stress generated by mutual connection of the end cap and the shell on the one-way valve, mitigating phenomena such as damage to the one-way valve, thereby improving the operational stability and service life of the battery cell.

In some embodiments, the battery cell further includes a pressure relief mechanism; where the pressure relief mechanism is disposed on the housing, and the pressure relief mechanism is configured to actuate and release internal pressure of the battery cell during thermal runaway of the battery cell, an actuation pressure of the pressure relief mechanism being greater than an opening pressure of the one-way valve.

In the above technical solution, the opening pressure for opening the one-way valve for exhaust is set to be less than the actuation pressure for the pressure relief mechanism to release pressure, allowing gas generated inside the housing during normal operation of the battery cell to be discharged to the exterior of the housing through the one-way valve. This mitigates the phenomenon that the pressure relief mechanism actuates prematurely before thermal runaway due to a rise of internal gas pressure in the battery cell, thereby effectively enhancing the operational stability of the battery cell and improving the service life and reliability of the battery cell.

In some embodiments, an exhaust speed of the one-way valve is less than an exhaust speed of the pressure relief mechanism.

In the above technical solution, the exhaust speed of the one-way valve is set to be less than the exhaust speed of the pressure relief mechanism, mitigating the phenomenon that the pressure relief mechanism fails to actuate or open due to excessively rapid exhaust through the one-way valve prevents during thermal runaway of the battery cell. This allows the pressure relief mechanism to actuate and stably release internal pressure of the battery cell during thermal runaway of the battery cell, thereby reducing the risk of fire or explosion in the battery cell during thermal runaway.

In some embodiments, along the thickness direction of the wall portion, the wall portion has a second surface facing the electrode assembly, the one-way valve protruding beyond the second surface; and the battery cell further includes an electrode terminal and a current collecting member, where the electrode terminal is mounted on the wall portion, the electrode terminal is configured to output or input electrical energy of the battery cell, the current collecting member connects the electrode terminals and the electrode assembly, and at least part of the current collecting member is disposed between the wall portion and the electrode assembly; where the current collecting member is provided with a clearance groove, and the one-way valve extends into the clearance groove along the thickness direction of the wall portion.

In the above technical solution, the battery cell is further provided with the electrode terminal for inputting or outputting electrical energy of the battery cell, and the current collecting member connects the electrode assembly and the electrode terminal, reducing the connection difficulty between the electrode assembly and the electrode terminals through the current collecting member. Additionally, the clearance groove is provided on the current collecting member, and the one-way valve extends into the clearance groove along the thickness direction of the wall portion. This allows the current collecting member to provide clearance for the one-way valve through the clearance groove, reducing interference between the current collecting member and the one-way valve. This also reduces the space occupied by the one-way valve and the current collecting member inside the housing, increasing the energy density of the battery cell.

According to a second aspect, an embodiment of this application further provides a battery including the foregoing battery cell.

According to a third aspect, an embodiment of this application further provides an electric apparatus including the foregoing battery cell, where the battery cell is configured to provide electrical energy.

### BRIEF DESCRIPTION OF DRAWINGS

To more clearly illustrate the technical solutions of the embodiments of this application, the accompanying drawings required for use in the embodiments are briefly described below. It should be understood that the following accompanying drawings illustrate only some embodiments of this application and should not be considered as limiting the scope. For those skilled in the art, other related drawings can be obtained based on these drawings without creative effort.
FIG. 1 is a schematic structural diagram of a vehicle according to some embodiments of this application;
FIG. 2 is an exploded structural diagram of a battery according to some embodiments of this application;
FIG. 3 is a schematic structural diagram of a battery cell according to some embodiments of this application;
FIG. 4 is an exploded structural diagram of a battery cell according to some embodiments of this application;
FIG. 5 is a partial cross-sectional view of a battery cell according to some embodiments of this application;
FIG. 6 is a schematic structural diagram of a one-way valve according to some embodiments of this application;
FIG. 7 is an exploded structural diagram of a one-way valve according to some embodiments of this application;
FIG. 8 is a cross-sectional view of a one-way valve according to some embodiments of this application;
FIG. 9 is a schematic structural diagram of a one-way valve according to some other embodiments of this application;
FIG. 10 is a partial cross-sectional view of a battery cell according to some other embodiments of this application;
FIG. 11 is a schematic structural diagram of a one-way valve according to still some embodiments of this application;
FIG. 12 is a cross-sectional view of a one-way valve according to still some embodiments of this application;
FIG. 13 is a cross-sectional view of a one-way valve according to further some embodiments of this application;
FIG. 14 is a cross-sectional view of a one-way valve according to yet some embodiments of this application;
FIG. 15 is a schematic structural diagram of a blocking member of a one-way valve according to yet some embodiments of this application;
FIG. 16 is a partial cross-sectional view of a wall portion of a housing of a battery cell according to some embodiments of this application;
FIG. 17 is a partial cross-sectional view of an insulating member of a battery cell according to some embodiments of this application;
FIG. 18 is a partial cross-sectional view of a battery cell according to still some embodiments of this application;
FIG. 19 is a partial cross-sectional view of an insulating member of a battery cell according to still some embodiments of this application;
FIG. 20 is a top view of a battery cell (with a protective patch removed) according to some embodiments of this application;
FIG. 21 is a partial enlarged view of portion A of the battery cell shown in FIG. 20;
FIG. 22 is a schematic diagram of connection between a shielding member and a wall portion of a battery cell according to some embodiments of this application;
FIG. 23 is a schematic structural diagram of a shielding member in other embodiments according to some embodiments of this application;
FIG. 24 is a schematic structural diagram of a shielding member in some other embodiments according to some embodiments of this application;
FIG. 25 is a bottom view of a shielding member of a battery cell according to some embodiments of this application;
FIG. 26 is a schematic diagram of connection between a protective patch and a wall portion according to some embodiments of this application;
FIG. 27 is a schematic diagram of connection between a protective patch and an adhesion layer according to some embodiments of this application; and
FIG. 28 is a partial structural diagram of a battery cell according to some embodiments of this application.

Reference signs: 1000. vehicle; 100. battery; 10. box; 11. first box body; 12. second box body; 20. battery cell; 21. housing; 211. wall portion; 2111. mounting hole; 2111a. first connection surface; 2111b. first hole segment; 2111c. second hole segment; 2112. first surface; 2113. mounting groove; 2113a. second corner surface; 2113b. second side surface; 2114. second surface; 212. shell; 2121. opening; 213. end cap; 22. electrode assembly; 221. tab; 23. one-way valve; 231. valve body; 2311. mounting cavity; 2312. gas inlet; 2313. gas outlet; 2314. valve main body; 2314a. recessed groove; 2314b. second connection surface; 2314c. connection portion; 2314d. first stress relief groove; 2315. valve cover; 2315a. protrusion; 2315b. first guide post; 2315c. first limiting groove; 232. valve core; 2321. elastic member; 2322. blocking member; 2322a. pressing portion; 2322b. sealing portion; 2322c. second guide post; 2322d. second limiting groove; 2322e. limiting protrusion; 2322f. first abutting surface; 2322g. second abutting surface; 2322h. clamping groove; 2322k. clamping portion; 24. electrode terminal; 25. pressure relief mechanism; 26. insulating member; 261. main body portion; 2611. assembly hole; 2612. accommodating groove; 262. accommodating portion; 2621. second through hole; 2622. first wall; 2623. second wall; 2624. flange portion; 27. shielding member; 271. first corner surface; 272. first side surface; 273. second groove; 274. abutting portion; 275. third surface; 2751. first recess; 2752. second recess; 276. fourth surface; 28. exhaust passage; 281. third exhaust gap; 282. fourth exhaust gap; 283. exhaust outlet; 29. protective patch; 291. information collection hole; 292. second clearance hole; 293. third clearance hole; 30. adhesion layer; 301. first clearance hole; 31. current collecting member; 311. clearance groove; 200. controller; 300. motor; and X. thickness direction of wall portion.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

Unless otherwise defined, all technical and scientific terms used in this application have the same meaning as commonly understood by those skilled in the technical field of this application. The terms used in the specification of this application are only for the purpose of describing specific embodiments and are not intended to limit this application. The terms "include" and "have" and any variations thereof in the specification, claims, and the above description of the drawings of this application are intended to cover non-exclusive inclusion. The terms "first", "second", and the like in the specification, claims, or the above description of the drawings of this application are used to distinguish different objects and not to describe a specific order or primary-secondary relationship.

Reference to "embodiment" in this application means that a specific feature, structure, or characteristic described in connection with the embodiment may be included in at least one embodiment of this application. The appearance of the phrase in various places in the specification does not necessarily refer to the same embodiment or an independent or alternative embodiment exclusive of other embodiments.

In the description of this application, it should be noted that, unless otherwise expressly specified and limited, the terms "install", "connect", "connection", and "attach" should be understood in a broad sense, for example, as a fixed connection, a detachable connection, or an integral connection; a direct connection, an indirect connection through an intermediate medium, or an internal communication between two elements. For those of ordinary skill in the art, the specific meanings of the above terms in this application can be understood according to specific circumstances.

The term "and/or" in this application is merely an association relationship describing associated objects, indicating that three relationships may exist, for example, A and/or B may indicate: A alone, both A and B, and B alone. Additionally, the character "/" in this application generally indicates an "or" relationship between the associated objects.

In the embodiments of this application, the same reference numerals denote the same components, and for brevity, detailed descriptions of the same components are omitted in different embodiments. It should be understood that the thickness, length, width, and other dimensions of various components in the embodiments of this application shown in the drawings, as well as the overall thickness, length, width, and other dimensions of the integrated device, are merely illustrative and should not constitute any limitation to this application.

The term "multiple" in this application refers to two or more (including two).

In the embodiments of this application, the battery cell may be a secondary battery. The secondary battery is a battery cell that can be recharged to activate the active material for continued use after discharge.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like, which is not limited in the embodiments of this application.

The battery cell typically includes an electrode assembly. The electrode assembly includes a positive electrode, a negative electrode, and a separator. During the charging and discharging process of the battery cell, active ions (for example, lithium ions) intercalate and deintercalate back and forth between the positive electrode and the negative electrode. The separator is disposed between the positive electrode and the negative electrode to prevent a short circuit between the positive and negative electrodes while allowing active ions to pass through.

In some embodiments, the positive electrode may be a positive electrode plate, and the positive electrode plate may include a positive electrode current collector and a positive electrode active material disposed on at least one surface of the positive electrode current collector.

In an example, the positive electrode current collector has two opposite surfaces in its thickness direction, and the positive electrode active material is disposed on either or both of the two opposite surfaces of the positive electrode current collector.

In an example, the positive electrode current collector may be a metal foil or a composite current collector. For example, as a metal foil, silver-plated aluminum, silver-plated stainless steel, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on the polymer material substrate (for example, a substrate of polypropylene, polyethylene terephthalate, polybutylene terephthalate, polystyrene, polyethylene, or the like).

In an example, the positive electrode active material may include at least one of the following materials: lithium-containing phosphate, lithium transition metal oxide, and their respective modified compounds. However, this application is not limited to these materials, and other conventional materials that can be used as positive electrode active materials for batteries may also be used. These positive electrode active materials may be used alone or in combination of two or more. Examples of lithium-containing phosphate may include, but are not limited to, at least one of lithium iron phosphate (for example, LiFePO4 (also abbreviated as LFP)), a composite of lithium iron phosphate and carbon, lithium manganese phosphate (for example, LiMnPO4), a composite of lithium manganese phosphate and carbon, lithium iron manganese phosphate, or a composite of lithium iron manganese phosphate and carbon. Examples of lithium transition metal oxide may include, but are not limited to, at least one of lithium cobalt oxide (for example, LiCoO₂), lithium nickel oxide (for example, LiNiO₂), lithium manganese oxide (for example, LiMnO₂ or LiMn2O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also abbreviated as NCM₃₃₃), LiNi_{0.3}Co_{0.2}Mn_{0.3}O₂ (also abbreviated as NCM₅₂₃), LiNi_{0.3}Co_{0.23}Mn_{0.23}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium nickel cobalt aluminum oxide (for example, LiNi_{0.83}Co_{0.13}Al_{0.03}O₂), or modified compounds thereof.

In some embodiments, the positive electrode may be a metal foam. The metal foam may be nickel foam, copper foam, aluminum foam, alloy foam, carbon foam, or the like. When metal foam is used as the positive electrode, a surface of the metal foam may not be provided with a positive electrode active material, or may be provided with a positive electrode active material. In an example, a lithium source material, potassium metal, or sodium metal may be filled and/or deposited within the metal foam, where the lithium source material is lithium metal and/or a lithium-rich material.

In some embodiments, the negative electrode may be a negative electrode plate, and the negative electrode plate may include a negative electrode current collector.

In an example, the negative electrode current collector may be a metal foil, a metal foam, or a composite current collector. For example, as a metal foil, silver-plated aluminum, silver-plated stainless steel, stainless steel, copper, aluminum, nickel, carbon electrode, carbon, nickel, titanium, or the like may be used. The metal foam may be nickel foam, copper foam, aluminum foam, alloy foam, carbon foam, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, polyethylene, or the like).

In an example, the negative electrode plate may include a negative electrode current collector and a negative electrode active material disposed on at least one surface of the negative electrode current collector.

In an example, the negative electrode current collector has two opposite surfaces in its thickness direction, and the negative electrode active material is disposed on either or both of the two opposite surfaces of the negative electrode current collector.

In an example, the negative electrode active material may be a negative electrode active material known in the art that is used for battery cells. In an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and other conventional materials that can be used as negative electrode active materials for batteries may also be used. These negative electrode active materials may be used alone or in combination of two or more.

In some embodiments, a material of the positive electrode current collector may be aluminum, and a material of the negative electrode current collector may be copper.

In some embodiments, the electrode assembly further includes a separator, and the separator is disposed between the positive electrode and the negative electrode.

In some embodiments, the separator is a separator film. The separator film may be of various types and may be any known porous structure separator film with good chemical and mechanical stability.

In an example, a material of the separator film may include at least one of glass fiber, non-woven fabric, polyethylene, polypropylene, and polyvinylidene fluoride. The separator film may be a single-layer film or a multilayer composite film. When the separator film is a multilayer composite film, materials of the layers may be the same or different. The separator may be a separate component located between the positive and negative electrodes or may be attached to the surface of the positive or negative electrode.

In some embodiments, the separator is a solid-state electrolyte. The solid-state electrolyte is disposed between the positive electrode and the negative electrode, to conduct ions and separate the positive and negative electrodes.

In some embodiments, the battery cell further includes an electrolyte. The electrolyte conducts ions between the positive and negative electrodes. The electrolyte may be in liquid, gel, or solid state. The liquid-state electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, or lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether-based solvent. The ether-based solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, or crown ether.

The gel-state electrolyte includes a polymer as a skeleton network of the electrolyte, combined with an ionic liquid-lithium salt.

The solid-state electrolyte includes a polymer solid-state electrolyte, an inorganic solid-state electrolyte, and a composite solid-state electrolyte.

In an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

In an example, the inorganic solid-state electrolyte may include one or more of an oxide solid electrolyte (crystalline perovskite, sodium superionic conductor, garnet, or amorphous LiPON film), a sulfide solid electrolyte (a crystalline lithium superionic conductor (lithium germanium phosphorus sulfide, or argyrodite), or amorphous sulfide), a halide solid electrolyte, a nitride solid electrolyte, and a hydride solid electrolyte.

In an example, the composite solid-state electrolyte is formed by adding an inorganic solid-state electrolyte filler to a polymer solid-state electrolyte.

In some embodiments, the electrode assembly is a wound structure. The positive electrode plate and the negative electrode plate are wound into a wound structure.

In some embodiments, the electrode assembly is a stacked structure.

In an example, multiple positive electrode plates and multiple negative electrode plates may be provided, alternately stacked.

In an example, multiple positive electrode plates may be provided, and the negative electrode plate may be folded to form multiple stacked folding segments, with one positive electrode plate clamped between adjacent folding segments.

In an example, the positive electrode plate and the negative electrode plate are each folded to form multiple stacked folding segments.

In an example, multiple separators may be provided, separately disposed between any adjacent positive electrode plates or negative electrode plates.

In an example, the separator may be continuously provided, disposed between any adjacent positive electrode plates or negative electrode plates by folding or winding.

In some embodiments, a shape of the electrode assembly may be cylindrical, flat, prismatic, or the like.

In some embodiments, the electrode assembly is provided with a tab. The tab can conduct current from the electrode assembly. The tab includes a positive tab and a negative tab.

In some embodiments, the battery cell may include a housing. The housing is configured to package components such as the electrode assembly and the electrolyte. The housing may be a steel shell, an aluminum shell, a plastic shell (for example, polypropylene), a composite metal shell (for example, a copper-aluminum composite shell), an aluminum-plastic film, or the like.

In an example, the battery cell may be a cylindrical battery cell, a prismatic battery cell, a pouch battery cell, or a battery cell of other shapes. The prismatic battery cell includes, but is not limited to, a rectangular-shell battery cell, a blade-shaped battery cell, and a polygonal prismatic battery, where the polygonal prismatic battery is for example, a hexagonal prismatic battery.

The battery mentioned in the embodiments of this application is a single physical module including one or more battery cells to provide higher voltage and capacity.

In some embodiments, the battery may be a battery module. When there are multiple battery cells, the multiple battery cells are arranged and fixed to form a battery module.

In some embodiments, the battery may be a battery pack, and the battery pack includes a box and a battery cell, where the battery cell or the battery module is accommodated within the box.

In some embodiments, the box may be part of a chassis structure of a vehicle. For example, part of the box may form at least part of the vehicle floor, or part of the box may form at least part of a crossbeam and a longitudinal beam of the vehicle.

In some embodiments, the battery may be an energy storage apparatus. The energy storage apparatus includes an energy storage container, an energy storage cabinet, and the like.

With outstanding advantages such as high energy density, low environmental pollution, high power density, long service life, wide adaptability, and low self-discharge coefficient, batteries have become an important part of new energy development. The development of battery technology requires consideration of multiple design factors, such as performance parameters like energy density, cycle life, discharge capacity, and charge-discharge rate, as well as battery safety. With the rapid development and growing demand for batteries, the requirements for battery service life and reliability are also rising.

In battery technology, for general battery cells, to ensure operational safety, a pressure relief mechanism is typically provided on the housing of a battery cell to release internal pressure, thereby effectively enhancing operational safety of the battery cell. In related technologies, a battery cell generates a certain amount of gas during use, causing the gas pressure inside the housing of the battery cell to rise. This may lead to premature actuation of the pressure relief mechanism of the battery cell during use, resulting in poor operational stability of the battery cell and thus hindering improvements in the service life and reliability of the battery cell.

In view of this, to address the issues of short service life and low reliability of battery cells, an embodiment of this application provides a battery cell. The battery cell includes a housing, an electrode assembly, and a one-way valve, where the housing has a wall portion, the electrode assembly is accommodated within the housing, the one-way valve is disposed on the wall portion, and the one-way valve is configured to discharge gas from inside the housing.

In the battery cell of such structure, the one-way valve is provided on the wall portion of the housing, allowing the one-way valve to open unidirectionally to discharge gas from inside the housing to outside the housing. In this way, during normal operation of the battery cell, gas generated inside the housing can be discharged to outside the housing through the one-way valve. This mitigates the phenomenon of premature actuation for pressure relief of the battery cell when internal pressure of the battery cell reaches a threshold prematurely due to a gas pressure rise inside the battery cell, thereby effectively enhancing the operational stability of the battery cell and improving the service life and reliability of the battery cell.

The battery cell disclosed in the embodiments of this application can be used in, without limitation to, electric apparatuses such as vehicles, ships, or aircraft, as well as in energy storage apparatuses. A power supply system for such electric apparatuses can be constituted using the battery cell, battery, or the like disclosed in this application. This is beneficial to mitigating the phenomenon of premature valve opening for pressure relief during use of the battery cell, thereby enhancing the service life and reliability of the battery cell.

An embodiment of this application provides an electric apparatus using a battery as a power source. The electric apparatus may be, but is not limited to, a mobile phone, a tablet, a laptop computer, an electric toy, an electric tool, an electric bicycle, an electric vehicle, a ship, a spacecraft, or the like. The electric toy may include a fixed or mobile electric toy, such as a game console, an electric toy car, an electric toy ship, and an electric toy airplane. The spacecraft may include an airplane, a rocket, a space shuttle, and a spaceship.

For ease of description, the following embodiments are described using an example that an electric apparatus according to an embodiment of this application is a vehicle.

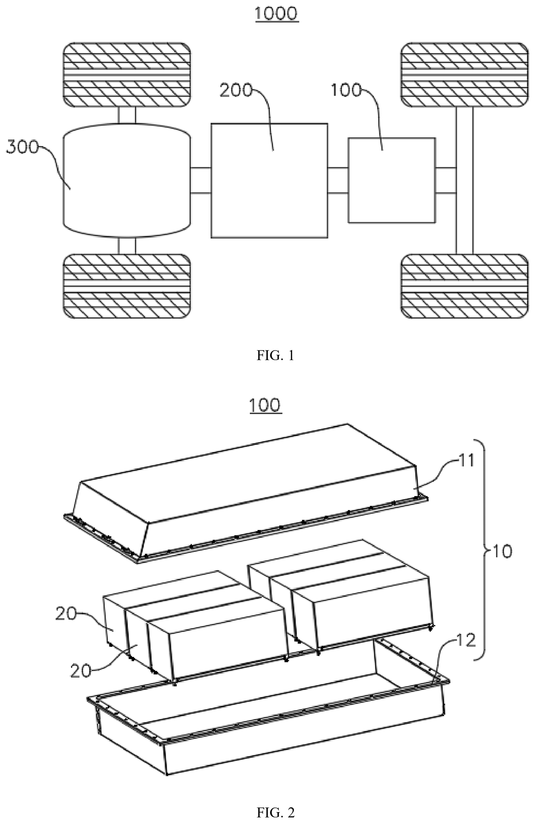

Referring to FIG. 1, FIG. 1 is a schematic structural diagram of a vehicle 1000 according to some embodiments of this application. The vehicle 1000 may be a fuel vehicle, a gas vehicle, or a new energy vehicle. The new energy vehicle may be a battery electric vehicle, a hybrid vehicle, an extended-range vehicle, or the like. A battery 100 is provided inside the vehicle 1000, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 be used not only as an operational power source for the vehicle 1000 but also as a driving power source for the vehicle 1000, replacing or partially replacing fuel or natural gas to provide driving power for the vehicle 1000.

Referring to FIG. 2, FIG. 2 is an exploded structural diagram of a battery 100 according to some embodiments of this application. The battery 100 may include a box 10 and a battery cell 20, where the battery cell 20 is accommodated in the box 10.

The box 10 is configured to provide an assembly space for the battery cell 20, and the box 10 may be of various structures. In some embodiments, the box 10 may include a first box body 11 and a second box body 12, where the first box body 11 and the second box body 12 engage with each other, and the first box body 11 and the second box body 12 together define an assembly space for accommodating the battery cell 20. The second box body 12 may be a hollow structure with one end open, and the first box body 11 may be a plate-like structure. The first box body 11 covers the open side of the second box body 12, so that the first box body 11 and the second box body 12 together define the assembly space. In other embodiments, both the first box body 11 and the second box body 12 may be hollow structures with one open side, and the open side of the first box body 11 covers the open side of the second box body 12. Certainly, the box 10 formed by the first box body 11 and the second box body 12 may be of various shapes, such as a cylinder or a cuboid. For example, in FIG. 2, the box 10 is a cuboid.

Optionally, in the battery 100, one or more battery cells 20 may be accommodated in the box 10. When multiple battery cells 20 are accommodated in the box 10, the multiple battery cells 20 may be connected in series, parallel, or series-parallel, where being connected in series-parallel means a combination of series and parallel connections of the multiple battery cells 20. The multiple battery cells 20 may be directly connected in series, parallel, or series-parallel, and then an integral module formed by the multiple battery cells 20 is accommodated in the box 10. Certainly, in some embodiments, the battery 100 may be formed by multiple battery cells 20 being connected in series, parallel, or series-parallel first to form a battery module and then multiple battery modules being connected in series, parallel, or series-parallel to form an entirety which is accommodated in the box 10.

In some embodiments, the battery 100 may further include other structures. For example, the battery 100 may further include a busbar component, where the busbar component is disposed within the box 10, and the busbar component connects multiple battery cells 20 to implement electrical connection between the multiple battery cells 20.

Each battery cell 20 may be a secondary battery or a primary battery, or may be a lithium-sulfur battery, a sodium-ion battery, or a magnesium-ion battery, which is not limited thereto. The battery cell 20 may be cylindrical, flat, cuboid, or of other shapes. For example, in FIG. 2, the battery cell 20 is a cuboid structure.

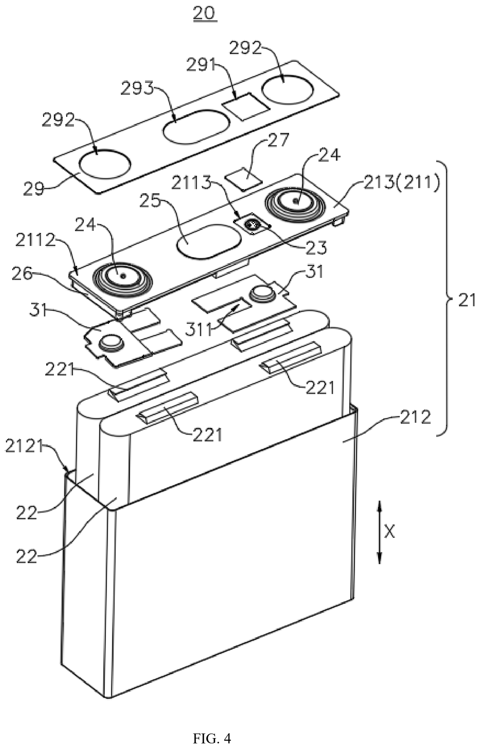

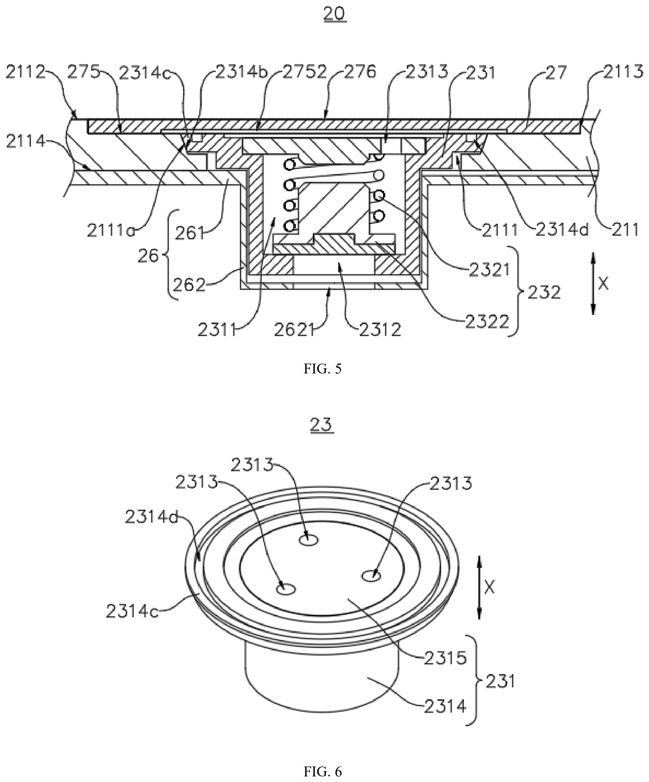

According to some embodiments of this application, referring to FIG. 3, FIG. 4, FIG. 5, and FIG. 6, FIG. 3 is a schematic structural diagram of a battery cell 20 according to some embodiments of this application, FIG. 4 is an exploded structural diagram of a battery cell 20 according to some embodiments of this application, FIG. 5 is a partial cross-sectional view of a battery cell 20 according to some embodiments of this application, and FIG. 6 is a schematic structural diagram of a one-way valve 23 according to some embodiments of this application. This application provides a battery cell 20 including a housing 21, an electrode assembly 22, and a one-way valve 23. The housing 21 has a wall portion 211, the electrode assembly 22 is accommodated within the housing 21, the one-way valve 23 is disposed on the wall portion 211, and the one-way valve 23 is configured to discharge gas from inside the housing 21.

The housing 21 may be further configured to accommodate an electrolyte, such as an electrolytic solution. The housing 21 may be of various structural forms, such as a cylinder or a cuboid. Similarly, the housing 21 may be made of various materials, such as copper, iron, aluminum, steel, or aluminum alloy.

In some embodiments, the housing 21 may include a shell 212 and an end cap 213. An accommodating cavity is formed in an interior of the shell 212, the accommodating cavity is configured to accommodate the electrode assembly 22, and the accommodating cavity an opening 2121, meaning the shell 212 is a hollow structure with the opening 2121 at one end. The end cap 213 covers the opening 2121 of the shell 212 to create a sealed connection, thereby creating a closed space for accommodating the electrode assembly 22 and the electrolyte.

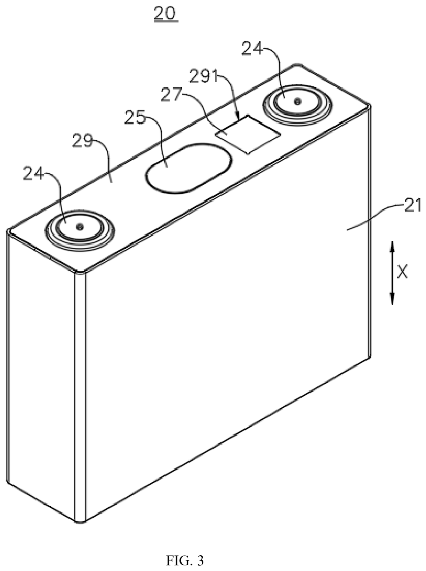

It should be noted that the wall portion 211 for mounting the one-way valve 23 may be the end cap 213 of the housing 21, or may be one wall of the shell 212 of the housing 21. For example, in FIG. 3, the wall portion 211 is the end cap 213. Certainly, a structure of the battery cell 20 is not limited thereto. In other embodiments, the wall portion 211 may be a bottom wall of the shell 212 opposite the end cap 213, or the wall portion 211 may be a side wall of the shell 212 adjacent to and connected to the end cap 213.

During assembly of the battery cell 20, the electrode assembly 22 may first be placed into the shell 212, an electrolyte may be filled into the shell 212, and then the end cap 213 is engaged to the opening 2121 of the shell 212, thereby completing the assembly of the battery cell 20.

The shell 212 may be of various shapes, such as a cylinder, a cuboid, or a prismatic structure. The shape of the shell 212 may be determined based on a specific shape of the electrode assembly 22. For example, if the electrode assembly 22 is a cylindrical structure, a cylindrical shell 212 may be used; if the electrode assembly 22 is a cuboid structure, a cuboid shell 212 may be used. Certainly, the end cap 213 may also be of various structures, such as a plate-like structure or a hollow structure with one end open. For example, in FIG. 3, the shell 212 is a cuboid structure.

Certainly, it can be understood that the housing 21 is not limited to the above structures, and the housing 21 may be of other structures. For example, the housing 21 may include a shell 212 and two end caps 213, where the shell 212 is a hollow structure with openings 2121 on two opposite sides, and one end cap 213 covers one opening 2121 of the shell 212 to create a sealed connection, thereby creating a closed space for accommodating the electrode assembly 22 and the electrolyte. In other words, the shell 212 has openings 2121 on two opposite sides, and the two end caps 213 respectively cover the two sides of the shell 212 to close the corresponding openings 2121.

It should be noted that the electrode assembly 22 is a component in the battery cell 20 where electrochemical reactions take place, and the electrode assembly 22 may be of various structures. For example, the electrode assembly 22 may be a wound structure formed by winding a positive electrode plate, a separator, and a negative electrode plate, or may be a stacked structure formed by stacking a positive electrode plate, a separator, and a negative electrode plate.

For example, the separator is a separator film, and a main material of the separator film may be selected from at least one of glass fiber, non-woven fabric, polyethylene, polypropylene, or polyvinylidene fluoride.

Optionally, one or more electrode assemblies 22 may be accommodated within the housing 21. For example, in FIG. 3, the housing 21 of the battery cell 20 is provided with two electrode assemblies 22, where the two electrode assemblies 22 are stacked along a thickness direction, that is, the two electrode assemblies 22 are stacked along a thickness direction of the battery cell 20. Certainly, in other embodiments, the number of electrode assemblies 22 accommodated within the housing 21 may be one, three, four, five, six, seven, eight, or the like.

It should be noted that the one-way valve 23 is disposed on the wall portion 211, and the one-way valve 23 is configured to discharge gas from inside the housing 21, that is, the one-way valve 23 can open unidirectionally for exhaust, allowing gas inside the housing 21 to be discharged to an exterior of the housing 21 through the one-way valve 23. Optionally, the one-way valve 23 may be disposed on the wall portion 211 in various structures. It may be that the one-way valve 23 is welded to the wall portion 211, or that the one-way valve 23 is clamped to the wall portion 211, or that the one-way valve 23 is adhered to the wall portion 211. The exterior of the housing 21 refers to an external environment of the battery cell 20.

For example, in FIG. 5, the wall portion 211 is provided with a mounting hole 2111, where the mounting hole 2111 connects the interior of the housing 21 and the exterior of the housing 21, part of the one-way valve 23 is assembled into the mounting hole 2111 and extends into the interior of the housing 21 along a thickness direction X of the wall portion, and the one-way valve 23 is sealedly connected to a wall surface of the mounting hole 2111.

In some embodiments, the battery cell 20 may further include an electrode terminal 24, where the electrode terminal 24 is insulatedly mounted on the housing 21, and the electrode terminal 24 is electrically connected to the electrode assembly 22 to output or input electrical energy of the battery cell 20.

It should be noted that the electrode terminal 24 being insulatedly mounted on the housing 21 means that no electrical connection is created between the electrode terminal 24 and the housing 21.

In FIG. 3, the battery cell 20 includes two electrode terminals 24, and correspondingly, each electrode assembly 22 has two tabs 221, the two tabs 221 having opposite polarities. The two electrode terminals 24 are respectively electrically connected to the two tabs 221 of the electrode assembly 22 to implement input or output for the positive electrode and negative electrode of the battery cell 20. It should be noted that the tab 221 of the electrode assembly 22 is a component formed by stacking and connecting regions of the positive electrode plate not coated with a positive electrode active substance layer, or a component formed by stacking and connecting regions of the negative electrode plate not coated with a negative electrode active substance layer. If the tab 221 is used to output the positive electrode of the electrode assembly 22, the tab 221 is a component formed by stacking and connecting regions of the positive electrode plate not coated with a positive electrode active substance layer; if the tab 221 is used to output the negative electrode of the electrode assembly 22, the tab 221 is a component formed by stacking and connecting regions of the negative electrode plate not coated with a negative electrode active substance layer.

For example, the electrode terminal 24 may be made of various materials, such as copper, iron, aluminum, steel, or aluminum alloy.

The electrode terminal 24 may be mounted on the housing 21 in various structures. For example, in FIG. 3, two electrode terminals 24 are both mounted on the end cap 213 of the housing 21. Certainly, the structure of the battery cell 20 is not limited to this. In other embodiments, the two electrode terminals 24 may both be mounted on the shell 212 of the housing 21; or of the two electrode terminals 24, one electrode terminal 24 may be mounted on the shell 212 of the housing 21, and the other electrode terminal 24 may be mounted on the end cap 213 of the housing 21.

In some embodiments, the battery cell 20 may further include a pressure relief mechanism 25, where the pressure relief mechanism 25 is mounted on the housing 21. Optionally, the pressure relief mechanism 25 may be disposed on the end cap 213 of the housing 21, or may be disposed on the shell 212 of the housing 21. The pressure relief mechanism 25 is configured to release internal pressure of the battery cell 20 when internal pressure or temperature of the battery cell 20 reaches a predetermined value.

For example, in FIG. 4, the pressure relief mechanism 25 is disposed on the end cap 213 of the housing 21, and the pressure relief mechanism 25 may be a pressure relief component such as an explosion-proof valve, an explosion-proof sheet, a pressure relief valve, or a safety valve.

Through provision of the one-way valve 23 on the wall portion 211 of the housing 21, the one-way valve 23 can open unidirectionally to discharge gas inside the housing 21 to the exterior of the housing 21, allowing gas generated inside the housing 21 during normal operation of the battery cell 20 to be discharged to the exterior of the housing 21 through the one-way valve 23. This mitigates the phenomenon of premature actuation for pressure relief of the battery cell 20 when internal pressure of the battery cell 20 reaches a threshold prematurely due to a gas pressure rise inside the battery cell 20, thereby effectively enhancing the operational stability of the battery cell 20 and improving the service life and reliability of the battery cell 20.

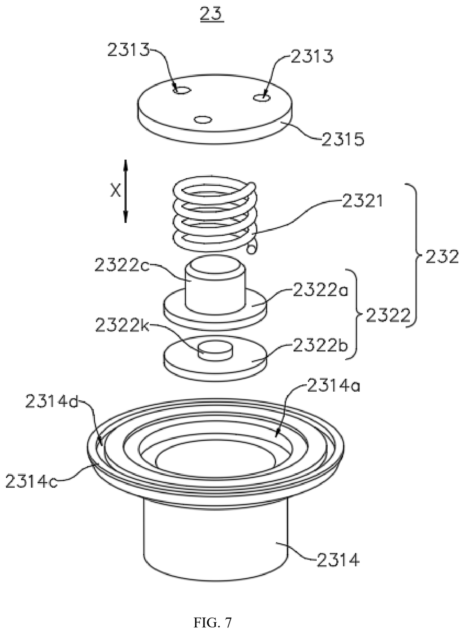

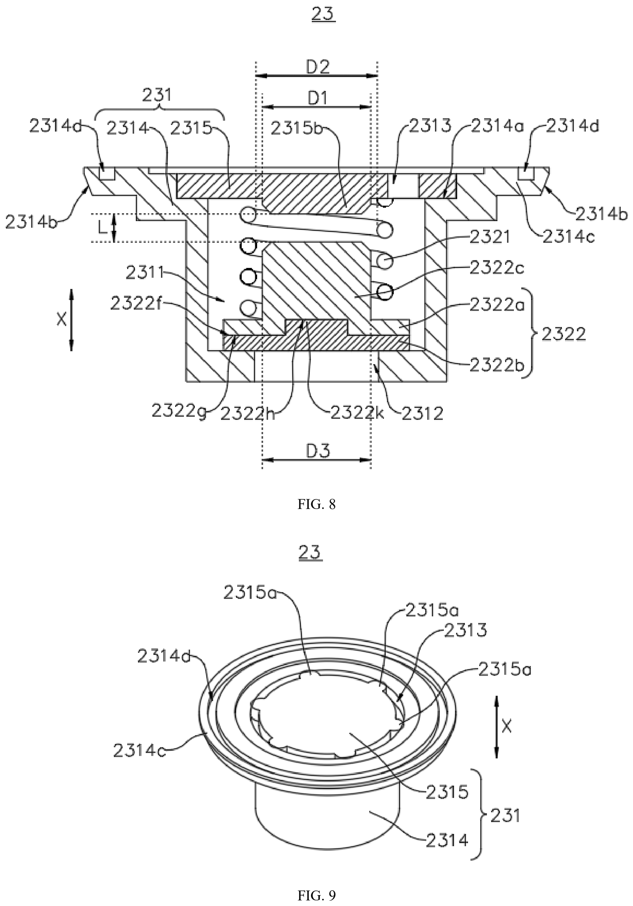

According to some embodiments of this application, referring to FIG. 5 and FIG. 6, and further referring to FIG. 7 and FIG. 8, FIG. 7 is an exploded structural diagram of a one-way valve 23 according to some embodiments of this application, and FIG. 8 is a cross-sectional view of a one-way valve 23 according to some embodiments of this application. The one-way valve 23 may include a valve body 231 and a valve core 232. The valve body 231 is disposed on the wall portion 211, a mounting cavity 2311 is formed in an interior of the valve body 231, the valve body 231 is provided with an gas inlet 2312 and a gas outlet 2313, the gas inlet 2312 is configured to connect the mounting cavity 2311 and the interior of the housing 21, and the gas outlet 2313 is configured to connect the mounting cavity 2311 and the exterior of the housing 21. The valve core 232 is disposed within the mounting cavity 2311, and the valve core 232 is configured to block the gas inlet 2312 and configured to open the gas inlet 2312 under the action of gas inside the housing 21.

The gas inlet 2312 is configured to connect the mounting cavity 2311 and the interior of the housing 21, that is, gas inside the housing 21 can enter the mounting cavity 2311 through the gas inlet 2312. Similarly, the gas outlet 2313 is configured to connect the mounting cavity 2311 and the exterior of the housing 21, that is, gas entering the mounting cavity 2311 from the interior of the housing 21 can be discharged to the exterior of the housing 21 through the gas outlet 2313.

The valve core 232 is configured to block the gas inlet 2312 and configured to open the gas inlet 2312 under the action of gas inside the housing 21. To be specific, when the valve core 232 can block the gas inlet 2312, gas outside the housing 21 cannot enter the interior of the housing 21, and gas inside the housing 21 cannot be discharged to the exterior of the housing 21. When the pressure of the gas inside the housing 21 reaches a specific threshold, the gas inside the housing 21 can push the valve core 232 to open the gas inlet 2312, allowing gas inside the housing 21 to enter the mounting cavity 2311 and then be discharged through the gas outlet 2313 to the exterior of the housing 21.

Optionally, the valve core 232 may be of various structures. For example, in FIG. 5 and FIG. 7, the valve core 232 may include an elastic member 2321 and a blocking member 2322, where both the elastic member 2321 and the blocking member 2322 are disposed within the mounting cavity 2311. The elastic member 2321 is configured to provide an elastic force to the blocking member 2322, enabling the blocking member 2322 to block the gas inlet 2312. When a force exerted by the gas inside the housing 21 on the blocking member 2322 is greater than the elastic force of the elastic member 2321, the gas inside the housing 21 can overcome the elastic force of the elastic member 2321 and push the blocking member 2322 to open the gas inlet 2312, allowing gas inside the housing 21 to enter the mounting cavity 2311 and then be discharged through the gas outlet 2313 to the exterior of the housing 21. Conversely, after the gas inside the housing 21 is discharged and the force exerted by the gas on the blocking member 2322 is less than the elastic force of the elastic member 2321, the elastic member 2321 can drive the blocking member 2322 to reset and block the gas inlet 2312. Certainly, in other embodiments, the valve core 232 may be an elastic component as a whole, such as elastic rubber.

The one-way valve 23 is provided with a valve body 231 and a valve core 232, where the valve body 231 is disposed on the wall portion 211, and the valve body 231 is provided with an gas inlet 2312 connecting the mounting cavity 2311 and the interior of the housing 21 and a gas outlet 2313 connecting the mounting cavity 2311 and the exterior of the housing 21. Through provision of the valve core 232 within the mounting cavity 2311, the valve core 232 can block the gas inlet 2312, and when the internal pressure of the housing 21 rises, gas inside the housing 21 can act on the valve core 232 and drive the valve core 232 to open the gas inlet 2312, so as to implement the unidirectional exhaust function of the one-way valve 23, allowing the one-way valve 23 to discharge gas from inside the housing 21 to the exterior of the housing 21.

According to some embodiments of this application, referring to FIG. 5, FIG. 7, and FIG. 8, the valve body 231 may include a valve main body 2314 and a valve cover 2315. The valve main body 2314 is disposed on the wall portion 211, and the valve main body 2314 is provided with the gas inlet 2312. Along a thickness direction X of the wall portion, the valve cover 2315 is disposed at an end of the valve main body 2314 facing away from the electrode assembly 22, and the valve cover 2315 and the valve main body 2314 together enclose the mounting cavity 2311.

The valve main body 2314 is disposed on the wall portion 211, and the valve main body 2314 extends into the interior of the housing 21 along the thickness direction X of the wall portion, that is, the valve main body 2314 protrudes beyond a surface of the wall portion 211 facing the electrode assembly 22 in thickness direction X of the wall portion. The valve main body 2314 is sealedly mounted within the mounting hole 2111, and the valve main body 2314 may be welded to the wall portion 211 or may be adhered to the wall portion 211 with sealant.

The valve main body 2314 is provided with the gas inlet 2312. For example, the gas inlet 2312 is disposed at an end of the valve main body 2314 facing the electrode assembly 22 in the thickness direction X of the wall portion. Certainly, in other embodiments, the gas inlet 2312 may alternatively be disposed on an outer peripheral surface of a portion of the valve main body 2314 extending into the housing 21.

Optionally, the valve cover 2315 is disposed at the end of the valve main body 2314 facing away from the electrode assembly 22, which may be that the valve cover 2315 is connected to the end of the valve main body 2314 facing away from the electrode assembly 22, or may be that the valve cover 2315 is connected to the wall portion 211 and the valve cover 2315 and the valve main body 2314 are arranged along the thickness direction X of the wall portion. For example, in FIG. 5 and FIG. 8, the valve cover 2315 is connected to the end of the valve main body 2314 facing away from the electrode assembly 22, so that the valve cover 2315 and the interior of the valve main body 2314 together enclose the mounting cavity 2311 for accommodating the valve core 232.

It should be noted that in an embodiment where the valve cover 2315 is connected to the end of the valve main body 2314 facing away from the electrode assembly 22, the gas outlet 2313 may be directly provided on the valve cover 2315, that is, the gas outlet 2313 is a passage provided on the valve cover 2315; or may be disposed between the valve cover 2315 and the valve main body 2314, that is, the gas outlet 2313 is a gap formed between the valve cover 2315 and the valve main body 2314.

For example, a material of the valve main body 2314 may be a metal material, such as copper, iron, aluminum, steel, or aluminum alloy. Similarly, a material of the valve cover 2315 may also be a metal material, such as copper, iron, aluminum, steel, or aluminum alloy. The valve main body 2314 and the valve cover 2315 may be made of the same material or different materials.

The valve body 231 of the one-way valve 23 is provided with a valve main body 2314 and a valve cover 2315. The valve cover 2315 is connected to the end of the valve main body 2314 facing away from the electrode assembly 22 in the thickness direction X of the wall portion, so that the valve cover 2315 and the valve main body 2314 together define the mounting cavity 2311 for accommodating the valve core 232. The one-way valve 23 in such structure divides the valve body 231 into two parts, facilitating the assembly of the valve core 232 into the mounting cavity 2311, and reducing the assembly difficulty of the one-way valve 23.

In some embodiments, referring to FIG. 6, FIG. 7, and FIG. 8, the valve cover 2315 is connected to the valve main body 2314, and the gas outlet 2313 is a first through hole provided on the valve cover 2315.

The gas outlet 2313 extends through two sides of the valve cover 2315 along the thickness direction X of the wall portion, making the gas outlet 2313 in communication with the mounting cavity 2311.

Optionally, one or more gas outlets 2313 may be provided on the valve cover 2315. For example, in FIG. 6, the valve cover 2315 is provided with three gas outlets 2313. Certainly, in other embodiments, the number of gas outlets 2313 provided on the valve cover 2315 may be two, four, five, six, or the like.

In an example, when multiple gas outlets 2313 are provided on the valve cover 2315, the multiple gas outlets 2313 are arranged at equal intervals.

In an example, the multiple gas outlets 2313 are arranged at equal intervals around a center of the valve cover 2315, facilitating smoother gas flow.

The first through hole is provided on the valve cover 2315 of the valve body 231 to form the gas outlet 2313 of the valve body 231, so that the mounting cavity 2311 of the valve body 231 can communicate with the exterior of the housing 21 through the first through hole provided on the valve cover 2315. The valve body 231 in such structure can reduce the interference of the gas outlet 2313 on the connection of the valve cover 2315 and the valve main body 2314, reducing the assembly difficulty of the valve cover 2315 and the valve main body 2314.

Certainly, in an embodiment where the valve cover 2315 is connected to the end of the valve main body 2314 facing away from the electrode assembly 22, the structure of the gas outlet 2313 is not limited to this. In some embodiments, referring to FIG. 9, FIG. 9 is a schematic structural diagram of a one-way valve 23 according to some other embodiments of this application. The valve cover 2315 is connected to the valve main body 2314, and the gas outlet 2313 is a first exhaust gap formed between the valve cover 2315 and the valve main body 2314.

Multiple protrusions 2315a are protrudingly provided on an outer peripheral surface of the valve cover 2315, where the multiple protrusions 2315a are spaced apart along a circumferential direction of the valve cover 2315. The protrusions 2315a are in interference fit with the valve main body 2314, and the first exhaust gap is formed between the valve main body 2314 and a region of the outer peripheral surface of the valve cover 2315 where no protrusions 2315a are provided, that is, in the circumferential direction of the valve cover 2315, the gas outlet 2313 is formed between two adjacent protrusions 2315a.

The first exhaust gap is provided between the valve cover 2315 and the valve main body 2314 to form the gas outlet 2313 of the valve body 231, so that the mounting cavity 2311 of the valve body 231 can communicate with the exterior of the housing 21 through the first exhaust gap formed between the valve cover 2315 and the valve main body 2314. This structure is simple and easy to process.

According to some embodiments of this application, referring to FIG. 6, FIG. 7, and FIG. 8, the valve cover 2315 is connected to the valve main body 2314, the valve main body 2314 is provided with a recessed groove 2314a at the end facing away from the electrode assembly 22, and at least part of the valve cover 2315 is accommodated within the recessed groove 2314a.

The mounting cavity 2311 extends through a groove bottom surface of the recessed groove 2314a, and the valve cover 2315 is assembled within the recessed groove 2314a and abuts against the groove bottom surface of the recessed groove 2314a, so that the valve cover 2315 and the valve main body 2314 enclose the mounting cavity 2311.

At least part of the valve cover 2315 is accommodated within the recessed groove 2314a, that is, the valve cover 2315 may be entirely located within the recessed groove 2314a or may be only partially located within the recessed groove 2314a. In other words, in the thickness direction X of the wall portion, the valve cover 2315 may extend beyond the recessed groove 2314a, or may not extend beyond the recessed groove 2314a.

The recessed groove 2314a is provided at the end of the valve main body 2314 facing away from the electrode assembly 22, and at least part of the valve cover 2315 is accommodated within the recessed groove 2314a. The one-way valve 23 in such structure can reduce space occupied by the valve body 231 in the thickness direction X of the wall portion, and can also enhance the structural stability of the valve cover 2315 assembled on the valve main body 2314 and provide a protection effect for the valve cover 2315, reducing wear or damage to the valve cover 2315.

In some embodiments, referring to FIG. 8, along the thickness direction X of the wall portion, the valve cover 2315 does not extend beyond the end of the valve main body 2314 facing away from the electrode assembly 22, that is, the valve cover 2315 is entirely located within the recessed groove 2314a.

For example, in the thickness direction X of the wall portion, a surface of the valve cover 2315 facing away from the electrode assembly 22 is flush with an end face of the end of the valve main body 2314 facing away from the electrode assembly 22.

The valve cover 2315 is arranged as not extending beyond the end of the valve main body 2314 facing away from the electrode assembly 22 in the thickness direction X of the wall portion, so that the valve cover 2315 is entirely located within the recessed groove 2314a. This can further reduce the space occupied by the valve body 231 in the thickness direction X of the wall portion and further enhance the protection for the valve cover 2315, reducing wear or damage to the valve cover 2315.

In some embodiments, referring to FIG. 5, along the thickness direction X of the wall portion, the wall portion 211 has a first surface 2112 facing away from the electrode assembly 22, and the valve main body 2314 does not extend beyond the first surface 2112.

The valve main body 2314 does not extend beyond the first surface 2112, that is, the valve main body 2314 of the valve body 231 does not protrude beyond a side of the wall portion 211 facing away from the electrode assembly 22 in the thickness direction X of the wall portion. In an embodiment where the valve cover 2315 is connected to the valve main body 2314 and is entirely located within the recessed groove 2314a, the one-way valve 23 does not protrude beyond the side of the wall portion 211 facing away from the electrode assembly 22 in the thickness direction X of the wall portion.

The valve main body 2314 of the valve body 231 is arranged as not extending beyond the first surface 2112 of the wall portion 211 facing away from the electrode assembly 22 in the thickness direction X of the wall portion, so that the valve body 231 does not protrude beyond the first surface 2112 in the thickness direction X of the wall portion. This can reduce the space occupied by the battery cell 20 in the thickness direction X of the wall portion, and can also reduce wear or impact of the valve body 231 in the external environment, enhancing the protection effect for the valve body 231 and improving the service life of the one-way valve 23.

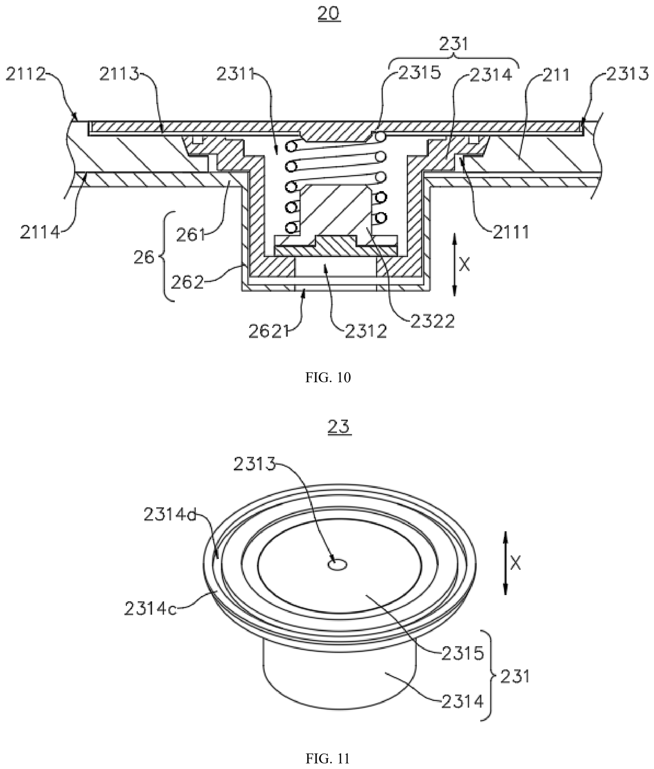

Certainly, the assembly structure of the one-way valve 23 and the wall portion 211 is not limited to this. In some embodiments, the battery cell 20 may be of other structures. For example, referring to FIG. 10, FIG. 10 is a partial cross-sectional view of a battery cell 20 according to some other embodiments of this application. The valve cover 2315 is connected to the wall portion 211, and the gas outlet 2313 is a second exhaust gap formed between the valve cover 2315 and the wall portion 211.

The valve cover 2315 is located at the end of the valve main body 2314 facing away from the electrode assembly 22 in the thickness direction X of the wall portion, and the valve cover 2315 is connected to the wall portion 211, so that the valve cover 2315 and the valve main body 2314 together define the mounting cavity 2311 for accommodating the valve core 232.

For example, in FIG. 10, the wall portion 211 has a first surface 2112 facing away from the electrode assembly 22, the first surface 2112 is provided with a mounting groove 2113, the valve cover 2315 is accommodated within the mounting groove 2113, the surface of the valve cover 2315 facing away from the electrode assembly 22 in the thickness direction X of the wall portion is flush with the first surface 2112, and the second exhaust gap is formed between the valve cover 2315 and a groove side surface of the mounting groove 2113.

Optionally, the valve cover 2315 may be connected to the wall portion 211 in various structures. For example, the valve cover 2315 may be welded to the groove side surface of the mounting groove 2113, or the valve cover 2315 may be in interference fit with the groove side surface of the mounting groove 2113. Similarly, the gas outlet 2313 is the second exhaust gap formed between the valve cover 2315 and the wall portion 211, and the second exhaust gap may be of various structures. For example, a first groove is provided on the outer peripheral surface of the valve cover 2315, and the second exhaust gap is formed between a groove bottom surface of the first groove and the groove side surface of the mounting groove 2113.

The valve cover 2315 is connected to the wall portion 211, and the gas outlet 2313 of the valve body 231 is arranged as the second exhaust gap between the valve cover 2315 and the wall portion 211. The battery cell 20 in such structure can increase the space of the mounting cavity 2311 formed between the valve cover 2315 and the valve main body 2314, improving the exhaust efficiency and exhaust smoothness of the one-way valve 23. Additionally, the gas outlet 2313 of the one-way valve 23 can be directly formed between the valve cover 2315 and the wall portion 211, reducing the obstruction of the gas outlet 2313 by other components of the battery cell 20.

According to some embodiments of this application, referring to FIG. 5, the valve main body 2314 of the valve body 231 and the wall portion 211 are separate structures, the wall portion 211 is provided with a mounting hole 2111 connecting the interior of the housing 21 and the exterior of the housing 21, the valve main body 2314 of the valve body 231 is inserted into the mounting hole 2111 and sealedly connected to a wall surface of the mounting hole 2111. Certainly, in some embodiments, the battery cell 20 may be of other structures. For example, the valve main body 2314 is integrally formed with the wall portion 211, that is, the valve main body 2314 of the valve body 231 and the wall portion 211 are an integral structure made through an integral forming process, such as stamping or casting. The valve main body 2314 of the valve body 231 and the wall portion 211 are arranged as an integrally formed structure, enhancing the structural stability and structural strength of the valve main body 2314 disposed on the wall portion 211.

According to some embodiments of this application, referring to FIG. 5, FIG. 7, and FIG. 8, the valve core 232 may include an elastic member 2321 and a blocking member 2322. The elastic member 2321 is disposed within the mounting cavity 2311, the blocking member 2322 is movably disposed within the mounting cavity 2311, and the blocking member 2322 is configured to block the gas inlet 2312 under the action of the elastic member 2321 and configured to open the gas inlet 2312 under the action of gas inside the housing 21.

The blocking member 2322 is movably disposed within the mounting cavity 2311, that is, the blocking member 2322 can move within the mounting cavity 2311, enabling the blocking member 2322 to block the gas inlet 2312 when moving toward the gas inlet 2312 and to open the gas inlet 2312 when moving away from the gas inlet 2312.

For example, the gas inlet 2312 is disposed at an end of the valve main body 2314 close to the electrode assembly 22 in the thickness direction X of the wall portion, that is, the gas inlet 2312 extends through the cavity bottom surface of the mounting cavity 2311. Correspondingly, the blocking member 2322 is movably disposed within the mounting cavity 2311 along the thickness direction X of the wall portion, enabling the blocking member 2322 to block the gas inlet 2312 when abutting against the cavity bottom surface of the mounting cavity 2311. Certainly, in other embodiments, the gas inlet 2312 may alternatively be disposed on a side of the valve main body 2314 in a radial direction of the valve main body 2314, and correspondingly, the blocking member 2322 is movably disposed within the mounting cavity 2311 along the radial direction of the valve main body 2314.

The blocking member 2322 is configured to block the gas inlet 2312 under the action of the elastic member 2321 and configured to open the gas inlet 2312 under the action of gas inside the housing 21. That is, the elastic member 2321 can provide an elastic force to the blocking member 2322, enabling the blocking member 2322 to abut against the cavity bottom surface of the mounting cavity 2311 to block the gas inlet 2312. Conversely, when the force exerted by the gas inside the housing 21 on the blocking member 2322 is greater than the elastic force of the elastic member 2321, the gas inside the housing 21 can overcome the elastic force of the elastic member 2321 and push the blocking member 2322 to separate from the cavity bottom surface of the mounting cavity 2311, enabling the blocking member 2322 to open the gas inlet 2312, thereby allowing gas inside the housing 21 to enter the mounting cavity 2311 through the gas inlet 2312 and then be discharged through the gas outlet 2313.

Optionally, the elastic member 2321 is a component with elasticity, and may be of various structures, such as an elastic sheet, a spring, or elastic rubber.

The valve core 232 of the one-way valve 23 is provided with an elastic member 2321 and a blocking member 2322, and both the elastic member 2321 and the blocking member 2322 are disposed within the mounting cavity 2311, enabling the elastic member 2321 to apply an elastic force to the blocking member 2322 to cause the blocking member 2322 to block the gas inlet 2312, preventing gas outside the housing 21 from entering the interior of the housing 21. Additionally, when the internal pressure of the housing 21 rises, gas inside the housing 21 can act on the blocking member 2322 and overcome the elastic force of the elastic member 2321, enabling the blocking member 2322 to open the gas inlet 2312, thereby allowing gas inside the housing 21 to be discharged through the one-way valve 23. In this way, the one-way valve 23 can discharge gas from inside the housing 21 to the exterior of the housing 21, and can also prevent gas outside the housing 21 from entering the interior of the housing 21.

In some embodiments, referring to FIG. 7 and FIG. 8, the elastic member 2321 is a spring. Certainly, in other embodiments, the elastic member 2321 may alternatively be an elastic sheet or elastic rubber.

It should be noted that a projection of the gas outlet 2313 in the thickness direction X of the wall portion may be located inside the spring or outside the spring. When there are multiple gas outlets 2313, projections of the multiple gas outlets 2313 in the thickness direction X of the wall portion may all fall within the interior of the spring or surround the exterior of the spring, or certainly, in some embodiments, some may be inside the spring and some may be outside the spring.

The spring is arranged along the thickness direction X of the wall portion, two ends of the spring respectively abut against the blocking member 2322 and the valve cover 2315, and the spring is in a compressed state between the valve cover 2315 and the blocking member 2322, enabling the spring to apply an elastic force to the blocking member 2322, thereby causing the blocking member 2322 to abut against the cavity bottom surface of the mounting cavity 2311 to block the gas inlet 2312.

Optionally, a compression margin of the elastic member 2321 in a compressed state between the valve cover 2315 and the blocking member 2322 is greater than or equal to 0.5 mm, which ensures that the elastic member 2321 has sufficient compression margin for the blocking member 2322 to move along the thickness direction X of the wall portion, enabling the blocking member 2322 to open the gas inlet 2312. If the elastic member 2321 is a spring, a sum of gaps between coils of the spring in the thickness direction X of the wall portion is greater than or equal to 0.5 mm.

A spring is used as the elastic member 2321 disposed within the mounting cavity 2311, which facilitates the assembly of the elastic member 2321, reducing the difficulty of assembling the elastic member 2321 in the mounting cavity 2311. This also ensures that the direction of the elastic force applied by the elastic member 2321 to the blocking member 2322 is relatively stable.

In some embodiments, a material of the elastic member 2321 includes steel, iron, or aluminum. The elastic member 2321 made of steel, iron, or aluminum provides good toughness and mitigates the phenomenon of elastic failure of the elastic member 2321, improving the service life of the elastic member 2321.

According to some embodiments of this application, referring to FIG. 5, FIG. 7, and FIG. 8, along the thickness direction X of the wall portion, the valve cover 2315 and the blocking member 2322 are spaced apart, the two ends of the elastic member 2321 respectively abut against the valve cover 2315 and the blocking member 2322, and the gas inlet 2312 is disposed on the cavity bottom surface of the mounting cavity 2311.

Along the thickness direction X of the wall portion, the valve cover 2315 faces the cavity bottom surface of the mounting cavity 2311, and the elastic member 2321 is disposed between the valve cover 2315 and the blocking member 2322, enabling the blocking member 2322 to abut against the cavity bottom surface of the mounting cavity 2311 under the action of the elastic member 2321, thereby blocking the gas inlet 2312. Certainly, if the gas inlet 2312 is disposed on the cavity wall surface of the mounting cavity 2311, that is, the gas inlet 2312 is disposed on a side of the valve main body 2314 in the radial direction of the valve main body 2314, the blocking member 2322 and the elastic member 2321 are arranged along the radial direction of the valve main body 2314, and the two ends of the elastic member 2321 respectively abut against the blocking member 2322 and the cavity wall surface of the mounting cavity 2311.

Optionally, the blocking member 2322 may be of various structures. In FIG. 7 and FIG. 8, the blocking member 2322 includes a pressing portion 2322a and a sealing portion 2322b, where a rigidity of the pressing portion 2322a is greater than a rigidity of the sealing portion 2322b. Along the thickness direction X of the wall portion, the sealing portion 2322b is connected to a side of the pressing portion 2322a facing away from the valve cover 2315, the sealing portion 2322b is configured to block the gas inlet 2312, and the elastic member 2321 is disposed between the valve cover 2315 and the pressing portion 2322a. The pressing portion 2322a can press against the sealing portion 2322b under the elastic force of the elastic member 2321, enabling the sealing portion 2322b to abut against the cavity wall surface of the mounting cavity 2311, thereby blocking the gas inlet 2312 through the sealing portion 2322b. Certainly, in other embodiments, the blocking member 2322 may be a sealing component as a whole, such as a rubber pad or a silicone pad. That is, the blocking member 2322 includes only the sealing portion 2322b, and the two ends of the elastic member 2321 respectively abut against the valve cover 2315 and the sealing portion 2322b.

The valve cover 2315 and the blocking member 2322 are arranged as spaced apart along the thickness direction X of the wall portion, so that the two ends of the elastic member 2321 can respectively abut against the valve cover 2315 and the blocking member 2322, enabling the blocking member 2322 to block the gas inlet 2312 disposed on the cavity bottom surface of the mounting cavity 2311 along the thickness direction X of the wall portion under the action of the elastic member 2321. In other words, the gas inlet 2312 is disposed at the end of the valve main body 2314 facing the electrode assembly 22 in the thickness direction X of the wall portion, and the blocking member 2322 can move along the thickness direction X of the wall portion under the action of the elastic member 2321 to block the gas inlet 2312. The one-way valve 23 in such structure allows the elastic member 2321 to apply an elastic force to the blocking member 2322 to cause the blocking member 2322 to block the gas inlet 2312, and also reduces the assembly difficulty of the elastic member 2321.

According to some embodiments of this application, referring to FIG. 7 and FIG. 8, a first guide post 2315b is protrudingly provided on a side of the valve cover 2315 facing the blocking member 2322, and part of the elastic member 2321 sleeves an outer side of the first guide post 2315b.

The elastic member 2321 is a spring, part of the spring sleeves the outer side of the first guide post 2315b, and an end of the spring far from the blocking member 2322 abuts against a surface of the valve cover 2315 provided with the first guide post 2315b, that is, the first guide post 2315b is inserted into the spring.

For example, a central axis of the first guide post 2315b coincides with a central axis of the mounting hole 2111, and a central axis of the elastic member 2321 coincides with the central axis of the first guide post 2315b.

The first guide post 2315b is protrudingly provided on the side of the valve cover 2315 facing the blocking member 2322, and part of the elastic member 2321 sleeves the outer side of the first guide post 2315b. The one-way valve 23 in such structure can provide a positioning effect for the elastic member 2321 through the first guide post 2315b, facilitating the assembly of the elastic member 2321 and reducing the assembly difficulty of the elastic member 2321. Additionally, the first guide post 2315b can provide a guidance effect when the elastic member 2321 is compressed along the thickness direction X of the wall portion, reducing radial deformation of the elastic member 2321 during compression. This allows the elastic member 2321 to be stably compressed along the thickness direction X of the wall portion, which is beneficial to improving the reliability of the elastic member 2321, thereby reducing the risk of the blocking member 2322 mistakenly opening the gas inlet 2312.

It should be noted that in an embodiment where the valve cover 2315 is protrudingly provided with a first guide post 2315b and the gas outlet 2313 is a first through hole provided on the valve cover 2315, the valve cover 2315 may be of various structures. For example, referring to FIG. 6, FIG. 7, and FIG. 8, the valve cover 2315 is connected to the valve main body 2314, the gas outlet 2313 is a first through hole provided on the valve cover 2315, and along the radial direction of the first guide post 2315b, the gas outlet 2313 is spaced apart from the first guide post 2315b.

The gas outlet 2313 is spaced apart from the first guide post 2315b, that is, the gas outlet 2313 is located on the outer side of the first guide post 2315b. For example, in FIG. 7 and FIG. 8, three gas outlets 2313 are provided, the three gas outlets 2313 are spaced apart along a circumferential direction of the first guide post 2315b, the three gas outlets 2313 are arranged on the outer side of the first guide post 2315b, and the three gas outlets 2313 are arranged around the central axis of the mounting hole 2111. Certainly, in other embodiments, the number of gas outlets 2313 may be two, four, five, or the like.

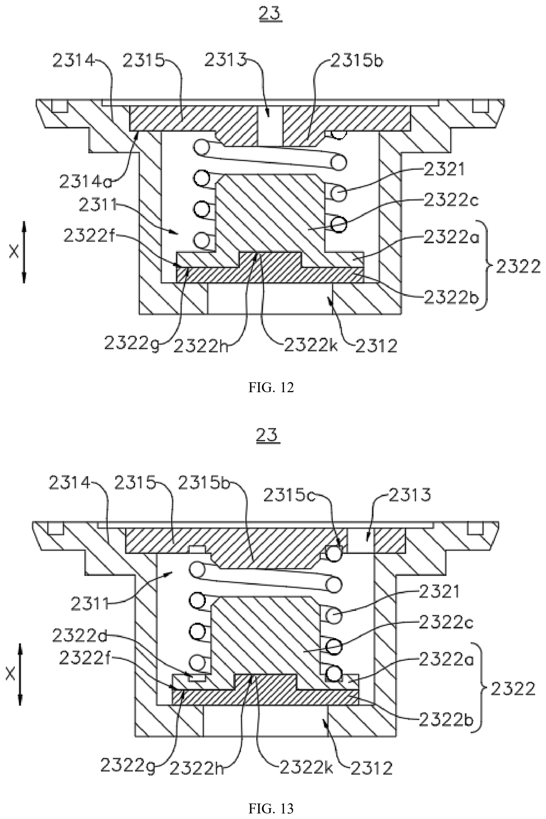

In some embodiments, the valve cover 2315 may be of other structures. For example, referring to FIG. 11 and FIG. 12, FIG. 11 is a schematic structural diagram of a one-way valve 23 according to still some embodiments of this application, and FIG. 12 is a cross-sectional view of a one-way valve 23 according to still some embodiments of this application. Along the thickness direction X of the wall portion, the gas outlet 2313 extends through the first guide post 2315b, that is, the gas outlet 2313 is provided at a position of the valve cover 2315 where the first guide post 2315b is located. In other words, the gas outlet 2313 extends into the first guide post 2315b and runs through the first guide post 2315b along the thickness direction X of the wall portion.

For example, in FIG. 11 and FIG. 12, the valve cover 2315 is provided with one gas outlet 2313, and a central axis of the gas outlet 2313 coincides with the central axis of the first guide post 2315b.

The gas outlet 2313 is arranged as a first through hole provided on the valve cover 2315, and the first through hole extends through the first guide post 2315b along the thickness direction X of the wall portion, so that the gas outlet 2313 is located inside the elastic member 2321, reducing the interference of the gas outlet 2313 on the connection of the valve cover 2315 and the valve main body 2314. Similarly, the gas outlet 2313 is arranged as a first through hole provided on the valve cover 2315, and the gas outlet 2313 is located on the outer side of the first guide post 2315b, which facilitates gas discharge, reducing the phenomenon of the gas outlet 2313 being blocked by the blocking member 2322.

According to some embodiments of this application, referring to FIG. 8, a diameter of the first guide post 2315b is denoted as D₁, and an inner diameter of the elastic member 2321 is denoted as D₂, satisfying 0 mm < D₂ - D₁ ≤ 5 mm.

The elastic member 2321 is a spring, and the inner diameter D₂ of the elastic member 2321 is a diameter of the cavity formed on the inner side of the spring.

0 mm < D₂ - D₁ ≤ 5 mm means that when the first guide post 2315b and the elastic member 2321 are coaxially arranged, a gap between the first guide post 2315b and the elastic member 2321 is greater than 0 mm and less than or equal to 5 mm.

For example, a difference between the inner diameter of the elastic member 2321 and the diameter of the first guide post 2315b may be 0 mm, 0.1 mm, 0.2 mm, 0.5 mm, 0.8 mm, 1 mm, 1.2 mm, 1.5 mm, 2 mm, 2.5 mm, 3 mm, 3.5 mm, 4 mm, 4.5 mm, 5 mm, or the like.

The difference between the inner diameter of the elastic member 2321 and the diameter of the first guide post 2315b is set to be greater than 0 mm and less than or equal to 5 mm. This mitigates the difficulty of assembling the elastic member 2321 onto the first guide post 2315b caused by a difference between the inner diameter of the elastic member 2321 and the diameter of the first guide post 2315b being less than or equal to 0, reducing scratches during the process of sleeving the first guide post 2315b with the elastic member 2321. This also mitigates the issue of excessive gap between the elastic member 2321 and the first guide post 2315b caused by an overly large difference between the inner diameter of the elastic member 2321 and the diameter of the first guide post 2315b, reducing radial movement or deformation of the elastic member 2321. This improves the uniformity of the elastic force applied by the elastic member 2321 to the blocking member 2322, reducing the risk of the blocking member 2322 inadvertently opening the gas inlet 2312.

According to some embodiments of this application, referring to FIG. 13, FIG. 13 is a cross-sectional view of a one-way valve 23 according to further some embodiments of this application. A first limiting groove 2315c is provided on a side of the valve cover 2315 facing the blocking member 2322, and an end of the elastic member 2321 far from the blocking member 2322 is inserted into the first limiting groove 2315c.

The valve cover 2315 is provided with a first limiting groove 2315c on the side facing the blocking member 2322, that is, the first limiting groove 2315c is provided on the surface of the valve cover 2315 facing the blocking member 2322 in the thickness direction X of the wall portion. In an embodiment where a first guide post 2315b is protrudingly provided on the side of the valve cover 2315 facing the blocking member 2322, the first limiting groove 2315c is provided on the surface of the valve cover 2315 on which the first guide post 2315b is protrudingly provided.

An end of the elastic member 2321 far from the blocking member 2322 is inserted into the first limiting groove 2315c, that is, the end of the elastic member 2321 far from the blocking member 2322 abuts against the groove bottom surface of the first limiting groove 2315c.

For example, the elastic member 2321 is a spring, and correspondingly, the first limiting groove 2315c is an annular groove structure. In an embodiment where a first guide post 2315b is protrudingly provided on the side of the valve cover 2315 facing the blocking member 2322, the first limiting groove 2315c surrounds the outer side of the first guide post 2315b.

The first limiting groove 2315c for inserting the elastic member 2321 is also provided on the side of the valve cover 2315 facing the blocking member 2322, so that the end of the elastic member 2321 abutting against the valve cover 2315 can be limited, reducing relative radial sliding between the elastic member 2321 and the valve cover 2315. This improves the uniformity of the elastic force applied by the elastic member 2321 to the blocking member 2322, enhancing the reliability of the elastic member 2321.

According to some embodiments of this application, the end of the elastic member 2321 far from the blocking member 2322 is fixedly connected to the valve cover 2315.

The elastic member 2321 and the valve cover 2315 may be fixedly connected in various structures, such as by welding or adhesion.

It should be noted that in an embodiment where the valve cover 2315 is provided with a first limiting groove 2315c on the side facing the blocking member 2322, and the end of the elastic member 2321 far from the blocking member 2322 is inserted into the first limiting groove 2315c, the end of the elastic member 2321 far from the blocking member 2322 is fixedly connected to the groove bottom surface of the first limiting groove 2315c. In an embodiment where no first limiting groove 2315c is provided on the side of the valve cover 2315 facing the blocking member 2322, the end of the elastic member 2321 far from the blocking member 2322 is fixedly connected to the surface of the valve cover 2315 that it abuts against.

The end of the elastic member 2321 far from the blocking member 2322 is fixedly connected to the valve cover 2315, so that the end of the elastic member 2321 abutting against the valve cover 2315 and the valve cover 2315 form a mutually fixed connection structure. This enhances the stability of the elastic member 2321 abutting against the valve cover 2315, and further reduces relative sliding between the elastic member 2321 and the valve cover 2315, further improving the uniformity of the elastic force applied by the elastic member 2321 to the blocking member 2322.

According to some embodiments of this application, referring to FIG. 5, FIG. 7, and FIG. 8, a second guide post 2322c is protrudingly provided on a side of the blocking member 2322 facing the valve cover 2315, and part of the elastic member 2321 sleeves an outer side of the second guide post 2322c.

The elastic member 2321 is a spring, part of the spring sleeves the outer side of the second guide post 2322c, and an end of the spring far from the valve cover 2315 abuts against the surface of the blocking member 2322 on which the second guide post 2322c is protrudingly provided, that is, the second guide post 2322c is inserted into the spring.

For example, a central axis of the second guide post 2322c coincides with the central axis of the mounting hole 2111, and the central axis of the elastic member 2321 coincides with the central axis of the second guide post 2322c.

For example, in an embodiment where the blocking member 2322 includes a pressing portion 2322a and a sealing portion 2322b, referring to FIG. 7 and FIG. 8, the second guide post 2322c is protrudingly provided on a surface of the pressing portion 2322a facing the valve cover 2315.

The second guide post 2322c is protrudingly provided on the side of the blocking member 2322 facing the valve cover 2315, and part of the elastic member 2321 sleeves the outer side of the second guide post 2322c. The one-way valve 23 in such structure can provide a positioning effect for the elastic member 2321 through the second guide post 2322c, facilitating the assembly of the elastic member 2321 and reducing the assembly difficulty of the elastic member 2321. Additionally, the second guide post 2322c can provide a guidance effect when the elastic member 2321 is compressed along the thickness direction X of the wall portion, reducing radial deformation of the elastic member 2321 during compression. This allows the elastic member 2321 to be stably compressed along the thickness direction X of the wall portion, which is beneficial to improving the reliability of the elastic member 2321, thereby reducing the risk of the blocking member 2322 mistakenly opening the gas inlet 2312.

According to some embodiments of this application, referring to FIG. 8, a diameter of the second guide post 2322c is denoted as D₃, and the inner diameter of the elastic member 2321 is denoted as D₂, satisfying 0 mm < D₃ - D₁ ≤ 5 mm.

The elastic member 2321 is a spring, and the inner diameter D₂ of the elastic member 2321 is a diameter of a cavity formed on an inner side of the spring.

0 mm < D₃ - D₁≤ 5 mm means that when the second guide post 2322c and the elastic member 2321 are coaxially arranged, a gap between the second guide post 2322c and the elastic member 2321 is greater than 0 mm and less than or equal to 5 mm.

For example, the difference between the inner diameter of the elastic member 2321 and the diameter of the second guide post may be 0 mm, 0.1 mm, 0.2 mm, 0.5 mm, 0.8 mm, 1 mm, 1.2 mm, 1.5 mm, 2 mm, 2.5 mm, 3 mm, 3.5 mm, 4 mm, 4.5 mm, 5 mm, or the like.

The difference between the inner diameter of the elastic member 2321 and the diameter of the second guide post 2322c is set to be greater than 0 mm and less than or equal to 5 mm. This mitigates the difficulty of assembling the elastic member 2321 onto the second guide post 2322c caused by a difference between the inner diameter of the elastic member 2321 and the diameter of the second guide post 2322c being less than or equal to 0, reducing scratches during the process of sleeving the second guide post 2322c with the elastic member 2321. This also mitigates the issue of excessive gap between the elastic member 2321 and the second guide post 2322c caused by an overly large difference between the inner diameter of the elastic member 2321 and the diameter of the second guide post 2322c, reducing radial movement or deformation of the elastic member 2321. This improves the uniformity of the elastic force applied by the elastic member 2321 to the blocking member 2322, reducing the risk of the blocking member 2322 inadvertently opening the gas inlet 2312.

According to some embodiments of this application, referring to FIG. 13, a second limiting groove 2322d is provided on the side of the blocking member 2322 facing the valve cover 2315, and an end of the elastic member 2321 far from the valve cover 2315 is inserted into the second limiting groove 2322d.

The blocking member 2322 is provided with a second limiting groove 2322d on the side facing the valve cover 2315, that is, the second limiting groove 2322d is provided on the surface of the blocking member 2322 facing the valve cover 2315 in the thickness direction X of the wall portion. In an embodiment where a second guide post 2322c is protrudingly provided on the side of the blocking member 2322 facing the valve cover 2315, the second limiting groove 2322d is provided on the surface of the blocking member 2322 on which the second guide post 2322c is protrudingly provided.

The end of the elastic member 2321 far from the valve cover 2315 is inserted into the second limiting groove 2322d, that is, the end of the elastic member 2321 far from the valve cover 2315 abuts against a groove bottom surface of the second limiting groove 2322d.

For example, the elastic member 2321 is a spring, and correspondingly, the second limiting groove 2322d is an annular groove structure. In an embodiment where a second guide post 2322c is protrudingly provided on the side of the blocking member 2322 facing the valve cover 2315, the second limiting groove 2322d is disposed around an outer side of the second guide post 2322c.

For example, in an embodiment where the blocking member 2322 includes a pressing portion 2322a and a sealing portion 2322b, referring to FIG. 7 and FIG. 8, the second limiting groove 2322d is provided on a surface of the pressing portion 2322a facing the valve cover 2315.

The second limiting groove 2322d for inserting the elastic member 2321 is provided on the side of the blocking member 2322 facing the valve cover 2315, so that the end of the elastic member 2321 abutting against the blocking member 2322 can be limited, reducing relative radial sliding between the elastic member 2321 and the blocking member 2322. This improves the uniformity of the elastic force applied by the elastic member 2321 to the blocking member 2322, enhancing the reliability of the elastic member 2321.

According to some embodiments of this application, the end of the elastic member 2321 far from the valve cover 2315 is fixedly connected to the blocking member 2322.

The elastic member 2321 and the blocking member 2322 may be fixedly connected in various structures, such as by welding or adhesion.

It should be noted that in an embodiment where the blocking member 2322 is provided with a second limiting groove 2322d on the side facing the valve cover 2315, and the end of the elastic member 2321 far from the valve cover 2315 is inserted into the second limiting groove 2322d, the end of the elastic member 2321 far from the valve cover 2315 is fixedly connected to the groove bottom surface of the second limiting groove 2322d. In an embodiment where the blocking member 2322 is not provided with a second limiting groove 2322d on the side facing the valve cover 2315, the end of the elastic member 2321 far from the valve cover 2315 is fixedly connected to the surface of the blocking member 2322 that it abuts against.

The end of the elastic member 2321 far from the valve cover 2315 is fixedly connected to the blocking member 2322, so that the end of the elastic member 2321 abutting against the blocking member 2322 and the blocking member 2322 form a mutually fixed connection structure. This can enhance the stability of the elastic member 2321 abutting against the blocking member 2322, and further reduce relative sliding between the elastic member 2321 and the blocking member 2322, further improving the uniformity of the elastic force applied by the elastic member 2321 to the blocking member 2322.

According to some embodiments of this application, referring to FIG. 7 and FIG. 8, the blocking member 2322 is spaced apart from a cavity side surface of the mounting cavity 2311.

The blocking member 2322 is spaced apart from the cavity side surface of the mounting cavity 2311, that is, a gap is present between the blocking member 2322 and the cavity side surface of the mounting cavity 2311. In other words, the blocking member 2322 does not abut against the cavity side surface of the mounting cavity 2311.

The blocking member 2322 is spaced apart from the cavity side surface of the mounting cavity 2311, which can reduce scratches between the blocking member 2322 and the cavity side surface of the mounting cavity 2311 when the blocking member 2322 moves along the thickness direction X of the wall portion to open or block the gas inlet 2312, thereby reducing the phenomenon of the blocking member 2322 becoming stuck or moving unsmoothly, and enhancing the reliability of the one-way valve 23.

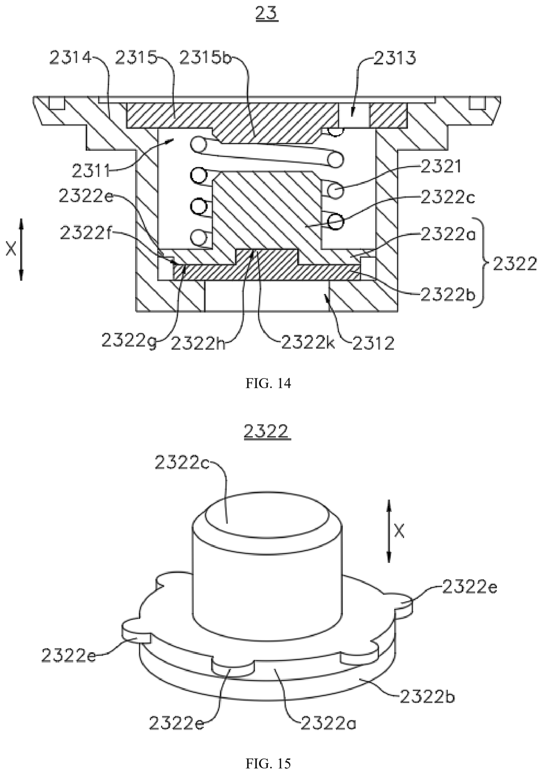

Certainly, the structure of the one-way valve 23 is not limited to this. For example, in some embodiments, referring to FIG. 14 and FIG. 15, FIG. 14 is a cross-sectional view of a one-way valve 23 according to yet some embodiments of this application, and FIG. 15 is a schematic structural diagram of a blocking member 2322 of a one-way valve 23 according to yet some embodiments of this application. Multiple limiting protrusions 2322e are protrudingly provided on the outer peripheral surface of the blocking member 2322, the multiple limiting protrusions 2322e are spaced apart along the circumferential direction of the blocking member 2322, and the limiting protrusions 2322e are in guiding fit with a cavity side surface of the mounting cavity 2311.

The limiting protrusions 2322e are in guiding fit with the cavity side surface of the mounting cavity 2311, that is, the limiting protrusions 2322e are configured to cooperate with the wall surface of the mounting cavity 2311 to provide guidance and limitation effects when the blocking member 2322 moves along the thickness direction X of the wall portion.

For example, in FIG. 14, the protrusion 2322e is configured to abut against the wall surface of the mounting cavity 2311 when the blocking member 2322 moves along the thickness direction X of the wall portion, providing guidance and limitation effects. Certainly, in other embodiments, the one-way valve 23 may be of other structures. For example, a guide groove extending along the thickness direction X of the wall portion is provided on the cavity side surface of the mounting cavity 2311, the limiting protrusions 2322e extend into the guide groove, and the limiting protrusions 2322e can move in the guide groove along the thickness direction X when the blocking member 2322 opens the gas inlet 2312, providing guidance and limitation effects. The guide groove extending along the thickness direction X of the wall portion may be provided in plurality, the multiple guide grooves respectively cooperating with the multiple limiting protrusions 2322e.

For example, in an embodiment where the blocking member 2322 includes a pressing portion 2322a and a sealing portion 2322b, referring to FIG. 7 and FIG. 8, the limiting protrusions 2322e are protrudingly provided on the outer peripheral surface of the pressing portion 2322a.

Optionally, the limiting protrusions 2322e may be of various shape, such as semicircular, triangular, trapezoidal, or rectangular. For example, in FIG. 15, the shape of the limiting protrusions 2322e is semicircular.

Multiple spaced-apart limiting protrusions 2322e are protrudingly provided on the outer peripheral surface of the blocking member 2322, and the limiting protrusions 2322e are in guiding fit with the cavity side surface of the mounting cavity 2311, so that when the blocking member 2322 moves along the thickness direction X of the wall portion, guidance and limitation effects can be implemented through the cooperation between the limiting protrusions 2322e and the cavity side surface of the mounting cavity 2311, enhancing the movement stability of the blocking member 2322 along the thickness direction X of the wall portion.

According to some embodiments of this application, referring to FIG. 7 and FIG. 8, the blocking member 2322 may include a pressing portion 2322a and a sealing portion 2322b. Along the thickness direction X of the wall portion, the two ends of the elastic member 2321 respectively abut against the valve cover 2315 and the pressing portion 2322a; the sealing portion 2322b is connected to a side of the pressing portion 2322a facing away from the valve cover 2315; and the sealing portion 2322b is configured to block the gas inlet 2312.

The two ends of the elastic member 2321 respectively abut against the valve cover 2315 and the pressing portion 2322a, and the sealing portion 2322b is connected to the side of the pressing portion 2322a facing away from the valve cover 2315, that is, the elastic member 2321 is disposed between the valve cover 2315 and the pressing portion 2322a along the thickness direction X of the wall portion. This allows the elastic member 2321 to apply an elastic force to the pressing portion 2322a, so that the pressing portion 2322a can press against the sealing portion 2322b, thereby blocking the gas inlet 2312 through the sealing portion 2322b.

Optionally, a rigidity of the pressing portion 2322a is greater than a rigidity of the sealing portion 2322b, that is, a deformation resistance capability of the pressing portion 2322a is greater than a deformation resistance capability of the sealing portion 2322b, enabling the pressing portion 2322a to better press the sealing portion 2322b against the cavity bottom surface of the mounting cavity 2311 to block the gas inlet 2312. For example, the pressing portion 2322a may be made of various materials, such as steel, iron, or aluminum. Similarly, the sealing portion 2322b may also be made of various materials, such as rubber, silicone, or plastic.

Optionally, the pressing portion 2322a and the sealing portion 2322b may be connected in various structures, such as by snap-fitting, bolting, or adhesion.

The blocking member 2322 includes a pressing portion 2322a and a sealing portion 2322b, the pressing portion 2322a is disposed on the side of the sealing portion 2322b facing the valve cover 2315, the sealing portion 2322b is configured to block the gas inlet 2312, and the two ends of the elastic member 2321 respectively abut against the valve cover 2315 and the pressing portion 2322a, so that the elastic member 2321 can apply an elastic force to the sealing portion 2322b through the pressing portion 2322a. This improves the uniformity of the elastic force applied by the elastic member 2321 on the sealing portion 2322b, effectively enhancing the blocking effect of the sealing portion 2322b on the gas inlet 2312.

According to some embodiments of this application, still referring to FIG. 7 and FIG. 8, the pressing portion 2322a has a first abutting surface 2322f facing the sealing portion 2322b, the sealing portion 2322b has a second abutting surface 2322g facing the pressing portion 2322a, one of the first abutting surface 2322f and the second abutting surface 2322g is provided with a clamping groove 2322h, and the other is provided with a clamping portion 2322k, the clamping portion 2322k being in clamping fit with the clamping groove 2322h.

The first abutting surface 2322f of the pressing portion 2322a and the second abutting surface 2322g of the sealing portion 2322b abut against each other, and both the first abutting surface 2322f and the second abutting surface 2322g are planes perpendicular to the thickness direction X of the wall portion.

One of the first abutting surface 2322f and the second abutting surface 2322g is provided with a clamping groove 2322h, and the other is provided with a clamping portion 2322k, the clamping portion 2322k being in clamping fit the clamping groove 2322h. That is, the clamping groove 2322h may be provided on the first abutting surface 2322f of the pressing portion 2322a, or may be provided on the second abutting surface 2322g of the sealing portion 2322b. For example, in FIG. 8, the clamping portion 2322k is protrudingly provided on the second abutting surface 2322g of the sealing portion 2322b, the clamping groove 2322h is provided on the first abutting surface 2322f of the pressing portion 2322a, and the clamping portion 2322k is clamped into the clamping groove 2322h.

For example, the clamping portion 2322k is a circular columnar structure, and correspondingly, the clamping groove 2322h is a circular groove.

The pressing portion 2322a and the sealing portion 2322b have a first abutting surface 2322f and a second abutting surface 2322g facing each other. One of the first abutting surface 2322f and the second abutting surface 2322g is provided with a clamping groove 2322h, and the other is correspondingly provided with a clamping portion 2322k in clamping fit with the clamping groove 2322h, enhancing the structural stability of the sealing portion 2322b mounted on the pressing portion 2322a, and reducing radial sliding of the sealing portion 2322b relative to the pressing portion 2322a. This improves the blocking effect of the sealing portion 2322b on the gas inlet 2312, reducing the phenomenon of the gas inlet 2312 being mistakenly opened.

In some embodiments, the sealing portion 2322b is adhered to the pressing portion 2322a.

The sealing portion 2322b and the pressing portion 2322a are connected through adhesion. This can enhance the structural stability of the sealing portion 2322b connected to the pressing portion 2322a, reducing the risk of the sealing portion 2322b detaching from the pressing portion 2322a, thereby improving the reliability of the sealing portion 2322b in sealing the gas inlet 2312. This also facilitates the assembly connection between the sealing portion 2322b and the pressing portion 2322a, reducing the assembly difficulty between the sealing portion 2322b and the pressing portion 2322a.

In some embodiments, a material of the sealing portion 2322b includes ethylene propylene diene monomer, fluororubber, or polytetrafluoroethylene.

The sealing portion 2322b made of ethylene propylene diene monomer, fluororubber, or polytetrafluoroethylene provides the sealing portion 2322b with good corrosion resistance, effectively mitigating corrosion of the sealing portion 2322b by the electrolyte, thereby improving the service life of the sealing portion 2322b. This also reduces the phenomenon that the sealing portion 2322b has poor blocking effect on the gas inlet 2312 caused by corrosion of the sealing portion 2322b.

According to some embodiments of this application, referring to FIG. 8, along the thickness direction X of the wall portion, a dimension of a gap between the valve cover 2315 and the blocking member 2322 is denoted as L, satisfying 0 mm < L ≤ 2 mm.

The dimension of the gap between the valve cover 2315 and the blocking member 2322 is denoted as L, that is, a distance between the valve cover 2315 and the blocking member 2322 in the thickness direction X of the wall portion is L.

For example, the dimension L of the gap between the valve cover 2315 and the blocking member 2322 may be 0 mm, 0.1 mm, 0.2 mm, 0.3 mm, 0.4 mm, 0.5 mm, 0.6 mm, 0.7 mm, 0.8 mm, 0.9 mm, 1 mm, 1.2 mm, 1.5 mm, 1.8 mm, 2 mm, or the like.

It should be noted that in an embodiment where the valve cover 2315 is protrudingly provided with a first guide post 2315b and the blocking member 2322 is protrudingly provided with a second guide post 2322c, L is the dimension of the gap formed between the first guide post 2315b and the second guide post 2322c in the thickness direction X of the wall portion. In an embodiment where the valve cover 2315 is protrudingly provided with a first guide post 2315b but the blocking member 2322 is not provided with a second guide post 2322c, L is the dimension of the gap formed between the first guide post 2315b and the surface of the blocking member 2322 facing the valve cover 2315 in the thickness direction X of the wall portion. In an embodiment where the valve cover 2315 is not provided with a first guide post 2315b but the blocking member 2322 is protrudingly provided with a second guide post 2322c, L is the dimension of the gap formed between the second guide post 2322c and the surface of the valve cover 2315 facing the blocking member 2322 in the thickness direction X of the wall portion.

The dimension of the gap between the valve cover 2315 and the blocking member 2322 in the thickness direction X of the wall portion is set to be greater than 0 mm and less than or equal to 2 mm. This can reduce the obstruction of the valve cover 2315 on the blocking member 2322, providing a space between the valve cover 2315 and the blocking member 2322 for the blocking member 2322 to move along the thickness direction X of the wall portion, enabling the blocking member 2322 to open the gas inlet 2312 for gas discharge when the blocking member 2322 is pushed by gas inside the housing 21. This can also mitigate the issue of excessive space occupied by the one-way valve 23 in the thickness direction X of the wall portion due to an overly large gap between the valve cover 2315 and the blocking member 2322, thereby improving the space utilization of the battery cell 20.

According to some embodiments of this application, referring to FIG. 5, the valve main body 2314 is welded to the wall portion 211.

The wall portion 211 is provided with a mounting hole 2111 for mounting the valve main body 2314, and the valve main body 2314 is welded to a wall surface of the mounting hole 2111. Certainly, in other embodiments, the valve main body 2314 may also be welded to the surface of the wall portion 211 facing away from the electrode assembly 22 or welded to the surface of the wall portion 211 facing the electrode assembly 22.

The valve main body 2314 is welded to the wall portion 211, which can effectively enhance the structural stability and structural strength of the valve main body 2314 connected to the wall portion 211, reducing the risk of the valve main body 2314 detaching from the wall portion 211 during use.

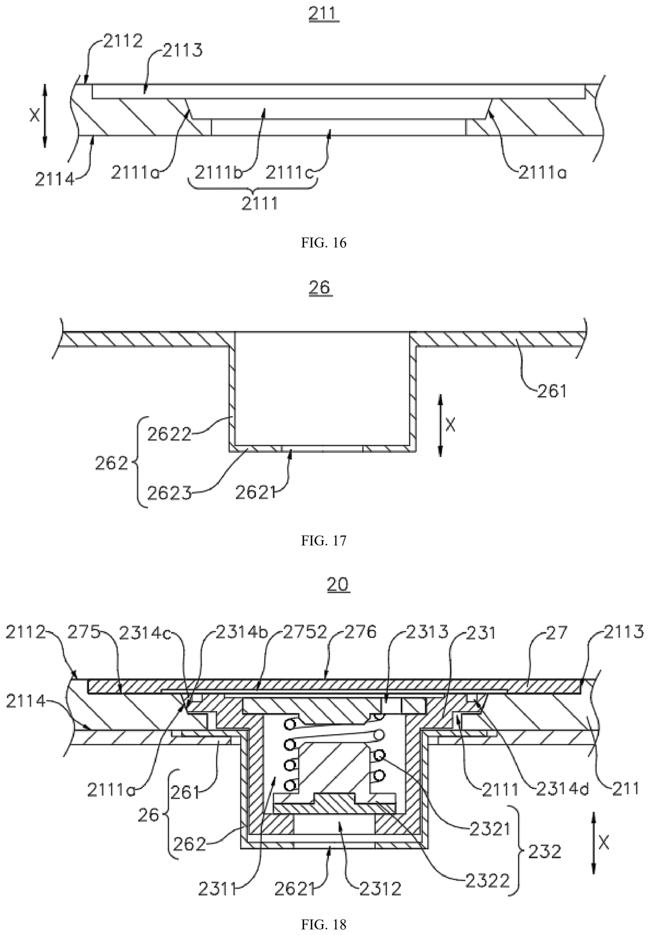

According to some embodiments of this application, referring to FIG. 5, FIG. 7, and FIG. 8, and further referring to FIG. 16, FIG. 16 is a partial cross-sectional view of a wall portion 211 of a housing 21 of a battery cell 20 according to some embodiments of this application. The wall portion 211 is provided with a mounting hole 2111, at least part of the valve main body 2314 is accommodated within the mounting hole 2111, a wall surface of the mounting hole 2111 includes a first connection surface 2111a, and the valve main body 2314 includes a second connection surface 2314b, where both the first connection surface 2111a and the second connection surface 2314b are arranged around a central axis of the mounting hole 2111, and the first connection surface 2111a is welded to the second connection surface 2314b.

The mounting hole 2111 provided on the wall portion 211 connects the interior and exterior of the housing 21, and at least part of the valve main body 2314 is accommodated within the mounting hole 2111, that is, the valve main body 2314 of the valve body 231 of the one-way valve 23 may be entirely located within the mounting hole 2111 or only partially located within the mounting hole 2111. For example, in FIG. 5, part of the valve main body 2314 is located within the mounting hole 2111, and the valve main body 2314 protrudes beyond the surface of the wall portion 211 facing the electrode assembly 22 along the thickness direction X of the wall portion.

The wall surface of the mounting hole 2111 includes a first connection surface 2111a, the valve main body 2314 includes a second connection surface 2314b, and the first connection surface 2111a is welded to the second connection surface 2314b, that is, the portion of the valve main body 2314 located within the mounting hole 2111 is welded to the wall surface of the mounting hole 2111.

Both the first connection surface 2111a and the second connection surface 2314b are arranged around the central axis of the mounting hole 2111, that is, both the first connection surface 2111a and the second connection surface 2314b are annular structures, and the central axes of the first connection surface 2111a and the second connection surface 2314b are collinear with the central axis of the mounting hole 2111, so that the first connection surface 2111a and the second connection surface 2314b are welded together to form an annular weld.

The wall portion 211 is provided with a mounting hole 2111 for accommodating the valve main body 2314 of the valve body 231, and the valve main body 2314 has a second connection surface 2314b, and the second connection surface 2314b is welded to the first connection surface 2111a of the wall surface of the mounting hole 2111 to assemble the one-way valve 23 onto the wall portion 211. This structure, with the first connection surface 2111a and the second connection surface 2314b both being annularly arranged and welded together, can enhance the connection reliability between the valve main body 2314 and the wall portion 211, and can also improve the sealing effect between the valve main body 2314 and the wall surface of the mounting hole 2111.

According to some embodiments of this application, referring to FIG. 5, FIG. 8, and FIG. 16, the first connection surface 2111a and the second connection surface 2314b match each other, and both the first connection surface 2111a and the second connection surface 2314b are arranged at an acute angle relative to the central axis of the mounting hole 2111.

The first connection surface 2111a and the second connection surface 2314b match each other, that is, the first connection surface 2111a and the second connection surface 2314b have the same shape and abut against each other.

Both the first connection surface 2111a and the second connection surface 2314b are arranged at an acute angle to the central axis of the mounting hole 2111, that is, both the first connection surface 2111a and the second connection surface 2314b are inclined surfaces. In other words, in a cross-section of the valve main body 2314 parallel to the thickness direction X of the wall portion, the sectional lines formed by the first connection surface 2111a and the second connection surface 2314b are collinear and arranged at an acute angle to the thickness direction X of the wall portion.

For example, in FIG. 5 and FIG. 8, an end of the second connection surface 2314b far from the electrode assembly 22 in the thickness direction X of the wall portion is farther from the central axis of the mounting hole 2111 compared to an end of the second connection surface 2314b far from the electrode assembly 22 in the thickness direction X of the wall portion. Similarly, in FIG. 5 and FIG. 16, an end of the first connection surface 2111a far from the electrode assembly 22 in the thickness direction X of the wall portion is farther from the central axis of the mounting hole 2111 compared to an end of the first connection surface 2111a far from the electrode assembly 22 in the thickness direction X of the wall portion.

The first connection surface 2111a and the second connection surface 2314b are arranged as mutually matching structures, and both the first connection surface 2111a and the second connection surface 2314b are arranged at an acute angle to the central axis of the mounting hole 2111, so that the first connection surface 2111a and the second connection surface 2314b have the same shape and abut against each other, and both the first connection surface 2111a and the second connection surface 2314b are inclined structures. This facilitates the mutual abutment of the first connection surface 2111a and the second connection surface 2314b when the valve main body 2314 is assembled into the mounting hole 2111, enhances the tightness of the fit between the first connection surface 2111a and the second connection surface 2314b, and reduces the presence of a gap between the first connection surface 2111a and the second connection surface 2314b, thereby effectively improving the welding quality of the first connection surface 2111a and the second connection surface 2314b.

According to some embodiments of this application, still referring to FIG. 5, FIG. 8, and FIG. 16, the mounting hole 2111 includes a first hole segment 2111b and a second hole segment 2111c, where the first hole segment 2111b and the second hole segment 2111c are arranged along the thickness direction X of the wall portion, the first hole segment 2111b is located on a side of the second hole segment 2111c facing away from the electrode assembly 22, and a diameter of the first hole segment 2111b is greater than a diameter of the second hole segment 2111c. A wall surface of the first hole segment 2111b is the first connection surface 2111a, the valve main body 2314 has a connection portion 2314c located within the first hole segment 2111b, and an outer peripheral surface of the connection portion 2314c is the second connection surface 2314b.

The diameter of the first hole segment 2111b is greater than the diameter of the second hole segment 2111c, that is, the mounting hole 2111 is a stepped hole structure. The first hole segment 2111b is located on a side of the second hole segment 2111c facing away from the electrode assembly 22, that is, the mounting hole 2111 is a stepped hole structure with a gradually increasing diameter from an end close to the electrode assembly 22 to an end far from the electrode assembly 22.

The wall surface of the first hole segment 2111b is the first connection surface 2111a, the valve main body 2314 has the connection portion 2314c located within the first hole segment 2111b, and the outer peripheral surface of the connection portion 2314c is the second connection surface 2314b, that is, the valve main body 2314 of the valve body 231 has an annular connection portion 2314c extending along the circumferential direction of the first hole segment 2111b, the connection portion 2314c is accommodated within the first hole segment 2111b, and the outer peripheral surface of the connection portion 2314c is welded to the wall surface of the first hole segment 2111b.

For example, the outer peripheral surface of the connection portion 2314c is connected to the end face of the end of the valve main body 2314 far from the electrode assembly 22, that is, the second connection surface 2314b is connected to the end face of the end of the valve main body 2314 far from the electrode assembly 22.

The mounting hole 2111 is provided with a first hole segment 2111b and a second hole segment 2111c arranged along the thickness direction X of the wall portion, the first hole segment 2111b is located on the outer side of the second hole segment 2111c facing away from the electrode assembly 22, and the diameter of the first hole segment 2111b is greater than the diameter of the second hole segment 2111c, forming the mounting hole 2111 with a stepped hole structure. The wall surface of the first hole segment 2111b is arranged as the first connection surface 2111a, and the valve main body 2314 has a connection portion 2314c accommodated within the first hole segment 2111b, with the outer peripheral surface of the connection portion 2314c being the second connection surface 2314b, facilitating the assembly of the valve main body 2314 into the mounting hole 2111 from the outer side of the wall portion 211. This allows the first connection surface 2111a to abut against the second connection surface 2314b after the connection portion 2314c of the valve main body 2314 is accommodated within the first hole segment 2111b, so that the mounting hole 2111 with a stepped hole structure and the connection portion 2314c can cooperate to provide limitation and positioning effects for the valve main body 2314, reducing the difficulty of assembling the valve main body 2314 into the mounting hole 2111.

According to some embodiments of this application, referring to FIG. 5, FIG. 7, and FIG. 8, along the thickness direction X of the wall portion, an end face of the end of the valve main body 2314 facing away from the electrode assembly 22 is connected to the second connection surface 2314b, and a first stress relief groove 2314d is provided on the end face of the end of the valve main body 2314 facing away from the electrode assembly 22.

For example, the first stress relief groove 2314d is provided on the surface of the connection portion 2314c of the valve main body 2314 facing away from the electrode assembly 22.

It should be noted that in other embodiments, a second stress relief groove may be provided on the first surface 2112 or the second surface 2114 of the wall portion 211, where the second stress relief groove is an annular groove structure disposed around the mounting hole 2111 to absorb welding stress generated by welding of the valve main body 2314 and the wall portion 211. In some embodiments, both the first stress relief groove 2314d and the second stress relief groove may be disposed.

The first stress relief groove 2314d is provided on the end face of the valve main body 2314 facing away from the electrode assembly 22 along the thickness direction X of the wall portion, so that the first stress relief groove 2314d can release the welding stress generated by mutual welding of the first connection surface 2111a and the second connection surface 2314b. This reduces the impact of the welding stress on the weld seam between the first connection surface 2111a and the second connection surface 2314b, minimizes the risk of weld seam cracking, and reduces the risk of sealing failure at the weld seam.

In some embodiments, referring to FIG. 6, FIG. 7, and FIG. 8, the first stress relief groove 2314d is disposed around the central axis of the mounting hole 2111. In other words, the first stress relief groove 2314d is an annular groove structure. For example, the first stress relief groove 2314d is disposed around the outer side of the valve cover 2315.

The first stress relief groove 2314d is arranged as an annular structure disposed around the central axis of the mounting hole 2111, enhancing the absorption effect of the first stress relief groove 2314d on the welding stress generated by mutual welding of the annularly arranged first connection surface 2111a and second connection surface 2314b, further reducing the impact of the welding stress on other components of the one-way valve 23, such as the valve core 232.

According to some embodiments of this application, referring to FIG. 4 and FIG. 5, the battery cell 20 may further include an insulating member 26, the insulating member 26 being disposed on a side of the wall portion 211 facing the electrode assembly 22. Along the thickness direction X of the wall portion, the wall portion 211 has a second surface 2114 facing the electrode assembly 22, the one-way valve 23 protrudes beyond the second surface 2114, and the insulating member 26 includes a main body portion 261 and an accommodating portion 262, where the main body portion 261 is disposed on the side of the wall portion 211 facing the electrode assembly 22, the accommodating portion 262 is connected to the main body portion 261, and a portion of the one-way valve 23 extending into the interior of the housing 21 is accommodated within the accommodating portion 262.

The insulating member 26 is disposed on the side of the wall portion 211 facing the electrode assembly 22, and the insulating member 26 serves to separate the wall portion 211 from the electrode assembly 22, thereby insulatedly isolating the wall portion 211 from the electrode assembly 22.

For example, the insulating member 26 may be made of various materials, such as rubber, silicone, or plastic.

The wall portion 211 has a second surface 2114 facing the electrode assembly 22, and the one-way valve 23 protrudes beyond the second surface 2114, that is, the one-way valve 23 is disposed within the mounting hole 2111 and extends beyond the second surface 2114 along the thickness direction X of the wall portion. For example, in FIG. 5, the valve main body 2314 of the valve body 231 of the one-way valve 23 protrudes beyond the second surface 2114.

The portion of the one-way valve 23 extending into the interior of the housing 21 is accommodated within the accommodating portion 262, that is, an accommodating portion 262 is formed at a position of the insulating member 26 corresponding to the one-way valve 23, and the accommodating portion 262 covers an outer side of the portion of the one-way valve 23 protruding beyond the second surface 2114 of the wall portion 211.

Optionally, the main body portion 261 and the accommodating portion 262 of the insulating member 26 may be an integrally formed structure, or may be separate structures. When the main body portion 261 and the accommodating portion 262 are an integrally formed structure, the main body portion 261 and the accommodating portion 262 may be integrally formed through processes such as injection molding or milling. When the main body portion 261 and the accommodating portion 262 are separate structures, the accommodating portion 262 may be connected to the main body portion 261 through adhesion, clamping, or the like.

The battery cell 20 is further provided with an insulating member 26, the insulating member 26 includes a main body portion 261 and an accommodating portion 262 connected to each other, and the main body portion 261 is disposed on the side of the wall portion 211 facing the electrode assembly 22, allowing the main body portion 261 to insulatedly isolate the wall portion 211 from the electrode assembly 22. Additionally, the accommodating portion 262 accommodates the portion of the one-way valve 23 protruding beyond the second surface 2114 of the wall portion 211, providing clearance and protection for the one-way valve 23 while insulatedly isolating the electrode assembly 22 from the one-way valve 23, thereby reducing the risk of a short circuit between the one-way valve 23 and the electrode assembly 22.

According to some embodiments of this application, referring to FIG. 5, the one-way valve 23 includes a valve body 231, where along the thickness direction X of the wall portion, the valve body 231 protrudes beyond the second surface 2114, and a portion of the valve body 231 protruding beyond the second surface 2114 is provided with an gas inlet 2312, the gas inlet 2312 being configured to discharge gas from inside the housing 21. The accommodating portion 262 is provided with a second through hole 2621, the second through hole 2621 being connected to the gas inlet 2312.

The second through hole 2621 is provided on the accommodating portion 262, and the second through hole 2621 extends through the accommodating portion 262, so that the second through hole 2621 to connect the interior of the accommodating portion 262 and the interior of the housing 21. This allows the gas inlet 2312 of the valve body 231 of the one-way valve 23 to communicate with the interior of the housing 21 through the second through hole 2621.

The second through hole 2621 is provided on the accommodating portion 262, so that the second through hole 2621 can connect the interior of the housing 21 and the interior of the accommodating portion 262, allowing the gas inlet 2312 of the valve body 231 of the one-way valve 23 to communicate with the interior of the housing 21 through the second through hole 2621, allowing gas inside the housing 21 to enter the accommodating portion 262 through the second through hole 2621 and then be discharged through the one-way valve 23 to the exterior of the housing 21. This eliminates the need for gas to pass through a gap between the main body portion 261 and the wall portion 211 to enter the accommodating portion 262 before being discharged through the one-way valve 23, improving the smoothness of gas discharge from the interior of the housing 21 through the one-way valve 23.

According to some embodiments of this application, referring to FIG. 5 and further referring to FIG. 17, FIG. 17 is a partial cross-sectional view of an insulating member 26 of a battery cell 20 according to some embodiments of this application. Along the thickness direction X of the wall portion, the gas inlet 2312 is disposed at an end of the valve body 231 facing the electrode assembly 22. The accommodating portion 262 includes a first wall 2622 and a second wall 2623, the first wall 2622 surrounds the valve body 231, and along the thickness direction X of the wall portion, one end of the first wall 2622 is connected to the main body portion 261, the second wall 2623 is connected to an end of the first wall 2622 far from the main body portion 261, and the second through hole 2621 is provided on the second wall 2623.

Along the thickness direction X of the wall portion, the gas inlet 2312 is disposed at the end of the valve body 231 facing the electrode assembly 22, that is, the gas inlet 2312 is disposed on the cavity bottom surface of the mounting cavity 2311 opposite the valve cover 2315.

The first wall 2622 surrounds the valve body 231, that is, the first wall 2622 of the accommodating portion 262 is an annular structure surrounding the valve body 231.

One end of the first wall 2622 is connected to the main body portion 261, and the second wall 2623 is connected to the end of the first wall 2622 far from the main body portion 261, that is, the second wall 2623 is connected to the main body portion 261 through the first wall 2622, and the first wall 2622 and the second wall 2623 together enclose the accommodating portion 262 for accommodating the portion of the valve body 231. The second wall 2623 is a wall of the accommodating portion 262 facing the gas inlet 2312.

The second through hole 2621 is provided on the second wall 2623, that is, the second through hole 2621 is provided on the end of the accommodating portion 262 facing the electrode assembly 22. Certainly, in other embodiments, the second through hole 2621 may be provided on the first wall 2622, that is, the second through hole 2621 is provided on a side of the accommodating portion 262 in the radial direction of the accommodating portion 262.

The accommodating portion 262 is provided with a first wall 2622 and a second wall 2623 connected to each other, the first wall 2622 surrounds the valve body 231, and the second wall 2623 is located at an end of the valve body 231 facing the electrode assembly 22 in the thickness direction X of the wall portion, so that the first wall 2622 and the second wall 2623 together enclose the accommodating portion 262 for accommodating the portion of the valve body 231 extending into the interior of the housing 21. The provision of the second through hole 2621 of the accommodating portion 262 on the first wall 2622 increases paths for gas to enter the gas inlet 2312 of the valve body 231 from the second through hole 2621, mitigating the overflow of electrolyte with the gas. The provision of the second through hole 2621 of the accommodating portion 262 on the second wall 2623 facilitates the arrangement of the gas inlet 2312 and the second through hole 2621 in correspondence, enhancing the smoothness of gas discharge from inside the housing 21 through the one-way valve 23.

According to some embodiments of this application, referring to FIG. 5 and FIG. 17, the accommodating portion 262 is integrally formed with the main body portion 261. In other words, the accommodating portion 262 and the main body portion 261 are an integral structure.

The main body portion 261 and the accommodating portion 262 of the insulating member 26 are arranged as an integrally formed structure, enhancing the structural strength and structural stability of the accommodating portion 262 connected to the main body portion 261.

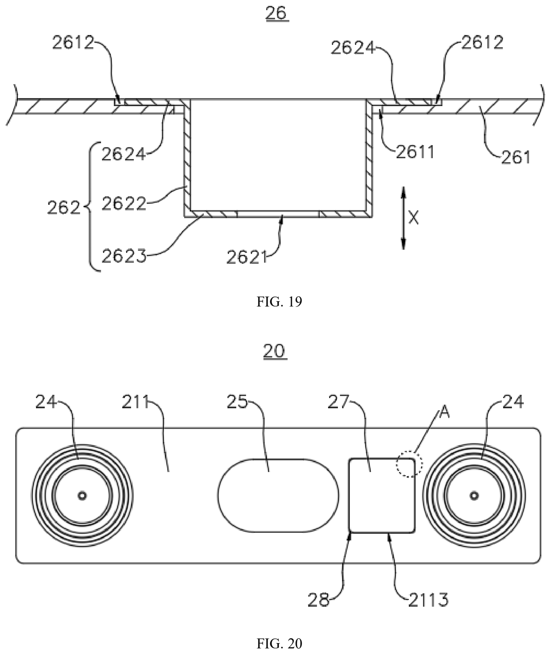

Certainly, the structure of the insulating member 26 is not limited to this. The insulating member 26 may be of other structures. For example, referring to FIG. 18 and FIG. 19, FIG. 18 is a partial cross-sectional view of a battery cell 20 according to still some embodiments of this application, and FIG. 19 is a partial cross-sectional view of an insulating member 26 of a battery cell 20 according to still some embodiments of this application. The accommodating portion 262 and the main body portion 261 are formed as separate parts. In other words, the accommodating portion 262 and the main body portion 261 are separate structures.

The main body portion 261 and the accommodating portion 262 of the insulating member 26 are arranged as separate structures, reducing the processing difficulty of the insulating member 26, thereby lowering the manufacturing cost of the insulating member 26.

According to some embodiments of this application, referring to FIG. 18 and FIG. 19, in an embodiment where the main body portion 261 and the accommodating portion 262 of the insulating member 26 are separate structures, the accommodating portion 262 may further include a flange portion 2624, where the flange portion 2624 is connected to an end of the first wall 2622 far from the second wall 2623, at least part of the flange portion 2624 is stacked with the main body portion 261, and the flange portion 2624 abuts against a side of the main body portion 261 facing the wall portion 211.

At least part of the flange portion 2624 is stacked with the main body portion 261, and the flange portion 2624 abuts against the side of the main body portion 261 facing the wall portion 211, that is, the flange portion 2624 is located on the side of the main body portion 261 facing the wall portion 211, and the flange portion 2624 and the main body portion 261 abut against each other along the thickness direction X of the wall portion, so that the flange portion 2624 and the second wall 2623 are respectively located on two sides of the main body portion 261, allowing the accommodating portion 262 to be clamped into the main body portion 261. Certainly, in other embodiments, the flange portion 2624 of the accommodating portion 262 may be located on the side of the main body portion 261 facing away from the wall portion 211, and the flange portion 2624 may be connected to the main body portion 261 through adhesion.

In FIG. 19, the main body portion 261 is provided with an assembly hole 2611, where the assembly hole 2611 extends through two sides of the main body portion 261 along the thickness direction X of the wall portion, and the first wall 2622 of the accommodating portion 262 runs through the assembly hole 2611, so that the flange portion 2624 and the second wall 2623 are respectively located on two sides of the main body portion 261.

For example, a thickness direction of the flange portion 2624 and a thickness direction of the second wall 2623 are both the same as the thickness direction X of the wall portion, and the flange portion 2624 is an annular structure surrounding the outer side of the first wall 2622. Certainly, in other embodiments, the flange portion 2624 may be multiple protruding structures protruding from the outer side of the first wall 2622.

The accommodating portion 262 is further provided with a flange portion 2624. The flange portion 2624 is connected to an end of the first wall 2622 far from the second wall 2623, at least part of the flange portion 2624 is stacked with the main body portion 261 in the thickness direction X of the wall portion, and the flange portion 2624 abuts against a side of the main body portion 261 facing the wall portion 211, implementing connection of the accommodating portion 262 to the main body portion 261. This structure is simple and easy to assemble.

According to some embodiments of this application, referring to FIG. 18 and FIG. 19, along the thickness direction X of the wall portion, an accommodating groove 2612 is disposed on a surface of the main body portion 261 facing the wall portion 211, and the flange portion 2624 is accommodated within the accommodating groove 2612.

The accommodating groove 2612 is provided on the surface of the main body portion 261 facing away from the electrode assembly 22, and the accommodating groove 2612 extends through the wall surface of the assembly hole 2611, allowing the flange portion 2624 to be accommodated within the accommodating groove 2612 and lap over the groove bottom surface of the accommodating groove 2612.

The accommodating groove 2612 for accommodating the flange portion 2624 is provided on the surface of the main body portion 261 facing the wall portion 211, reducing the space occupied by the flange portion 2624 and the main body portion 261 in the thickness direction X of the wall portion, and reducing the interference of the flange portion 2624 on the mutual abutment between the main body portion 261 and the wall portion 211.

In some embodiments, referring to FIG. 18 and FIG. 19, along the thickness direction X of the wall portion, a surface of the flange portion 2624 facing the wall portion 211 is flush with the surface of the main body portion 261 facing the wall portion 211.

The surface of the flange portion 2624 facing the wall portion 211 is flush with the surface of the main body portion 261 facing the wall portion 211, that is, a dimension of the flange portion 2624 in the thickness direction X of the wall portion is the same as a groove depth of the accommodating groove 2612.

Optionally, the surface of the body portion facing the wall portion 211 is configured to abut against the wall portion 211, so that the flange portion 2624 is clamped between the wall portion 211 and the groove bottom surface of the accommodating groove 2612 along the thickness direction X of the wall portion.

The surface of the flange portion 2624 facing the wall portion 211 is arranged as flush with the surface of the main body portion 261 facing the wall portion 211, so that the wall portion 211 and the groove bottom surface of the accommodating groove 2612 can cooperate to provide clamping and limiting effects for the flange portion 2624, reducing the movement of the accommodating portion 262 along the thickness direction X of the wall portion.

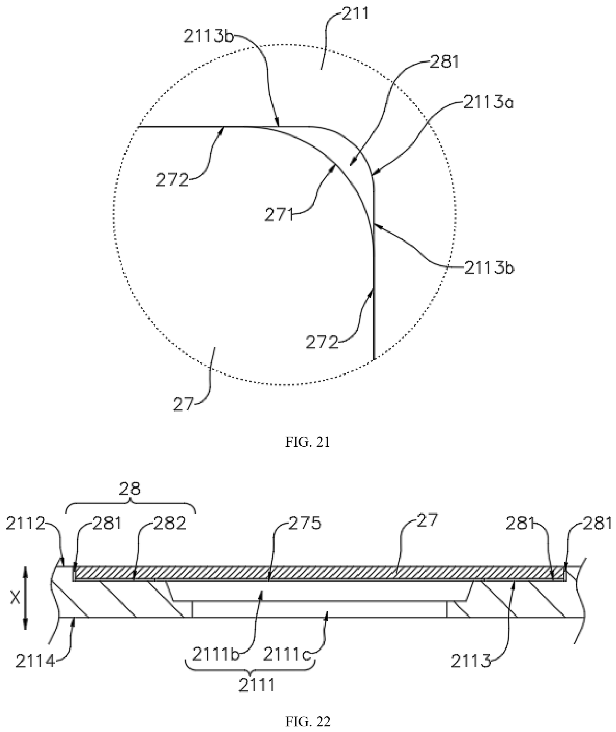

According to some embodiments of this application, referring to FIG. 4, FIG. 5, and FIG. 6, and further referring to FIG. 20, FIG. 21, and FIG. 22, FIG. 20 is a top view of a battery cell 20 (with a protective patch 29 removed) according to some embodiments of this application, FIG. 21 is a partial enlarged view of portion A of the battery cell 20 shown in FIG. 20, and FIG. 22 is a schematic diagram of connection between a shielding member 27 and a wall portion 211 of a battery cell 20 according to some embodiments of this application. The battery cell 20 may further include a shielding member 27, where the shielding member 27 is mounted on the wall portion 211, and along the thickness direction X of the wall portion, the shielding member 27 is located on a side of the one-way valve 23 facing away from the electrode assembly 22, and the shielding member 27 covers the one-way valve 23. The one-way valve 23 has a gas outlet 2313, the gas outlet 2313 is configured to discharge gas from inside the housing 21, an exhaust passage 28 being formed between the shielding member 27 and the wall portion 211 or an exhaust passage 28 is provided on the shielding member 27, and the exhaust passage 28 connects the gas outlet 2313 and the exterior of the housing 21.

The shielding member 27 may be mounted on the wall portion 211 in various structures. For example, the shielding member 27 may be mounted on the wall portion 211 by welding, interference fitting, bolting, clamping, adhesion, or the like.

The shielding member 27 is located on the side of the one-way valve 23 facing away from the electrode assembly 22, and the shielding member 27 covers the one-way valve 23, that is, the shielding member 27 and the one-way valve 23 are arranged along the thickness direction X of the wall portion, and a projection of the one-way valve 23 in the thickness direction X of the wall portion is located within the shielding member 27.

An exhaust passage 28 is formed between the shielding member 27 and the wall portion 211 or an exhaust passage 28 is provided on the shielding member 27, and the exhaust passage 28 connects the gas outlet 2313 and the exterior of the housing 21, that is, the gas outlet 2313 of the one-way valve 23 communicates with the exterior of the housing 21 through the exhaust passage 28, enabling the one-way valve 23 to discharge gas from inside the housing 21. The exhaust passage 28 may be provided on the shielding member 27, that is, the exhaust passage 28 is a through hole provided on the shielding member 27; or the exhaust passage 28 may be formed between the shielding member 27 and the wall portion 211, that is, the exhaust passage 28 is a gap formed between the shielding member 27 and the wall portion 211.

For example, in FIG. 21 and FIG. 22, the exhaust passage 28 is formed between the shielding member 27 and the wall portion 211, that is, the exhaust passage 28 is a gap formed between the shielding member 27 and the wall portion 211.

The battery cell 20 is further provided with a shielding member 27 located on the side of the one-way valve 23 facing away from the electrode assembly 22, the shielding member 27 is mounted on the wall portion 211, and the shielding member 27 covers the one-way valve 23, so that the shielding member 27 can provide protection and shielding effects for the one-way valve 23. This can reduce wear or damage to the one-way valve 23 in the external environment and lower the risk of impurities, particles, or the like in the external environment entering the one-way valve 23, thereby improving the service life of the one-way valve 23. Also, covering the one-way valve 23 with the shielding member 27 enhances the aesthetic appeal of the outer surface of the battery cell 20. Additionally, this facilitates connection of detection components or other parts on the side of the shielding member 27 facing away from the one-way valve 23, reducing interference from the region of the wall portion 211 where the one-way valve 23 is disposed on the connection of the detection components or other parts.

According to some embodiments of this application, referring to FIG. 4, FIG. 5, and FIG. 22, along the thickness direction X of the wall portion, the wall portion 211 has a first surface 2112 facing away from the electrode assembly 22, where the first surface 2112 is provided with a mounting groove 2113, a groove bottom surface of the mounting groove 2113 is provided with a mounting hole 2111, at least part of the one-way valve 23 is disposed within the mounting hole 2111, and at least part of the shielding member 27 is accommodated within the mounting groove 2113.

The first surface 2112 is provided with a mounting groove 2113, and the groove bottom surface of the mounting groove 2113 is provided with a mounting hole 2111, that is, the mounting hole 2111 extends through the groove bottom surface of the mounting groove 2113, enabling the mounting hole 2111 to communicate with the exterior of the housing 21 through the mounting groove 2113.

At least part of the shielding member 27 is accommodated within the mounting groove 2113, that is, the shielding member 27 may be entirely located within the mounting groove 2113 or may be only partially located within the mounting groove 2113. For example, in FIG. 5, the shielding member 27 is entirely located within the mounting groove 2113.

The mounting groove 2113 is provided on the first surface 2112 of the wall portion 211 facing away from the electrode assembly 22, and at least part of the shielding member 27 is accommodated within the mounting groove 2113. This can reduce the space occupied by the shielding member 27 and the wall portion 211 in the thickness direction X of the wall portion, optimizing the volume of the battery cell 20. Additionally, the mounting groove 2113 can provide positioning and limiting effects for the shielding member 27, reducing the assembly difficulty of connecting the shielding member 27 to the wall portion 211.

According to some embodiments of this application, referring to FIG. 20, FIG. 21, and FIG. 22, the exhaust passage 28 includes a third exhaust gap 281, where the third exhaust gap 281 is formed between the shielding member 27 and a groove side surface of the mounting groove 2113, and the third exhaust gap 281 is configured to connect the gas outlet 2313 and the exterior of the housing 21.

The third exhaust gap 281 is configured to connect the gas outlet 2313 and the exterior of the housing 21, and the third exhaust gap 281may be in direct communication with the gas outlet 2313, for example, at least part of a projection of the third exhaust gap 281 in the thickness direction X of the wall portion is located within the mounting hole 2111, enabling the gas outlet 2313 of the one-way valve 23 disposed within the mounting hole 2111 to directly communicate with the third exhaust gap 281. Certainly, the third exhaust gap 281 may alternatively be in indirect communication with the gas outlet 2313. For example, in FIG. 22, the exhaust passage 28 may further include a fourth exhaust gap 282, where the fourth exhaust gap 282 is formed between the shielding member 27 and the groove bottom surface of the mounting groove 2113, and the fourth exhaust gap 282 connects the third exhaust gap 281 and the gas outlet 2313 of the one-way valve 23.

The third exhaust gap 281 in communication with the exterior of the housing 21 is formed between the shielding member 27 and the groove side surface of the mounting groove 2113, allowing gas discharged from the one-way valve 23 to be expelled to the exterior of the housing 21 through the third exhaust gap 281. The battery cell 20 in such structure does not require provision of hole channels in the shielding member 27, reducing the processing difficulty and enhancing the aesthetic appeal of the appearance of the battery cell 20.

It should be noted that the third exhaust gap 281 may be of various structures. In some embodiments, referring to FIG. 21, an outer peripheral surface of the shielding member 27 includes a first corner surface 271 and at least two first side surfaces 272, the first corner surface 271 connecting two adjacent first side surfaces 272. The groove side surface of the mounting groove 2113 includes a second corner surface 2113a and at least two second side surfaces 2113b, the second corner surface 2113a connecting two adjacent second side surfaces 2113b, where each of the second side surfaces 2113b is connected to one of the first side surfaces 272, and the third exhaust gap 281 is formed between the second corner surface 2113a and the first corner surface 271.

The first corner surface 271 connects two adjacent first side surfaces 272, that is, in the circumferential direction of the shielding member 27, the first corner surface 271 is located between two first side surfaces 272 and connects the two first side surfaces 272, that is, the first corner surface 271 is a surface at the corner of the outer peripheral surface of the shielding member 27.

The second corner surface 2113a connects two adjacent second side surfaces 2113b, that is, in the circumferential direction of the mounting groove 2113, the second corner surface 2113a is located between two second side surfaces 2113b and connects the two second side surfaces 2113b, that is, the second corner surface 2113a is a surface at the corner of the groove side surface of the mounting groove 2113.

Each first side surface 272 of the shielding member 27 abuts against and is connected to a corresponding second side surface 2113b of the groove side surface of the mounting groove 2113, so that the first corner surface 271 of the shielding member 27 faces the second corner surface 2113a of the groove side surface of the mounting groove 2113, forming the third exhaust gap 281 between the first corner surface 271 and the second corner surface 2113a.

Optionally, the first side surface 272 and the second side surface 2113b may be connected in various structures, such as by welding, adhesion, or interference fitting.

For example, in FIG. 20 and FIG. 21, both the shielding member 27 and the mounting groove 2113 are rectangular structures, so that the four corners of the shielding member 27 form four first corner surfaces 271, and correspondingly, the four corners of the groove side surface of the mounting groove 2113 form four second corner surfaces 2113a, resulting in four third exhaust gaps 281 formed between the shielding member 27 and the groove side surface of the mounting groove 2113.

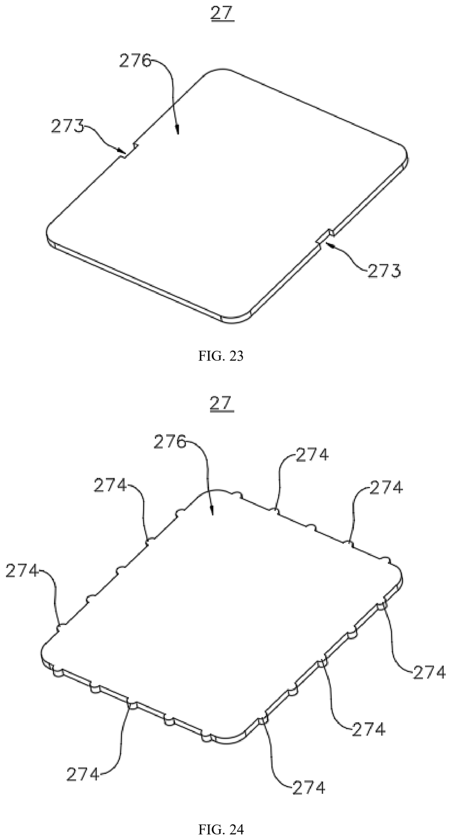

Certainly, the structure in which the third exhaust gap 281 is formed between the shielding member 27 and the groove side surface of the mounting groove 2113 is not limited to this. For example, in other embodiments, referring to FIG. 23, FIG. 23 is a schematic structural diagram of a shielding member 27 in other embodiments according to some embodiments of this application. The outer peripheral surface of the shielding member 27 is provided with a second groove 273, and the outer peripheral surface of the shielding member 27 is configured to be connected to the groove side surface of the mounting groove 2113, forming the third exhaust gap 281 between the groove bottom surface of the second groove 273 and the groove side surface of the mounting groove 2113. In this embodiment, the outer peripheral surface of the shielding member 27 may be welded or adhered to the groove side surface of the mounting groove 2113. Similarly, in other embodiments, referring to FIG. 24, FIG. 24 is a schematic structural diagram of a shielding member 27 in some other embodiments according to some embodiments of this application. Multiple abutting portions 274 are protrudingly provided on the outer peripheral surface of the shielding member 27, the multiple abutting portions 274 being spaced apart along the circumferential direction of the shielding member 27. The abutting portions 274 are configured to be connected to the groove side surface of the mounting groove 2113, forming the third exhaust gap 281 between a region of the shielding member 27 where no abutting portions 274 are provided and the groove side surface of the mounting groove 2113. In this embodiment, the abutting portions 274 may be in interference fit with, welded to, or adhered to the groove side surface of the mounting groove 2113.

Two adjacent first side surfaces 272 on the outer peripheral surface of the shielding member 27 are connected by the first corner surface 271, and two connected second side surfaces 2113b on the groove side surface of the mounting groove 2113 are connected by the second corner surface 2113a. Each first side surface 272 is connected to one second side surface 2113b, and the third gap is formed between the first corner surface 271 and the second corner surface 2113a, that is, the third exhaust gap 281 is formed at the corner between the shielding member 27 and the mounting groove 2113. This facilitates formation of the third exhaust gap 281 between the outer peripheral surface of the shielding member 27 and the groove side surface of the mounting groove 2113. The structure is simple and easy to implement. In addition to formation of the third exhaust gap 281 between the outer peripheral surface of the shielding member 27 and the groove side surface of the mounting groove 2113, this also increases the connection area between the outer peripheral surface of the shielding member 27 and the groove side surface of the mounting groove 2113, enhancing the robustness of the connection of the shielding member 27 to the wall portion 211.

According to some embodiments of this application, referring to FIG. 20 and FIG. 21, both the first corner surface 271 and the second corner surface 2113a are arcuate surfaces, and a radius of the first corner surface 271 is greater than a radius of the second corner surface 2113a.

Both the first corner surface 271 and the second corner surface 2113a are arranged as arcuate surfaces, that is, the first corner surface 271 is a surface formed at the rounded corner of the outer peripheral surface of the shielding member 27, and similarly, the second corner surface 2113a is a surface formed at the rounded corner of the groove side surface of the mounting groove 2113. Certainly, in other embodiments, the first corner surface 271 may be a surface formed at a chamfered corner of the outer peripheral surface of the shielding member 27, and the second corner surface 2113a may be a surface formed at a chamfered corner of the groove side surface of the mounting groove 2113.

The radius of the first corner surface 271 is greater than the radius of the second corner surface 2113a, that is, a diameter of a rounded corner of the outer peripheral surface of the shielding member 27 is greater than a diameter of a rounded corner of the groove side surface of the mounting groove 2113.

Both the first corner surface 271 and the second corner surface 2113a are arranged as arcuate surfaces, and the radius of the first corner surface 271 being greater than the radius of the second corner surface 2113a, allowing for formation of the third exhaust gap 281 between the first corner surface 271 and the second corner surface 2113a. This structure is simple and easy to manufacture and process.

In some embodiments, the first side surface 272 is welded to the second side surface 2113b.

The first side surface 272 and the second side surface 2113b are arranged as mutually welded structures, enhancing the connection robustness between the shielding member 27 and the groove side surface of the mounting groove 2113, and improving the structural stability of the shielding member 27 assembled onto the wall portion 211.

In some embodiments, referring to FIG. 20 and FIG. 21, a cross-section of the shielding member 27 perpendicular to the thickness direction X of the wall portion is rectangular, the outer peripheral surface of the shielding member 27 includes four first side surfaces 272 and four first corner surfaces 271, and the third exhaust gap 281 is formed on at least one of the first corner surfaces 271.

The third exhaust gap 281 is formed on at least one first corner surface 271, that is, the third exhaust gap 281 may be formed at a position of only one of the four first corner surface 271 of the shielding member 27, or the third exhaust gap 281 may be formed at positions of two, three, or four of the four first corner surfaces 271.

It should be noted that in other embodiments, the cross-section of the shielding member 27 perpendicular to the thickness direction X of the wall portion may alternatively be triangular, pentagonal, hexagonal, trapezoidal, or the like.

The shielding member 27 is arranged as a rectangular plate-like structure, so that the four edges of the shielding member 27 form the four first side surfaces 272, and the four first corner surfaces 271 are formed at the four right angles of the shielding member 27. This structure is simple and easy to manufacture.

According to some embodiments of this application, referring to FIG. 22, the exhaust passage 28 may further include a fourth exhaust gap 282, where the fourth exhaust gap 282 is formed between the shielding member 27 and the groove bottom surface of the mounting groove 2113, and the fourth exhaust gap 282 connects the third exhaust gap 281 and the gas outlet 2313.

The fourth exhaust gap 282 is formed between the shielding member 27 and the groove bottom surface of the mounting groove 2113, which may be: the shielding member 27 and the groove bottom surface of the mounting groove 2113 are spaced apart along the thickness direction X of the wall portion, so that the fourth exhaust gap 282 is formed between the surface of the shielding member 27 facing the groove bottom surface of the mounting groove 2113 and the groove bottom surface of the mounting groove 2113; or a first recess 2751 is disposed on the surface of the shielding member 27 facing the groove bottom surface of the mounting groove 2113, so that the fourth exhaust gap 282 is formed between the groove bottom surface of the first recess 2751 and the groove bottom surface of the mounting groove 2113.

It should be noted that in other embodiments, a first recess 2751 may be provided on the groove bottom surface of the mounting groove 2113, so that the fourth exhaust gap 282 is formed between the groove bottom surface of the first recess 2751 and the surface of the shielding member 27 facing the groove bottom surface of the mounting groove 2113.

The exhaust passage 28 further includes the fourth exhaust gap 282 formed between the shielding member 27 and the groove bottom surface of the mounting groove 2113, and the fourth exhaust gap 282 connects the third exhaust gap 281 and the gas outlet 2313. This mitigates the phenomenon of obstructed gas discharge between the gas outlet 2313 and the third exhaust gap 281 caused by the shielding member 27 abutting against the groove bottom surface of the mounting groove 2113, thereby improving the smoothness of gas discharge from the gas outlet 2313 of the one-way valve 23 to the third exhaust gap 281.

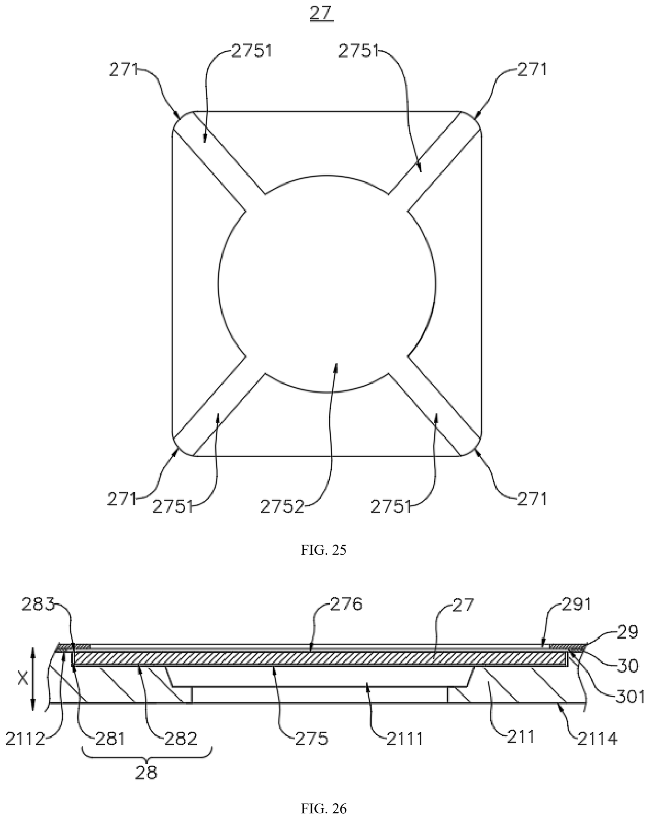

In some embodiments, referring to FIG. 5 and FIG. 22, and further referring to FIG. 25, FIG. 25 is a bottom view of a shielding member 27 of a battery cell 20 according to some embodiments of this application. Along the thickness direction X of the wall portion, the shielding member 27 has a third surface 275 facing the one-way valve 23, where the third surface 275 laps over the groove bottom surface of the mounting groove 2113, and the third surface 275 is provided with a first recess 2751, the fourth exhaust gap 282 being formed between a groove bottom surface of the first recess 2751 and the groove bottom surface of the mounting groove 2113.

The third surface 275 laps over the groove bottom surface of the mounting groove 2113, that is, a portion of the third surface 275 abuts against the groove bottom surface of the mounting groove 2113. In other words, along the thickness direction X of the wall portion, the shielding member 27 abuts against the groove bottom surface of the mounting groove 2113.

The fourth exhaust gap 282 is formed between the groove bottom surface of the first recess 2751 and the groove bottom surface of the mounting groove 2113, that is, the groove bottom surface of the first recess 2751, the groove side surface of the first recess 2751, and the groove bottom surface of the mounting groove 2113 together define the fourth exhaust gap 282.

The third surface 275 of the shielding member 27 laps over the groove bottom surface of the mounting groove 2113, so that the shielding member 27 abuts against the groove bottom surface of the mounting groove 2113, enhancing the structural stability and reliability of the shielding member 27 mounted in the mounting groove 2113. Additionally, the first recess 2751 is provided on the third surface 275, so that the fourth exhaust gap 282 is formed between the groove bottom surface of the first recess 2751 and the groove bottom surface of the mounting groove 2113, allowing gas discharged from the gas outlet 2313 of the one-way valve 23 to enter the third exhaust gap 281 through the first recess 2751 and then be discharged to the exterior of the housing 21. This allows the third exhaust gap 281 to communicate with the gas outlet 2313 through the first recess 2751 while allowing the shielding member 27 to abut against the groove bottom surface of the mounting groove 2113.

In some embodiments, referring to FIG. 20, FIG. 21, and FIG. 25, multiple third exhaust gaps 281 are formed between the shielding member 27 and the groove side surface of the mounting groove 2113, the multiple third exhaust gaps 281 are spaced apart along the circumferential direction of the shielding member 27, the third surface 275 is provided with multiple first recesses 2751, and each third exhaust gap 281 is connected to one first recess 2751.

In an embodiment where the third exhaust gap 281 is formed between the first corner surface 271 and the second corner surface 2113a, referring to FIG. 25, the first recess 2751 extends along the radial direction of the shielding member 27 and extends through the first corner surface 271, so that the fourth exhaust gap 282 formed between the groove bottom surface of the first recess 2751 and the groove bottom surface of the mounting groove 2113 can communicate with the third exhaust gap 281 formed between the first corner surface 271 and the second corner surface 2113a.

For example, the shielding member 27 has four first corner surfaces 271, with the third exhaust gap 281 formed on each first corner surface 271. Correspondingly, the third surface 275 of the shielding member 27 is provided with four first recesses 2751, each first recess 2751 extending through one first corner surface 271.

Multiple third exhaust gaps 281 are formed between the shielding member 27 and the groove side surface of the mounting groove 2113, and each third exhaust gap 281 communicates with one first recess 2751, further improving the exhaust efficiency.

According to some embodiments of this application, referring to FIG. 5 and FIG. 25, the third surface 275 may be further provided with a second recess 2752, where the multiple first recesses 2751 are disposed around the second recess 2752 and are all in communication with the second recess 2752, and the second recess 2752 is in communication with the gas outlet 2313.

For example, the third surface 275 of the shielding member 27 is provided with four first recesses 2751, and the four first recesses 2751 are spaced apart along the circumferential direction of the second recess 2752, the first recess 2751 extending along the radial direction of the shielding member 27 and extending through the groove side surface of the second recess 2752.

The second recess 2752 is provided on the third surface 275 of the shielding member 27 facing the one-way valve 23, the second recess 2752 is in communication with the gas outlet 2313 of the one-way valve 23, and the multiple first recesses 2751 are disposed around the second recess 2752 and are all in communication with the second recess 2752. In this way, gas discharged from the gas outlet 2313 of the one-way valve 23 can enter the second recess 2752, pass through the respective first recesses 2751, and then be discharged to the exterior of the housing 21 through the corresponding third exhaust gaps 281. This improves the exhaust efficiency and mitigates the accumulation of gas between the shielding member 27 and the one-way valve 23.

In some embodiments, referring to FIG. 5, along the thickness direction X of the wall portion, the gas outlet 2313 is disposed at an end of the one-way valve 23 facing away from the electrode assembly 22, the gas outlet 2313 is disposed facing the second recess 2752, and a projection of the gas outlet 2313 is located within the second recess 2752.

For example, the projection of the one-way valve 23 in the thickness direction X of the wall portion is entirely located within the second recess 2752.

The gas outlet 2313 of the one-way valve 23 and the second recess 2752 are arranged as structures facing each other, with the projection of the gas outlet 2313 in the thickness direction X of the wall portion being located within the second recess 2752, making the second recess 2752 a structure covering the gas outlet 2313 in the thickness direction X of the wall portion. This allows gas discharged from the gas outlet 2313 of the one-way valve 23 to directly enter the second recess 2752, improving the exhaust smoothness and exhaust efficiency.

According to some embodiments of this application, referring to FIG. 5, along the thickness direction X of the wall portion, the shielding member 27 does not extend beyond the first surface 2112.

The shielding member 27 does not extend beyond the first surface 2112, that is, the shielding member 27 does not extend beyond the mounting groove 2113 in the thickness direction X of the wall portion, so that the shielding member 27 is entirely located within the mounting groove 2113.

The shielding member 27 does not extend beyond the first surface 2112 of the wall portion 211 facing away from the electrode assembly 22 in the thickness direction X of the wall portion, so that the mounting groove 2113 can provide a protection effect for the shielding member 27, further reducing the wear of the shielding member 27.

In some embodiments, still referring to FIG. 5, the shielding member 27 has a fourth surface 276 facing away from the one-way valve 23, where the fourth surface 276 is flush with the first surface 2112.

The fourth surface 276 of the shielding member 27 facing away from the one-way valve 23 is arranged as flush with the first surface 2112 of the wall portion 211 facing away from the electrode assembly 22, further enhancing the aesthetic appeal of the outer surface of the battery cell 20, and facilitating setting of information codes or connection of detection components or other parts on the fourth surface 276 of the shielding member 27.

It should be noted that the information code may be a QR code, a barcode, a number, or text, and information about the battery cell 20 can be obtained by scanning or manually inputting the information code. The detection component may include a circuit board and a sampling terminal electrically connected to the circuit board, where the sampling terminal includes a metal sheet (for example, a nickel sheet), a temperature sensor, and the like.

In some embodiments, the shielding member 27 is fixedly connected to the wall portion 211.

Optionally, the shielding member 27 may be fixedly connected to the wall portion 211 in various structures. For example, the shielding member 27 may be connected to the wall portion 211 by welding, adhesion, interference fitting, or the like.

The shielding member 27 and the wall portion 211 are arranged as mutually fixedly connected structures, reducing the risk of the shielding member 27 detaching from the wall portion 211 during use, enhancing the connection robustness between the shielding member 27 and the wall portion 211, and facilitating setting of information codes or connection of detection components or other parts on the shielding member 27.

According to some embodiments of this application, referring to FIG. 3 and FIG. 4, the battery cell 20 may further include a protective patch 29, where the protective patch 29 is disposed on a side of the wall portion 211 facing away from the electrode assembly 22, the protective patch 29 is provided with an information collection hole 291 extending through the protective patch 29, and a projection of the information collection hole 291 in the thickness direction X of the wall portion is located within the shielding member 27.

The protective patch 29 is disposed on the side of the wall portion 211 facing away from the electrode assembly 22, that is, the protective patch 29 is disposed on the outer surface of the wall portion 211 to provide a protection effect to the wall portion 211. The protective patch 29 may be made of various materials, such as rubber, silicone, or plastic.

The protective patch 29 is provided with an information collection hole 291 extending through the protective patch 29, and the information collection hole 291 serves to expose a portion of the housing 21 of the battery cell 20, facilitating setting of an information code or connection of a detection component for sampling on the housing 21.

The projection of the information collection hole 291 in the thickness direction X of the wall portion is located within the shielding member 27, that is, the information collection hole 291 is disposed corresponding to the shielding member 27, and the shielding member 27 covers the information collection hole 291, so that the exposed region of the information collection hole 291 is a surface of the shielding member 27, allowing setting of an information code or connection of a detection component for sampling on the shielding member 27.

For example, the surface of the shielding member 27 exposed corresponding to the information collection hole 291 is a flat surface.

Optionally, the protective patch 29 may be disposed on the wall portion 211 in various structures. The protective patch 29 may be disposed on the wall portion 211 by adhesion, adsorption, or the like.

It should be noted that in an embodiment where the wall portion 211 is provided with an electrode terminal 24, referring to FIG. 3 and FIG. 4, along the thickness direction X of the wall portion, the protective patch 29 is provided with a second clearance hole 292 at a position corresponding to the electrode terminal 24, the second clearance hole 292 extends through two sides of the protective patch 29, and the second clearance hole 292 is configured to allow the electrode terminal 24 to pass through, providing clearance for the electrode terminal 24. For example, the wall portion 211 is provided with two electrode terminals 24, and correspondingly, the protective patch 29 is provided with two second clearance holes 292, each second clearance hole 292 being configured to allow one electrode terminal 24 to pass through.

In an embodiment where the wall portion 211 is provided with a pressure relief mechanism 25, referring to FIG. 3 and FIG. 4, along the thickness direction X of the wall portion, the protective patch 29 is provided with a third clearance hole 293 at a position corresponding to the pressure relief mechanism 25, the third clearance hole 293 extends through two sides of the protective patch 29, and along the thickness direction X of the wall portion, a projection of the pressure relief mechanism 25 is located within the third clearance hole 293, enabling the third clearance hole 293 to provide clearance for the pressure relief mechanism 25.

The battery cell 20 is further provided with a protective patch 29. The protective patch 29 is disposed on the side of the wall portion 211 facing away from the electrode assembly 22, providing protection for the wall portion 211. Additionally, the information collection hole 291 is provided on the protective patch 29, with the projection of the information collection hole 291 in the thickness direction X of the wall portion being located within the shielding member 27, making the information collection hole 291 a structure corresponding to the shielding member 27. This facilitates setting of information codes or connection of detection components for sampling on the shielding member 27, reducing damage or pulling on the one-way valve 23 by the detection components. This also enhances the aesthetic appeal of the outer surface of the battery cell 20. Additionally, the shielding member 27 is arranged corresponding to the information collection hole 291 of the protective patch 29, allowing the region of the battery cell 20 for discharging gas through the one-way valve 23 to be in correspondence with the region of the protective patch 29 where the information collection hole 291 is provided. This can reduce the space occupied by the information collection hole 291 and the shielding member 27 on the outer surface of the housing 21, and improve the integration of the battery cell 20.

According to some embodiments of this application, referring to FIG. 3 and further referring to FIG. 26, FIG. 26 is a schematic diagram of the connection between a protective patch 29 and a wall portion 211 according to some embodiments of this application. An exhaust port 283 communicating with the exterior of the housing 21 is formed at an end of the exhaust passage 28, and along the thickness direction X of the wall portion, the protective patch 29 covers the exhaust port 283.

The exhaust port 283 communicating with the exterior of the housing 21 is formed at an end of the exhaust passage 28, that is, the exhaust port 283 is formed at the end, communicating with the exterior of the housing 21, of the exhaust passage 28 formed between the shielding member 27 and the wall portion 211. In an embodiment where the exhaust passage 28 includes a third exhaust gap 281 and a fourth exhaust gap 282, the exhaust port 283 is formed at the end of the third exhaust gap 281 for communicating with the exterior of the housing 21.

Along the thickness direction X of the wall portion, the protective patch 29 covers the exhaust port 283, that is, the projection of the exhaust port 283 of the exhaust passage 28 in the thickness direction X of the wall portion is located within the protective patch 29.

It should be noted that in some embodiments, the protective patch 29 may cover the entire one-way valve 23 to protect the one-way valve 23, in which case the shielding member 27 may not be provided. When the protective patch 29 covers the entire one-way valve 23, a gas passage is formed between the protective patch 29 and the wall portion 211 to allow gas discharged from the gas outlet 2313 of the one-way valve 23 to be released to the exterior of the battery cell 20.

The protective patch 29 covers the exhaust port 283 at one end of the exhaust passage 28 formed between the shielding member 27 and the wall portion 211. This shield the exhaust passage 28, enhancing the aesthetic appeal of the outer surface of the battery cell 20. This can also reduce the risk of impurities, particles, or the like in the external environment entering the exhaust passage 28 through the exhaust port 283 and blocking the exhaust passage 28, improving the reliability of the battery cell 20.

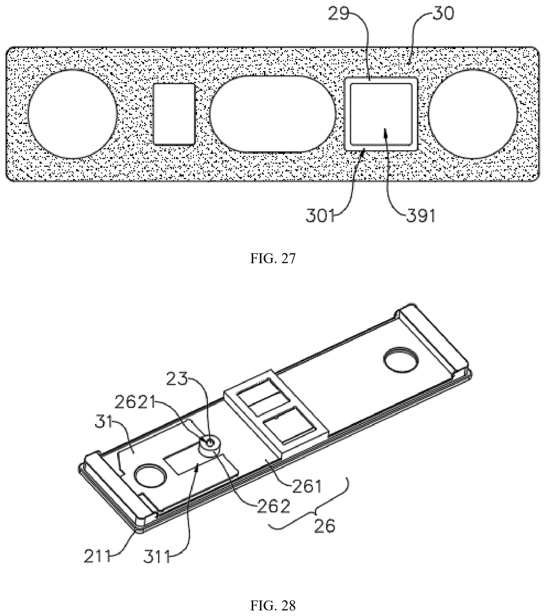

In some embodiments, referring to FIG. 26 and further referring to FIG. 27, FIG. 27 is a schematic diagram of the connection between a protective patch 29 and an adhesion layer 30 according to some embodiments of this application. Along the thickness direction X of the wall portion, an adhesion layer 30 is provided on a side of the protective patch 29 facing the wall portion 211, and the adhesion layer 30 adheres the protective patch 29 and the wall portion 211. The adhesion layer 30 is provided with a first clearance hole 301 at a position corresponding to the information collection hole 291, and along the thickness direction X of the wall portion, projections of both the information collection hole 291 and the exhaust port 283 are located within the first clearance hole 301.

The adhesion layer 30 serves to adhere the protective patch 29 to the wall portion 211. For example, the adhesion layer 30 may be glue or a double-sided tape disposed between the protective patch 29 and the wall portion 211.

Along the thickness direction X of the wall portion, the projections of both the information collection hole 291 and the exhaust port 283 are located within the first clearance hole 301, that is, a region defined by the projection of the first clearance hole 301 in a plane perpendicular to the thickness direction X of the wall portion covers the information collection hole 291 and the exhaust port 283. In other words, the first clearance hole 301 can provide clearance for the information collection hole 291 and the exhaust port 283 in the thickness direction X of the wall portion.

For example, in FIG. 26, the exhaust passage 28 includes a third exhaust gap 281, where the third exhaust gap 281 is formed between the shielding member 27 and a groove side surface of the mounting groove 2113, and the exhaust port 283 is formed at the end of the third exhaust gap 281 that communicates with the exterior of the housing 21. Correspondingly, the projections of the mounting groove 2113 and the shielding member 27 in the thickness direction X of the wall portion are located within the first clearance hole 301, enabling the first clearance hole 301 to provide clearance for the mounting groove 2113 and the shielding member 27, thereby providing clearance for the information collection hole 291 and the exhaust port 283.

The region defined by the projection of the first clearance hole 301 in the thickness direction X of the wall portion covers the information collection hole 291 and the mounting groove 2113. Since the projection of the information collection hole 291 in the thickness direction X of the wall portion is located within the shielding member 27, an area of the first clearance hole 301 is larger than an area of the mounting groove 2113, and the area of the mounting groove 2113 is larger than an area of the information collection hole 291.

The adhesion layer 30 is provided on the side of the protective patch 29 facing the wall portion 211, so that the protective patch 29 can be adhered to the wall portion 211 through the adhesion layer 30, reducing the assembly difficulty of the protective patch 29 and enhancing the connection stability of the protective patch 29 on the wall portion 211. Additionally, the first clearance hole 301 is provided at the position of the adhesion layer 30 corresponding to the information collection hole 291, and the projections of both the information collection hole 291 of the protective patch 29 and the exhaust port 283 formed at one end of the exhaust passage 28 in the thickness direction X of the wall portion are located within the first clearance hole 301, reducing the obstruction on the exhaust port 283 of the exhaust passage 28 by the adhesion layer 30. This allows gas discharged through the exhaust passage 28 to enter the information collection hole 291 through the gap between the protective patch 29 and the wall portion 211 and then be discharged, minimizing the impact on the exhaust of the one-way valve 23 while implementing adhesion of the protective patch 29.

According to some embodiments of this application, referring to FIG. 3, FIG. 4, and FIG. 26, an exhaust port 283 communicating with the exterior of the housing 21 is formed at an end of the exhaust passage 28; and the battery cell 20 further includes a protective patch 29, where the protective patch 29 is disposed on the side of the wall portion 211 facing away from the electrode assembly 22, and the protective patch 29 covers the exhaust port 283.

The protective patch 29 covers the exhaust port 283, that is, the projection of the exhaust port 283 of the exhaust passage 28 in the thickness direction X of the wall portion is located within the protective patch 29.

It should be noted that in an embodiment where the adhesion layer 30 is provided on a side of the protective patch 29 facing the wall portion 211, and the information collection hole 291 does not correspond to the shielding member 27, a passage for connecting the exhaust port 283 and the exterior of the housing 21 is formed at the adhesion layer 30, allowing gas inside the housing 21 to be discharged.

The protective patch 29 is provided on the side of the wall portion 211 facing away from the electrode assembly 22, and the protective patch 29 covers the exhaust port 283 at an end of the exhaust passage 28 formed between the shielding member 27 and the wall portion 211. This can shield the exhaust passage 28, enhancing the aesthetic appeal of the outer surface of the battery cell 20. This can also reduce the risk of impurities, particles, or the like in the external environment entering the exhaust passage 28 through the exhaust port 283 and blocking the exhaust passage 28, improving the reliability of the battery cell 20.

According to some embodiments of this application, referring to FIG. 5, the wall portion 211 is provided with a mounting hole 2111, at least part of the one-way valve 23 is mounted within the mounting hole 2111, and the mounting hole 2111 is an electrolyte injection hole of the battery cell 20.

In an embodiment where the mounting hole 2111 is the electrolyte injection hole of the battery cell 20, the electrolyte needs to be injected into the interior of the housing 21 through the electrolyte injection hole before the assembly of the one-way valve 23, and then the one-way valve 23 is mounted into the mounting hole 2111.

The mounting hole 2111 for assembling the one-way valve 23 is arranged as the electrolyte injection hole, allowing the electrolyte to be injected into the housing 21 through the mounting hole 2111 between assembly of the one-way valve 23 into the mounting hole 2111, thereby eliminating the need to provide a separate electrolyte injection hole on the housing 21. This improves the production efficiency of the battery cell 20 and reduces the manufacturing costs of the battery cell 20.

According to some embodiments of this application, referring to FIG. 3 and FIG. 4, the housing 21 may include a shell 212 and an end cap 213; where an accommodating cavity having an opening 2121 is formed inside the shell 212, and the accommodating cavity is configured to accommodate the electrode assembly 22, and the end cap 213 closes the opening 2121, where the end cap 213 is the wall portion 211.

The end cap 213 is the wall portion 211, that is, the one-way valve 23 is disposed on the end cap 213.

It should be noted that the structure of the battery cell 20 is not limited to this. In some embodiments, the battery cell 20 may be of other structures, for example, the shell 212 includes the wall portion 211, that is, the one-way valve 23 is mounted on one wall of the shell 212. The one-way valve 23 may be mounted on the bottom wall of the shell 212 opposite the end cap 213, or may be mounted on a side wall of the shell 212 adjacent and connected to the end cap 213.

The wall portion 211 of the housing 21 is arranged as the end cap 213 of the housing 21 that closes the opening 2121 of the shell 212. The battery cell 20 in such structure facilitates the mounting of the one-way valve 23 on the end cap 213, reducing the assembly difficulty of the battery cell 20 and improving the production efficiency of the battery cell 20. Similarly, the wall portion 211 of the housing 21 is arranged as one wall of the shell 212. The battery cell 20 in such structure reduces the impact of the stress generated by mutual connection of the end cap 213 and the shell 212 on the one-way valve 23, mitigating phenomena such as damage to the one-way valve 23, thereby improving the operational stability and service life of the battery cell 20.

According to some embodiments of this application, referring to FIG. 3 and FIG. 4, the battery cell 20 further includes a pressure relief mechanism 25, where the pressure relief mechanism 25 is disposed on the housing 21, and the pressure relief mechanism 25 is configured to actuate and release internal pressure of the battery cell 20 during thermal runaway of the battery cell 20, an actuation pressure of the pressure relief mechanism 25 being greater than an opening pressure of the one-way valve 23.

The pressure relief mechanism 25 being disposed on the housing 21 may be disposed on the end cap 213 or disposed on the shell 212. For example, in FIG. 4, the pressure relief mechanism 25 is disposed on the end cap 213.

The pressure relief mechanism 25 is configured to actuate and release internal pressure of the battery cell 20 during thermal runaway of the battery cell 20, that is, when thermal runaway occurs inside the battery cell 20, the pressure relief mechanism 25 can actuate and open to release gas or the like generated due to thermal runaway inside the battery cell 20.

The actuation pressure of the pressure relief mechanism 25 is greater than the opening pressure of the one-way valve 23, that is, the pressure required for the gas inside the housing 21 to open the pressure relief mechanism 25 is greater than the pressure required for the gas inside the housing 21 to open the one-way valve 23. It should be noted that during thermal runaway of the battery cell 20, the gas inside the housing 21 of the battery cell 20 increases rapidly, implementing the opening of the pressure relief mechanism 25 for pressure relief. During normal operation of the battery cell 20, when the gas generated inside the housing 21 reaches a threshold, the one-way valve 23 can be opened but the pressure relief mechanism 25 cannot be opened.

Optionally, the pressure relief mechanism 25 and the housing 21 may be an integrally formed structure, or may be formed as separate structures. If the pressure relief mechanism 25 and the housing 21 is an integrally formed structure, the pressure relief mechanism 25 may be a region of the housing 21 provided with a weakened structure, such as a region with a scored groove on the housing 21. If the pressure relief mechanism 25 and the housing 21 are formed as separate structures, the pressure relief mechanism 25 may be connected to the housing 21 through welding, hot melting, injection molding, adhesion, or the like. For example, in FIG. 4, the pressure relief mechanism 25 and the housing 21 are formed as separate structures, and the pressure relief mechanism 25 is disposed on the end cap 213 of the housing 21, where the pressure relief mechanism 25 may be a pressure relief component such as an explosion-proof valve, an explosion-proof disc, a pressure relief valve, or a safety valve.

For example, in FIG. 4, both the electrode terminals 24 and the pressure relief mechanism 25 are disposed on the end cap 213. The battery cell 20 in such structure can reduce the space occupied by the battery cell 20. Certainly, in other embodiments, the electrode terminal 24 and the pressure relief mechanism 25 may be disposed on different walls of the housing 21. The battery cell 20 in such structure allows the electrode terminal 24 of the battery cell 20 for outputting or inputting electrical energy to be separated from the pressure relief mechanism 25 for releasing internal pressure, reducing the operational risk of the battery cell 20. For example, the pressure relief mechanism 25 is disposed on the shell 212, and the electrode terminal 24 is disposed on the end cap 213.

The opening pressure for opening the one-way valve 23 for exhaust is set to be less than the actuation pressure for the pressure relief mechanism 25 to release pressure, allowing gas generated inside the housing 21 during normal operation of the battery cell 20 to be discharged to the exterior of the housing 21 through the one-way valve 23. This mitigates the phenomenon that the pressure relief mechanism 25 actuates prematurely before thermal runaway of the battery cell 20 due to a rise of internal gas pressure in the battery cell 20, thereby effectively enhancing the operational stability of the battery cell 20 and improving the service life and reliability of the battery cell 20.

In some embodiments, the one-way valve 23 and the pressure relief mechanism 25 may be disposed on a same wall of the housing 21. For example, both the one-way valve 23 and the pressure relief mechanism 25 are disposed on the end cap 213. The battery cell 20 in such structure is beneficial to reducing the space occupied by the battery cell 20, increasing the energy density of the battery cell 20.

In some embodiments, the one-way valve 23 and the pressure relief mechanism 25 may be disposed on different walls of the housing 21. For example, the one-way valve 23 is disposed on the end cap 213, and the pressure relief mechanism 25 is disposed on the shell 212. The battery cell 20 in such structure can reduce mutual interference between the one-way valve 23 and the pressure relief mechanism 25 and is suitable for different usage environments.

In some embodiments, an exhaust speed of the one-way valve 23 is less than an exhaust speed of the pressure relief mechanism 25.

The exhaust speed of the one-way valve 23 is set to be less than the exhaust speed of the pressure relief mechanism 25, mitigating the phenomenon that the pressure relief mechanism 25 fails to actuate or open due to excessively rapid exhaust through the one-way valve 23 during thermal runaway of the battery cell 20. This allows the pressure relief mechanism 25 to actuate and stably release internal pressure of the battery cell 20 during thermal runaway of the battery cell 20, thereby reducing the risk of fire or explosion in the battery cell 20 during thermal runaway.

According to some embodiments of this application, referring to FIG. 4 and further referring to FIG. 28, FIG. 28 is a partial structural diagram of a battery cell according to some embodiments of this application. Along the thickness direction X of the wall portion, the wall portion 211 has a second surface 2114 facing the electrode assembly 22, the one-way valve 23 protruding beyond the second surface 2114. The battery cell 20 further includes an electrode terminal 24 and a current collecting member 31, where the electrode terminal 24 is mounted on the wall portion 211, the electrode terminal 24 is configured to output or input electrical energy of the battery cell 20, the current collecting member 31 connects the electrode terminals 24 and the electrode assembly 22, and at least part of the current collecting member 31 is disposed between the wall portion 211 and the electrode assembly 22. The current collecting member 31 is provided with a clearance groove 311, and the one-way valve 23 extends into the clearance groove 311 along the thickness direction X of the wall portion.

The electrode terminal 24 is disposed on the wall portion 211, and electrode terminal 24 is configured to be electrically connected to a tab 221 of the electrode assembly 22 to input or output electrical energy of the battery cell 20.

The current collecting member 31 is disposed within the housing 21, and the current collecting member 31 serves to connect the electrode terminal 24 and the tab 221 of the electrode assembly 22, implementing electrical connection between the electrode terminal 24 and the electrode assembly 22. The current collecting member 31 may be made of various materials, such as copper, iron, steel, or aluminum.

For example, the battery cell 20 is provided with two electrode terminals 24, and both the two electrode terminals 24 are mounted on the wall portion 211. The two electrode terminals 24 are respectively configured to be electrically connected to two tabs 221 with opposite polarities of the electrode assembly 22 to implement output or input for the positive electrode and negative electrode of the battery cell 20.

The current collecting member 31 is provided with a clearance groove 311, and the one-way valve 23 extends into the clearance groove 311 along the thickness direction X of the wall portion, that is, the current collecting member 31 is provided with a clearance groove 311 at a position corresponding to the one-way valve 23, allowing the portion of the one-way valve 23 protruding beyond the second surface 2114 along the thickness direction X of the wall portion to be accommodated within the clearance groove 311.

The battery cell 20 is further provided with an electrode terminal 24 for inputting or outputting electrical energy of the battery cell 20, and the current collecting member 31 connects the electrode assembly 22 and the electrode terminal 24, reducing the connection difficulty between the electrode assembly 22 and the electrode terminals 24 through the current collecting member 31. Additionally, the clearance groove 311 is provided on the current collecting member 31, and the one-way valve 23 extends into the clearance groove 311 along the thickness direction X of the wall portion. This allows the current collecting member 31 to provide clearance for the one-way valve 23 through the clearance groove 311, reducing interference between the current collecting member 31 and the one-way valve 23. This can also reduce the space occupied by the one-way valve 23 and the current collecting member 31 inside the housing 21, increasing the energy density of the battery cell 20.

In some embodiments, the battery cell 20 is an alkali metal battery, such as a sodium metal battery or a lithium metal battery. Using the one-way valve 23 with an alkali metal battery allows for timely discharge of the gas generated during normal operation of the alkali metal battery, improving the service life of the alkali metal battery.

According to some embodiments of this application, this application further provides a battery 100, where the battery 100 includes the battery cell 20 according to any one of the above solutions.

Referring to FIG. 2, the battery 100 may further include a box 10, where the battery cell 20 is accommodated in the box 10. In some embodiments, the box 10 may include a first box body 11 and a second box body 12, where the first box body 11 and the second box body 12 engage with each other, and the first box body 11 and the second box body 12 together define an assembly space for accommodating the battery cell 20.

Optionally, in FIG. 2, the second box body 12 may be a hollow structure with one end open, the first box body 11 may be a plate-like structure, and the first box body 11 covers the open side of the second box body 12, so that the first box body 11 and the second box body 12 together define the assembly space. Certainly, the structure of the box 10 is not limited to this. In other embodiments, both the first box body 11 and the second box body 12 may be hollow structures with one open side, and the open side of the first box body 11 covers the open side of the second box body 12.

Certainly, the box 10 formed by the first box body 11 and the second box body 12 may be of various shapes, such as a cylinder or a cuboid. For example, in FIG. 2, the box 10 is a cuboid structure.

In some embodiments, one or more battery cells 20 may be disposed within the box 10. For example, in FIG. 2, the box 10 of the battery 100 contains multiple battery cells 20, and the multiple battery cells 20 may be connected in series, parallel, or series-parallel, where being connected in series-parallel means a combination of series and parallel connections of the multiple battery cells 20. The multiple battery cells 20 may be directly connected in series, parallel, or series-parallel, and then an entirety formed by the multiple battery cells 20 is accommodated in the box 10. Alternatively, the battery 100 may be formed by multiple battery cells 20 being connected in series, parallel, or series-parallel first to form a battery module and then multiple battery modules being connected in series, parallel, or series-parallel to form an entirety which is accommodated in the box 10.

The battery 100 may further include other structures. For example, the battery 100 may further include a busbar component, where the busbar component connects multiple battery cells 20 to implement electrical connection between the multiple battery cells 20.

It should be noted that in some embodiments, the battery 100 may not include a box 10, the battery 100 includes multiple battery cells 20, and the battery 100 formed by the multiple battery cells 20 may be directly assembled onto an electric apparatus to provide electrical energy to the electric apparatus through the multiple battery cells 20. In other words, the box 10 may be a part of the electric apparatus. Taking the electric apparatus being a vehicle 1000 as an example, the box 10 may form a part of the chassis structure of the vehicle 1000. For example, part of the box 10 may form at least part of the floor of the vehicle 1000, or part of the box 10 may form at least part of the crossbeam and longitudinal beam of the vehicle 1000.

According to some embodiments of this application, this application further provides an electric apparatus, where the electric apparatus includes the battery cell 20 according to any one of the above solutions, and the battery cell 20 is configured to provide electrical energy for the electric apparatus.

The electric apparatus may be any of the above-mention devices or systems using the battery cell 20.

According to some embodiments of this application, referring to FIG. 3 to FIG. 8, FIG. 16 and FIG. 17, FIG. 20 to FIG. 22, and FIG. 25 to FIG. 27, this application provides a battery cell 20. The battery cell 20 includes a housing 21, an electrode assembly 22, a one-way valve 23, an insulating member 26, a shielding member 27, a protective patch 29, and a pressure relief mechanism 25. The housing 21 has a wall portion 211, and the housing 21 includes a shell 212 and an end cap 213, where an accommodating cavity with an opening 2121 is formed in an interior of the shell 212, the electrode assembly 22 is accommodated within the accommodating cavity, the end cap 213 closes the opening 2121, and the end cap 213 is the wall portion 211. Along a thickness direction X of the wall portion, the wall portion 211 has a first surface 2112 facing away from the electrode assembly 22 and a second surface 2114 facing the electrode assembly 22, where the first surface 2112 is provided with a mounting groove 2113, a groove bottom surface of the mounting groove 2113 is provided with a mounting hole 2111, the one-way valve 23 is mounted within the mounting hole 2111 and protrudes beyond the second surface 2114, and the one-way valve 23 is configured to discharge gas from inside the housing 21. The one-way valve 23 includes a valve body 231 and a valve core 232, where the valve body 231 includes a valve main body 2314 and a valve cover 2315, the valve main body 2314 is disposed within the mounting hole 2111 and protrudes beyond the second surface 2114, the valve main body 2314 is provided with an gas inlet 2312 at an end close to the electrode assembly 22 in the thickness direction X of the wall portion, along the thickness direction X of the wall portion, the valve cover 2315 is connected to an end of the valve main body 2314 facing away from the electrode assembly 22, the valve cover 2315 is provided with a gas outlet 2313, the valve cover 2315 and the valve main body 2314 together enclose a mounting cavity 2311, the gas inlet 2312 connects the mounting cavity 2311 and an interior of the housing 21, and the gas outlet 2313 connects the mounting cavity 2311 and an exterior of the housing 21. The valve main body 2314 is provided with a recessed groove 2314a at an end facing away from the electrode assembly 22, where the valve cover 2315 is accommodated within the recessed groove 2314a, and the valve cover 2315 does not extend beyond the end of the valve main body 2314 facing away from the electrode assembly 22. The valve core 232 includes an elastic member 2321 and a blocking member 2322, where the elastic member 2321 is a spring, the blocking member 2322 is movably disposed between the valve cover 2315 and the cavity bottom surface of the mounting cavity 2311 along the thickness direction X of the wall portion, two ends of the elastic member 2321 in the thickness direction X of the wall portion respectively abut against the blocking member 2322 and the valve cover 2315, the blocking member 2322 is configured to block the gas inlet 2312 under the action of the elastic member 2321, and the blocking member 2322 is configured to open the gas inlet 2312 under the action of gas inside the housing 21. A first guide post 2315b is protrudingly provided on a side of the valve cover 2315 facing the blocking member 2322, and part of the elastic member 2321 sleeves an outer side of the first guide post 2315b. A diameter of the first guide post 2315b is denoted as D₁, and an inner diameter of the elastic member 2321 is denoted as D₂, satisfying 0 mm < D₂ - D₁ ≤ 5 mm. The blocking member 2322 includes a pressing portion 2322a and a sealing portion 2322b, where along the thickness direction X of the wall portion, the two ends of the elastic member 2321 respectively abut against the valve cover 2315 and the pressing portion 2322a, the sealing portion 2322b is connected to a side of the pressing portion 2322a facing away from the valve cover 2315, and the sealing portion 2322b is configured to block the gas inlet 2312. A second guide post 2322c is protrudingly provided on a side of the pressing portion 2322a facing the valve cover 2315, and part of the elastic member 2321 sleeves an outer side of the second guide post 2322c. A diameter of the second guide post 2322c is denoted as D₃, and an inner diameter of the elastic member 2321 is denoted as D₂, satisfying 0 mm < D₃ - D₁ ≤ 5 mm. The pressing portion 2322a has a first abutting surface 2322f facing the sealing portion 2322b, the sealing portion 2322b has a second abutting surface 2322g facing the pressing portion 2322a, the first abutting surface 2322f is provided with a clamping groove 2322h, and the second abutting surface 2322g is protrudingly provided with a clamping portion 2322k, the clamping portion 2322k being in clamping fit with the clamping groove 2322h. Along the thickness direction X of the wall portion, a distance between the first guide post 2315b and the second guide post 2322c is denoted as L, satisfying 0 mm < L ≤ 2 mm. The mounting hole 2111 includes a first hole segment 2111b and a second hole segment 2111c, where the first hole segment 2111b and the second hole segment 2111c are arranged along the thickness direction X of the wall portion, the first hole segment 2111b is located on a side of the second hole segment 2111c facing away from the electrode assembly 22, and a diameter of the first hole segment 2111b is greater than a diameter of the second hole segment 2111c. A wall surface of the first hole segment 2111b is the first connection surface 2111a, the valve body 231 has a connection portion 2314c located within the first hole segment 2111b, and an outer peripheral surface of the connection portion 2314c is the second connection surface 2314b. Both the first connection surface 2111a and the second connection surface 2314b are arranged around a central axis of the mounting hole 2111, and the first connection surface 2111a is welded to the second connection surface 2314b. The first connection surface 2111a and the second connection surface 2314b match each other, and both the first connection surface 2111a and the second connection surface 2314b are arranged at an acute angle to the central axis of the mounting hole 2111. The insulating member 26 includes a main body portion 261 and an accommodating portion 262, where the main body portion 261 is disposed on a side of the wall portion 211 facing the electrode assembly 22, the accommodating portion 262 is connected to the main body portion 261, and a portion of the one-way valve 23 extending into the interior of the housing 21 is accommodated within the accommodating portion 262. The accommodating portion 262 includes a first wall 2622 and a second wall 2623, where the first wall 2622 surrounds the valve body 231, and along the thickness direction X of the wall portion, one end of the first wall 2622 is connected to the main body portion 261, the second wall 2623 is connected to an end of the first wall 2622 far from the main body portion 261, the second wall 2623 is provided with a second through hole 2621, and the second through hole 2621 connects the gas inlet 2312 and the interior of the housing 21. The shielding member 27 is mounted within the mounting groove 2113 of the wall portion 211 and abuts against the groove bottom surface of the mounting groove 2113. Along the thickness direction X of the wall portion, the shielding member 27 is located on a side of the one-way valve 23 facing away from the electrode assembly 22, and the shielding member 27 covers the one-way valve 23. An exhaust passage 28 is formed between the shielding member 27 and the wall portion 211, and the exhaust passage 28 connects the gas outlet 2313 and the exterior of the housing 21. The exhaust passage 28 includes a third exhaust gap 281 and a fourth exhaust gap 282, where the third exhaust gap 281 is formed between the shielding member 27 and the groove side surface of the mounting groove 2113. Cross-sections of the shielding member 27 and the mounting groove 2113 perpendicular to the thickness direction X of the wall portion are rectangular, the outer peripheral surface of the shielding member 27 includes four first corner surfaces 271 and four first side surfaces 272, every two adjacent first side surfaces 272 being connected by one first corner surface 271, and the groove bottom surface of the mounting groove 2113 includes four second corner surfaces 2113a and four second side surfaces 2113b, every two adjacent second side surfaces 2113b being connected by one second corner surface 2113a, where each first side surface 272 abuts against and is welded to a corresponding second side surface 2113b, and one third exhaust gap 281 is formed between each first corner surface 271 and its corresponding second corner surface 2113a. Both the first corner surface 271 and the second corner surface 2113a are arcuate surfaces, and a radius of the first corner surface 271 is greater than a radius of the second corner surface 2113a. Along the thickness direction X of the wall portion, the shielding member 27 has a third surface 275 facing the one-way valve 23 and a fourth surface 276 facing away from the one-way valve 23, where the third surface 275 laps over the groove bottom surface of the mounting groove 2113, and the fourth surface 276 is flush with the first surface 2112. The third surface 275 is provided with four first recesses 2751, where the first recess 2751 extends along the radial direction of the shielding member 27 and extends through one first corner surface 271, and the fourth exhaust gap 282 is formed between the groove bottom surface of the first recess 2751 and the groove bottom surface of the mounting groove 2113. The third surface 275 is further provided with a second recess 2752, where the multiple first recesses 2751 are disposed around the second recess 2752 and are all in communication with the second recess 2752, and the second recess 2752 is in communication with the gas outlet 2313. Along the thickness direction X of the wall portion, the gas outlet 2313 faces the second recess 2752, and a projection of the gas outlet 2313 is located within the second recess 2752. The protective patch 29 is disposed on a side of the wall portion 211 facing away from the electrode assembly 22, where the protective patch 29 is provided with an information collection hole 291 extending through the protective patch 29, and a projection of the information collection hole 291 in the thickness direction X of the wall portion is located within the shielding member 27. an exhaust port 283 communicating with the exterior of the housing 21 is formed at an end of the exhaust passage 28, and along the thickness direction X of the wall portion, the protective patch 29 covers the exhaust port 283. An adhesion layer 30 is provided on a side of the protective patch 29 facing the wall portion 211, the adhesion layer 30 adhering the protective patch 29 and the wall portion 211, where the adhesion layer 30 is provided with a first clearance hole 301 at a position corresponding to the information collection hole 291, and along the thickness direction X of the wall portion, projections of both the mounting groove 2113 and the shielding member 27 are located within the first clearance hole 301. The pressure relief mechanism 25 is disposed on the wall portion 211, and the pressure relief mechanism 25 is configured to actuate and release internal pressure of the battery cell 20 during thermal runaway of the battery cell 20, an actuation pressure of the pressure relief mechanism 25 being greater than an opening pressure of the one-way valve 23, and an exhaust speed of the one-way valve 23 being less than an exhaust speed of the pressure relief mechanism 25.

It should be noted that in the absence of conflict, the embodiments in this application and the features in the embodiments may be combined with each other.

The above are only preferred embodiments of this application and are not intended to limit this application. For those skilled in the art, various modifications and changes may be made to this application. Any modifications, equivalent replacements, improvements, and the like, made within the spirit and principles of this application shall be included within the protection scope of this application.

## Claims

1. A battery cell, comprising:
a housing having a wall portion;
an electrode assembly accommodated within the housing; and
a one-way valve disposed on the wall portion, wherein the one-way valve is configured to discharge gas from inside the housing.

2. The battery cell according to claim 1, wherein the one-way valve comprises:
a valve body disposed on the wall portion, wherein a mounting cavity is formed in an interior of the valve body, the valve body is provided with an gas inlet and a gas outlet, the gas inlet is configured to connect the mounting cavity and an interior of the housing, and the gas outlet is configured to connect the mounting cavity and an exterior of the housing; and
a valve core disposed within the mounting cavity, wherein the valve core is configured to block the gas inlet and configured to open the gas inlet under the action of gas inside the housing.

3. The battery cell according to claim 2, wherein the valve body comprises:
a valve main body disposed on the wall portion, wherein the valve main body is provided with the gas inlet; and
a valve cover, wherein along a thickness direction of the wall portion, the valve cover is disposed at an end of the valve main body facing away from the electrode assembly, and the valve cover and the valve main body together enclose the mounting cavity.

4. The battery cell according to claim 3, wherein the valve cover is connected to the valve main body, and the gas outlet is a first through hole provided on the valve cover.

5. The battery cell according to claim 3 or 4, wherein the valve cover is connected to the valve main body, and the gas outlet is a first exhaust gap formed between the valve cover and the valve main body.

6. The battery cell according to any one of claims 3 to 5, wherein the valve cover is connected to the valve main body, the valve main body is provided with a recessed groove at the end facing away from the electrode assembly, and at least part of the valve cover is accommodated within the recessed groove.

7. The battery cell according to claim 6, wherein along the thickness direction of the wall portion, the valve cover does not extend beyond the end of the valve main body facing away from the electrode assembly.

8. The battery cell according to claim 7, wherein along the thickness direction of the wall portion, the wall portion has a first surface facing away from the electrode assembly, and the valve main body does not extend beyond the first surface.

9. The battery cell according to claim 3, wherein the valve cover is connected to the wall portion, and the gas outlet is a second exhaust gap formed between the valve cover and the wall portion.

10. The battery cell according to any one of claims 3 to 9, wherein the valve main body is integrally formed with the wall portion.

11. The battery cell according to any one of claims 3 to 10, wherein the valve core comprises:
an elastic member disposed within the mounting cavity; and
a blocking member movably disposed within the mounting cavity, wherein the blocking member is configured to block the gas inlet under the action of the elastic member and configured to open the gas inlet under the action of gas inside the housing.

12. The battery cell according to claim 11, wherein the elastic member is a spring.

13. The battery cell according to claim 11 or 12, wherein a material of the elastic member comprises steel, iron, or aluminum.

14. The battery cell according to any one of claims 11 to 13, wherein along the thickness direction of the wall portion, the valve cover and the blocking member are spaced apart, two ends of the elastic member respectively abut against the valve cover and the blocking member, and the gas inlet is disposed on a cavity bottom surface of the mounting cavity.

15. The battery cell according to claim 14, wherein a first guide post is protrudingly provided on a side of the valve cover facing the blocking member, and part of the elastic member sleeves an outer side of the first guide post.

16. The battery cell according to claim 15, wherein the valve cover is connected to the valve main body, and the gas outlet is a first through hole provided on the valve cover;
wherein along the thickness direction of the wall portion, the gas outlet extends through the first guide post; or
along a radial direction of the first guide post, the gas outlet is spaced apart from the first guide post.

17. The battery cell according to claim 15 or 16, wherein a diameter of the first guide post is denoted as D₁, and an inner diameter of the elastic member is denoted as D₂, satisfying 0 mm < D₂ - D₁ ≤ 5 mm.

18. The battery cell according to any one of claims 14 to 17, wherein a first limiting groove is provided on a side of the valve cover facing the blocking member, and an end of the elastic member far from the blocking member is inserted into the first limiting groove.

19. The battery cell according to any one of claims 14 to 18, wherein the end of the elastic member far from the blocking member is fixedly connected to the valve cover.

20. The battery cell according to any one of claims 14 to 19, wherein a second guide post is protrudingly provided on a side of the blocking member facing the valve cover, and part of the elastic member sleeves an outer side of the second guide post.

21. The battery cell according to claim 20, wherein a diameter of the second guide post is denoted as D₃, and the inner diameter of the elastic member is denoted as D₂, satisfying 0 mm < D₃ - D₁ ≤ 5 mm.

22. The battery cell according to any one of claims 14 to 21, wherein a second limiting groove is provided on the side of the blocking member facing the valve cover, and an end of the elastic member far from the valve cover is inserted into the second limiting groove.

23. The battery cell according to any one of claims 14 to 22, wherein the end of the elastic member far from the valve cover is fixedly connected to the blocking member.

24. The battery cell according to any one of claims 14 to 23, wherein the blocking member is spaced apart from a cavity side surface of the mounting cavity.

25. The battery cell according to any one of claims 14 to 23, wherein an outer peripheral surface of the blocking member is protrudingly provided with multiple limiting protrusions, the multiple limiting protrusions are spaced apart along a circumferential direction of the blocking member, and the limiting protrusions are in guiding fit with a cavity side surface of the mounting cavity.

26. The battery cell according to any one of claims 14 to 25, wherein the blocking member comprises a pressing portion and a sealing portion, wherein along the thickness direction of the wall portion, the two ends of the elastic member respectively abut against the valve cover and the pressing portion; the sealing portion is connected to a side of the pressing portion facing away from the valve cover; and the sealing portion is configured to block the gas inlet.

27. The battery cell according to claim 26, wherein the pressing portion has a first abutting surface facing the sealing portion, the sealing portion has a second abutting surface facing the pressing portion, one of the first abutting surface and the second abutting surface is provided with a clamping groove, and the other is provided with a clamping portion, the clamping portion being in clamping fit with the clamping groove.

28. The battery cell according to claim 26 or 27, wherein the sealing portion is adhered to the pressing portion.

29. The battery cell according to any one of claims 26 to 28, wherein a material of the sealing portion comprises ethylene propylene diene monomer, fluororubber, or polytetrafluoroethylene.

30. The battery cell according to any one of claims 14 to 29, wherein along the thickness direction of the wall portion, a dimension of a gap between the valve cover and the blocking member is denoted as L, satisfying 0 mm < L ≤ 2 mm.

31. The battery cell according to any one of claims 3 to 30, wherein the valve main body is welded to the wall portion.

32. The battery cell according to claim 31, wherein the wall portion is provided with a mounting hole, at least part of the valve main body is accommodated within the mounting hole, a wall surface of the mounting hole comprises a first connection surface, and the valve main body comprises a second connection surface, wherein both the first connection surface and the second connection surface are arranged around a central axis of the mounting hole, and the first connection surface is welded to the second connection surface.

33. The battery cell according to claim 32, wherein the first connection surface and the second connection surface match each other, and both the first connection surface and the second connection surface are arranged at an acute angle to the central axis of the mounting hole.

34. The battery cell according to claim 33, wherein the mounting hole comprises a first hole segment and a second hole segment, wherein the first hole segment and the second hole segment are arranged along the thickness direction of the wall portion, the first hole segment is located on a side of the second hole segment facing away from the electrode assembly, and a diameter of the first hole segment is greater than a diameter of the second hole segment;
wherein a wall surface of the first hole segment is the first connection surface, the valve main body has a connection portion located within the first hole segment, and an outer peripheral surface of the connection portion is the second connection surface.

35. The battery cell according to any one of claims 32 to 34, wherein along the thickness direction of the wall portion, an end face of the end of the valve main body facing away from the electrode assembly is connected to the second connection surface, and a first stress relief groove is provided on the end face of the end of the valve main body facing away from the electrode assembly.

36. The battery cell according to claim 35, wherein the first stress relief groove is disposed around the central axis of the mounting hole.

37. The battery cell according to any one of claims 1 to 36, wherein the battery cell further comprises:
an insulating member disposed on a side of the wall portion facing the electrode assembly;
wherein along the thickness direction of the wall portion, the wall portion has a second surface facing the electrode assembly, the one-way valve protrudes beyond the second surface, and the insulating member comprises a main body portion and an accommodating portion, wherein the main body portion is disposed on the side of the wall portion facing the electrode assembly, the accommodating portion is connected to the main body portion, and a portion of the one-way valve extending into the interior of the housing is accommodated within the accommodating portion.

38. The battery cell according to claim 37, wherein the one-way valve comprises a valve body, wherein along the thickness direction of the wall portion, the valve body protrudes beyond the second surface, and a portion of the valve body protruding beyond the second surface is provided with an gas inlet, the gas inlet being configured to allow gas inside the housing to be discharged;
wherein the accommodating portion is provided with a second through hole, the second through hole being connected to the gas inlet.

39. The battery cell according to claim 38, wherein along the thickness direction of the wall portion, the gas inlet is disposed at an end of the valve body facing the electrode assembly; and
the accommodating portion comprises a first wall and a second wall, wherein the first wall surrounds the valve body, and along the thickness direction of the wall portion, one end of the first wall is connected to the main body portion, and the second wall is connected to an end of the first wall far from the main body portion;
wherein the second through hole is provided on the first wall and/or the second wall.

40. The battery cell according to claim 39, wherein the accommodating portion is integrally formed with the main body portion.

41. The battery cell according to claim 39, wherein the accommodating portion and the main body portion are formed as separate parts.

42. The battery cell according to claim 41, wherein the accommodating portion further comprises:
a flange portion connected to an end of the first wall far from the second wall, wherein at least part of the flange portion is stacked with the main body portion, and the flange portion abuts against a side of the main body portion facing the wall portion.

43. The battery cell according to claim 42, wherein along the thickness direction of the wall portion, an accommodating groove is disposed on a surface of the main body portion facing the wall portion, and the flange portion is accommodated within the accommodating groove.

44. The battery cell according to claim 43, wherein along the thickness direction of the wall portion, a surface of the flange portion facing the wall portion is flush with the surface of the main body portion facing the wall portion.

45. The battery cell according to any one of claims 1 to 44, wherein the battery cell further comprises:
a shielding member mounted on the wall portion, wherein along the thickness direction of the wall portion, the shielding member is located on a side of the one-way valve facing away from the electrode assembly, and the shielding member covers the one-way valve;
wherein the one-way valve has a gas outlet, the gas outlet is configured to discharge gas from inside the housing, an exhaust passage is formed between the shielding member and the wall portion or an exhaust passage is provided on the shielding member, and the exhaust passage connects the gas outlet and the exterior of the housing.

46. The battery cell according to claim 45, wherein along the thickness direction of the wall portion, the wall portion has a first surface facing away from the electrode assembly, wherein the first surface is provided with a mounting groove, a groove bottom surface of the mounting groove is provided with a mounting hole, at least part of the one-way valve is disposed within the mounting hole, and at least part of the shielding member is accommodated within the mounting groove.

47. The battery cell according to claim 46, wherein the exhaust passage comprises a third exhaust gap, wherein the third exhaust gap is formed between the shielding member and a groove side surface of the mounting groove, and the third exhaust gap is configured to connect the gas outlet and the exterior of the housing.

48. The battery cell according to claim 47, wherein an outer peripheral surface of the shielding member comprises a first corner surface and at least two first side surfaces, the first corner surface connecting two adjacent first side surfaces; and
the groove side surface of the mounting groove comprises a second corner surface and at least two second side surfaces, the second corner surface connecting two adjacent second side surfaces, wherein each of the second side surfaces is connected to one of the first side surfaces, and the third exhaust gap is formed between the second corner surface and the first corner surface.

49. The battery cell according to claim 48, wherein both the first corner surface and the second corner surface are arcuate surfaces, and a radius of the first corner surface is greater than a radius of the second corner surface.

50. The battery cell according to claim 48 or 49, wherein the first side surface is welded to the second side surface.

51. The battery cell according to any one of claims 48 to 50, wherein a cross-section of the shielding member perpendicular to the thickness direction of the wall portion is rectangular, the outer peripheral surface of the shielding member comprises four first side surfaces and four first corner surfaces, and the third exhaust gap is formed on at least one first corner surface.

52. The battery cell according to any one of claims 47 to 51, wherein the exhaust passage further comprises a fourth exhaust gap, wherein the fourth exhaust gap is formed between the shielding member and the groove bottom surface of the mounting groove, and the fourth exhaust gap connects the third exhaust gap and the gas outlet.

53. The battery cell according to claim 52, wherein along the thickness direction of the wall portion, the shielding member has a third surface facing the one-way valve, wherein the third surface laps over the groove bottom surface of the mounting groove, and the third surface is provided with a first recess, the fourth exhaust gap being formed between a groove bottom surface of the first recess and the groove bottom surface of the mounting groove.

54. The battery cell according to claim 53, wherein multiple third exhaust gaps are formed between the shielding member and the groove side surface of the mounting groove, the multiple third exhaust gaps are spaced apart along a circumferential direction of the shielding member, the third surface is provided with multiple first recesses, and each of the third exhaust gaps is connected to one of the first recesses.

55. The battery cell according to claim 54, wherein the third surface is further provided with a second recess, wherein the multiple first recesses are disposed around the second recess and are all in communication with the second recess, and the second recess is in communication with the gas outlet.

56. The battery cell according to claim 55, wherein along the thickness direction of the wall portion, the gas outlet is disposed at an end of the one-way valve facing away from the electrode assembly, the gas outlet is disposed facing the second recess, and a projection of the gas outlet is located within the second recess.

57. The battery cell according to any one of claims 46 to 56, wherein along the thickness direction of the wall portion, the shielding member does not extend beyond the first surface.

58. The battery cell according to claim 57, wherein the shielding member has a fourth surface facing away from the one-way valve, wherein the fourth surface is flush with the first surface.

59. The battery cell according to any one of claims 45 to 58, wherein the shielding member is fixedly connected to the wall portion.

60. The battery cell according to any one of claims 45 to 59, wherein the battery cell further comprises:
a protective patch disposed on a side of the wall portion facing away from the electrode assembly, wherein the protective patch is provided with an information collection hole extending through the protective patch, and a projection of the information collection hole in the thickness direction of the wall portion is located within the shielding member.

61. The battery cell according to claim 60, wherein an exhaust port communicating with the exterior of the housing is formed at an end of the exhaust passage, and the protective patch covers the exhaust port.

62. The battery cell according to claim 61, wherein an adhesion layer is provided on a side of the protective patch facing the wall portion, the adhesion layer adhering the protective patch and the wall portion;
wherein the adhesion layer is provided with a first clearance hole at a position corresponding to the information collection hole, and along the thickness direction of the wall portion, projections of both the information collection hole and the exhaust port are located within the first clearance hole.

63. The battery cell according to any one of claims 45 to 62, wherein the exhaust port communicating with the exterior of the housing is formed at an end of the exhaust passage; and
the battery cell further comprises a protective patch, wherein the protective patch is disposed on the side of the wall portion facing away from the electrode assembly, and the protective patch covers the exhaust port.

64. The battery cell according to any one of claims 1 to 63, wherein the wall portion is provided with a mounting hole, at least part of the one-way valve is mounted within the mounting hole, and the mounting hole is an electrolyte injection hole of the battery cell.

65. The battery cell according to any one of claims 1 to 64, wherein the housing comprises:
a shell, wherein an accommodating cavity having an opening is formed inside, and the accommodating cavity is configured to accommodate the electrode assembly; and
an end cap closing the opening;
wherein the end cap is the wall portion; or
the shell comprises the wall portion.

66. The battery cell according to any one of claims 1 to 65, wherein the battery cell further comprises:
a pressure relief mechanism disposed on the housing, wherein the pressure relief mechanism is configured to actuate and release internal pressure of the battery cell during thermal runaway of the battery cell, an actuation pressure of the pressure relief mechanism being greater than an opening pressure of the one-way valve.

67. The battery cell according to claim 66, wherein an exhaust speed of the one-way valve is less than an exhaust speed of the pressure relief mechanism.

68. The battery cell according to any one of claims 1 to 67, wherein along the thickness direction of the wall portion, the wall portion has a second surface facing the electrode assembly, the one-way valve protruding beyond the second surface; and
the battery cell further comprises an electrode terminal and a current collecting member, wherein the electrode terminal is mounted on the wall portion, the electrode terminal is configured to output or input electrical energy of the battery cell, the current collecting member connects the electrode terminal and the electrode assembly, and at least part of the current collecting member is disposed between the wall portion and the electrode assembly;
wherein the current collecting member is provided with a clearance groove, and the one-way valve extends into the clearance groove along the thickness direction of the wall portion.

69. A battery, comprising the battery cell according to any one of claims 1 to 68.

70. An electric apparatus, comprising the battery cell according to any one of claims 1 to 68, wherein the battery cell is configured to provide electrical energy.
